(19) Europäisches Patentamt
European Patent Office
Office européen des brevets

(11) **EP 1 933 509 A1**

(12) **EUROPEAN PATENT APPLICATION**
published in accordance with Art. 153(4) EPC

(43) Date of publication:
**18.06.2008 Bulletin 2008/25**

(51) Int Cl.:
*H04L 12/56* (2006.01)  *H04L 1/16* (2006.01)
*H04L 29/08* (2006.01)

(21) Application number: **06811009.7**

(22) Date of filing: **02.10.2006**

(86) International application number:
**PCT/JP2006/319661**

(87) International publication number:
**WO 2007/043373 (19.04.2007 Gazette 2007/16)**

(84) Designated Contracting States:
**DE FR GB**

(30) Priority: **03.10.2005 JP 2005290576**
**20.07.2006 JP 2006197892**

(71) Applicant: **Matsushita Electric Industrial Co., Ltd.**
**Kadoma-shi**
**Osaka 571-8501 (JP)**

(72) Inventors:
• **KURATA, Hiroshi**
**Matsushita Electric Industrial Co.,Ltd**
**Chuo-ku, Osaka-shi**
**Osaka, 540-6207 (JP)**
• **OKAZAKI, Yoshinori**
**Matsushita Electric Industrial Co.,Ltd**
**Chuo-ku, Osaka-shi**
**Osaka, 540-6207 (JP)**

• **TSUJI, Atsuhiro**
**Matsushita Electric Industrial Co.,Ltd**
**Chuo-ku, Osaka-shi**
**Osaka, 540-6207 (JP)**
• **TAKAGAKI, Keiichi**
**Matsushita Electric Industrial Co.,Ltd**
**Chuo-ku, Osaka-shi**
**Osaka, 540-6207 (JP)**
• **MATSUSHITA, Yosuke**
**Matsushita Electric Industrial Co.,Ltd**
**Chuo-ku, Osaka-shi**
**Osaka, 540-6207 (JP)**

(74) Representative: **Pautex Schneider, Nicole**
**Véronique et al**
**Novagraaf International SA**
**25, avenue du Pailly**
**1220 Les Avanchets - Geneva (CH)**

(54) **COMMUNICATION APPARATUS**

(57) To provide a communication apparatus which is capable of voluntarily controlling, according to its own reception capability, data transmission traffic, while reducing the burden for the control. The communication apparatus includes: a communication unit (35) which receives data; an ACK generating unit (45) which generates an ACK packet and transmit the ACK packet to a transmitting side apparatus (38), the ACK packet indicating a response to the transmitting side apparatus (38), the response corresponding to the data received by the communication unit (35); and a window updating notification generating unit (46) which generates a window updating notifying packet and transmit the window updating notifying packet to the transmitting side apparatus (38) irrespective of a result of the data reception by the communication unit (35), the window updating notifying packet requesting the transmitting side apparatus (38) to transmit data.

FIG. 9

**Description**

**Technical Field**

The present invention relates to communication apparatuses, and particularly to a communication apparatus which transfers data using Transmission Control Protocol (hereinafter referred to as TCP) via an Internet Protocol (hereinafter referred to as IP) network.

**Background Art**

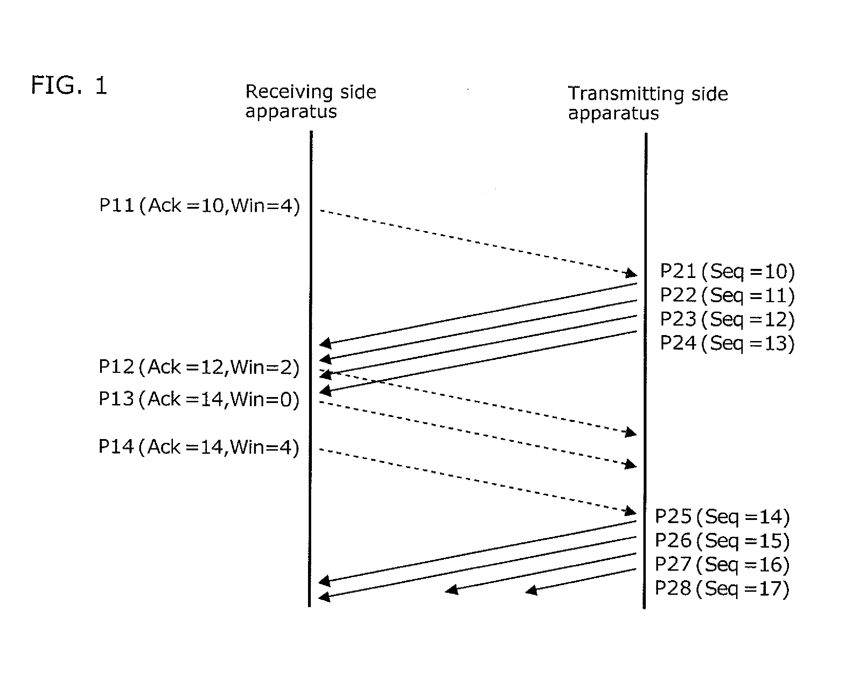

FIG. 1 is a sequence diagram illustrating a flow of data transfer using TCP.

In data transfer using TCP, data is transmitted and received in units called packets. Further, the size of a single packet is determined based on Maximum Segment Size (hereinafter referred to as MSS) information which has been exchanged in advance. A packet, transmitted from a transmitting side apparatus, reaching a receiving side apparatus is checked through the receiving side apparatus transmitting a positive Acknowledgement Packet (hereinafter referred to as ACK or ACK packet) and the transmitting side apparatus receiving it. Note that the positive Acknowledgement Packet is also referred to as an Acknowledgement Packet. In the example of FIG. 1, solid lines represent data packets, and broken lines represent ACK packets. Moreover, each data packet is illustrated with the notation P21 (Seq = 10), for example, indicating that a packet having a sequence number 10 is transmitted. Furthermore, each ACK packet is illustrated with the notation P11 (Ack = 10, Win = 4), for example, indicating it is a packet having an ACK number 10 and a window size 4. Note that in order to simplify the description, data packet size is assumed to be 1.

Next, a description of window size shall be provided. Window size represents the amount of data which the transmitting side apparatus can continuously transmit to the receiving side apparatus without receiving an ACK packet. In general, the window size indicates the upper limit of the maximum amount of data (hereinafter referred to as RWIN_MAX) that the receiving side apparatus can hold, and is increased and decreased by the transmitting side apparatus according to network congestion and the like. Ideally, the window size is stable at the value of RWIN_MAX with no network congestion.

In the example of FIG. 1, the receiving side apparatus notifies, with the ACK packet P11, that the ACK number is 10 and the window size is 4. Accordingly, the transmitting side apparatus can transmit data packets P21, P22, P23 and P24 respectively having sequence numbers 10, 11, 12 and 13 without waiting for ACK packets corresponding to the four data packets.

The receiving side apparatus has a receiving buffer for temporarily holding the data that the receiving side apparatus has received, and can generally hold data corresponding to RWIN_MAX. Further, free space of the receiving buffer reduces when a packet is received from the transmitting side apparatus, and increases when the received data is passed to an application program (hereinafter simply referred to as application). Furthermore, the receiving side apparatus has a function that in the case of an increase in the free space of the receiving buffer, it transmits a packet called a window updating notifying packet so as to notify the transmitting side apparatus that the free space of the receiving buffer has increased.

In the example of FIG. 1, after the data packets P21, P22, P23 and P24 are transmitted, the window size decreases and eventually reaches 0 in the ACK packets P12 and P13. To be more specific, this is a situation where the received data packets P21, P22, P23 and P24 are retained in the receiving buffer, and the received data is not yet passed to an application. After that, when the receiving side apparatus passes the received data to the application, it transmits a window updating notifying packet P14 so as to notify the transmitting side apparatus that the window size is now 4. When the transmitting side apparatus receives the window updating notifying packet P14, it restarts transmitting subsequent data packets P25, P26, P27 and P28.

Further, a time difference between a time when the receiving side apparatus transmits the ACK packet P11 and a time when the data packet P21 transmitted from the transmitting side apparatus is received is called Round Trip Time (hereinafter referred to as RTT). In the case of transferring data via a network with a long RTT, the transmitting side apparatus, after transmitting data corresponding to the window size, stops the transmission until ACK or the window update notification from the receiving side apparatus arrives. As a result, efficient data transfer is hindered. Therefore, it is necessary to increase RWIN_MAX in order to enable efficient data transfer.

In addition, TCP has a function described in Non-Patent Reference 1, that is, a fast retransmission function.

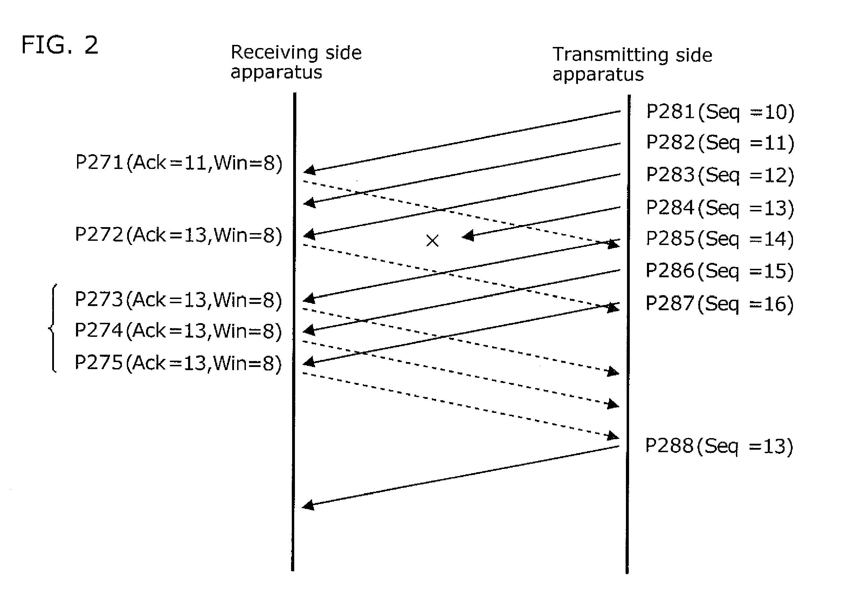

FIG. 2 is a sequence diagram illustrating packet transmission and reception concerning the fast retransmission function.

As illustrated in FIG. 2, suppose a packet loss of a data packet P284 among the data packets transmitted from the transmitting side apparatus occurs and the data packet P284 fails to reach the receiving side apparatus. At this time, by receiving the data packets P285, P286 and P287 which are data packets following the data packet P284 on which the packet loss has occurred, the receiving side apparatus can recognize that the order of arrival has been changed because of a loss of the data packet P284 or for some other reason. Therefore, at the point in time when the data packet P285 is received, the receiving side apparatus immediately transmits an ACK packet P273 so as to notify the transmitting side apparatus that the data packet P284 has not arrived. This ACK packet is called immediate acknowledgement. In some cases, the ACK packet P273 is referred to as duplicate ACK since it is the same ACK packet as the previously transmitted ACK packet P272.Hereinafter, it is described as duplicate ACK. From there onward, the receiving side apparatus transmits duplicate ACK packets P274 and P275 which are packets similar to the ACK packet P272, until the data packet P284 is received.

Next, the transmitting side apparatus which has received the duplicate ACK packets P273, P274 and P275 detects that the packet indicated by the duplicate ACK packets is lost, because it has received the same ACK packets three times in a row, and thus immediately retransmits a data packet P288. This immediate retransmission is called Fast Retransmission.

The fast retransmission is very fast compared to retransmission with after-mentioned time-out, and enables quick recovery from a packet loss.

However, with home appliances having a network function, so-called "network appliances", due to their low receiving capabilities, there is a possibility that an increase in RWIN_MAX results in arrival of packets beyond the reception performance of the network appliances and thus results in deterioration of data transfer efficiency.

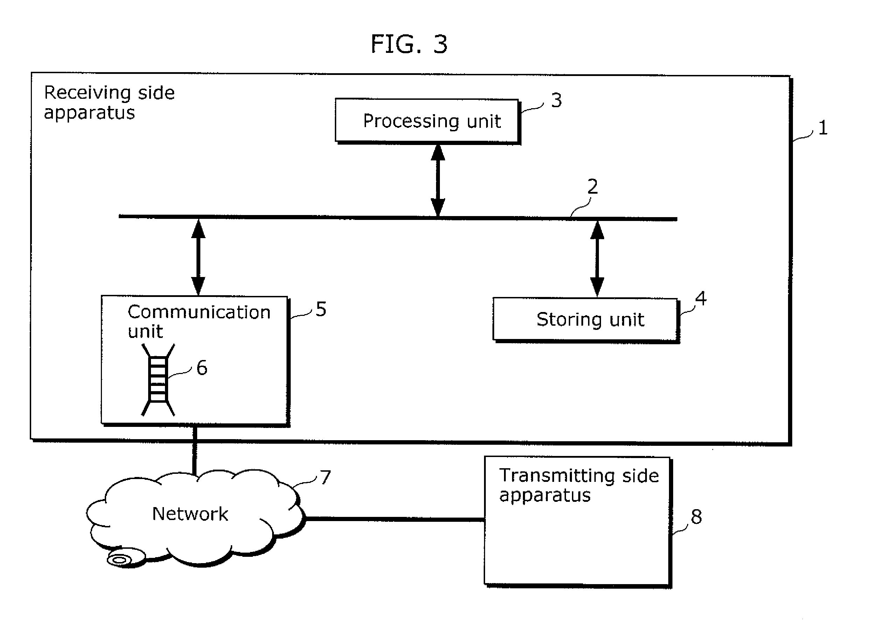

FIG. 3 is a diagram illustrating an example of a network appliance structure.

A network appliance (a receiving side apparatus in the figure) 1 is an apparatus connected to a network 7 via a wired or wireless connection and has a communication function. It includes an Ethernet ® interface, for example. The network 7 is a network including a wired or wireless connection, an example of which includes a public network such as the Internet.

The receiving side apparatus 1 includes a system bus 2, a processing unit 3, a storing unit 4, and a communication unit 5.

The communication unit 5 is hardware connected to the system bus 2. The communication unit 5 has a function of transmitting a packet stored in the storing unit 4 and a function of receiving a packet from the network 7. In addition, the communication unit 5 has a storage region (hereinafter referred to as FIFO) 6 for temporarily holding the packet received from the network 7.

The processing unit 3 is hardware connected to the system bus 2. The processing unit 3 constructs the data stored in the storing unit 4 as a packet, and analyzes the received packet, for example. It should be noted that in some cases the processing unit 3 has a function of transferring a transmission packet from the storing unit 4 to the communication unit 5, and transferring a packet stored in the FIFO 6 of the communication unit 5 to the storing unit 4.

The storing unit 4 has a function of holding a packet to be transmitted and received and its data.

Furthermore, the receiving side apparatus 1 performs the following processing when a packet is received.

(1) Receive a packet transmitted from a transmitting side apparatus 8 and store it in the FIFO 6.
(2) Transfer the packet stored in the FIFO 6 to the storing unit 4 via the system bus 2.
(3) Analyze, by the processing unit 3, the content of the packet transferred to the storing unit 4.
(4) Pass the data obtained from the analysis of the received packet to an application.

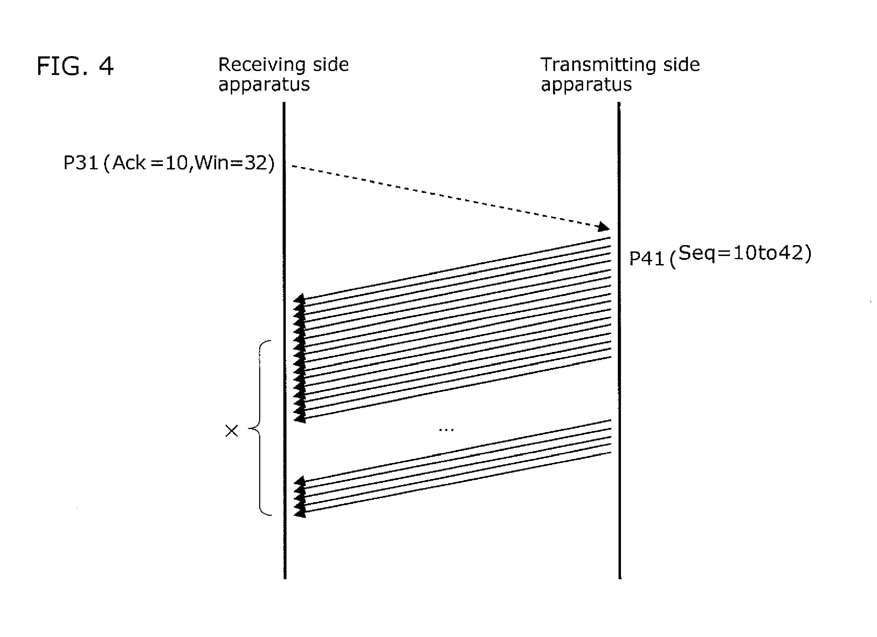

FIG. 4 is a sequence diagram illustrating an example of data transmission in the case where data transfer efficiency of a network appliance deteriorates. Note that FIG. 4 illustrates a sequence in the case of data transfer performed using TCP between the receiving side apparatus 1 and the transmitting side apparatus 8 of FIG. 3. Further, the receiving side apparatus 1 is a network appliance and its receiving performance is low, whereas the transmission performance of the transmitting side apparatus 8 is high, like a Personal Computer (PC).

Here, description is provided with the following examples:

RWIN_MAX: 32 (assuming KB as unit and no network congestion) Capacity of the FIFO 6: 4 (assuming KB as unit)
Transfer capability of the system bus 2: 20 Mbps
Transfer capability of the network 7: 100 Mbps.

The receiving side apparatus 1 transmits to the transmitting side apparatus 8 an ACK packet P31 in which the window size is set to RWIN_MAX (32 KB). When the transmitting side apparatus 8 receives the ACK packet P31, it transmits to the network 7 data packets P41 corresponding to the RWIN_MAX (32 KB). As a result, the data packet corresponding to the RWIN_MAX (32 KB) arrives at the communication unit 5 of the receiving side apparatus 1 at once at the transfer capability of 100 Mbps. However, since the capacity of the FIFO 6 of the receiving side apparatus 1 is only 4 KB, it is impossible to store the data corresponding to the RWIN_MAX (32 KB).

Consequently, upon the arrival of the data packet, it is necessary to promptly transfer the data packet from the FIFO 6 to the storing unit 4. Here, in the case where the capability of transferring the received packet from the FIFO 6 to the storing unit 4 is greater compared to the interval at which the data packets P41 arrive, it is possible, before the FIFO 6 overflows, to transfer the received packet to the storing unit 4, and to receive all the data of the data packets P41 transmitted from the transmitting side apparatus. It should be noted that the maximum transfer capability of a bus corresponding to the system bus 2 in a PC is 1064 Mbps (133 MB/s) in the case of a PCI bus, for example, which is sufficiently fast compared to the transmission capability of the network 7.

However, in the case where the receiving side apparatus 1 is a network appliance and the like, its capability of transfer from the FIFO 6 to the storing unit 4 is often inferior to the transfer capability of the network 7. The present example shall be described assuming that there is a quintuple difference between the speed of the packet arriving at the communication unit 5, that is, the transfer capability of the network 7 and the capability of transfer from the FIFO 6 to the storing unit 4.

When the first data packet P41-1 is received, the receiving side apparatus 1 transfers data of the received packet from the FIFO 6 to the storing unit 4. Assuming that the time required for the data transfer is 5T, the interval at which the data packet arrives from the network 7 is T, since the difference in the transfer capabilities is quintuple. This means that during 5T, five data packets arrive at the receiving side apparatus 1. However, the capacity of the FIFO 6 is 4 KB. Therefore, a free space shortage occurs when the fifth data packet arrives, which results in the data packet to overflow the FIFO 6. In this manner, packet loss occurs also on the subsequent data, and thus useless retransmission follows. After all, the excessive increase of the RWIN_MAX causes deterioration of the transfer efficiency because of frequent occurrence of the useless retransmission. Hence, with powerless communication apparatuses such as network appliances, the upper limit of the RWIN_MAX is generally set in accordance with the capacity of the FIFO 6.

When the RWIN_MAX is set to a value which matches the capacity of the FIFO 6 (4 KB) as described, in the environment where the RTT is 10 milliseconds, again, a high packet transfer performance cannot be obtained as seen from 4 KB/10 milliseconds = 3.2 Mbps, even though the transfer capability of an internal bus 1 is 20 Mbps. It should be noted that when it is assumed that the capacity of the FIFO 6 accommodates the RWIN_MAX (32 KB), the RWIN_MAX can be notified as 32 KB, which leads to 32 KB/10 milliseconds = 25.6 Mbps, and it is possible to obtain the transfer performance of 20 Mbps even when the performance of the internal bus places a restriction.

Moreover, with network appliances, the reception capability significantly deteriorates in some cases depending on the set value of the RWIN_MAX, due to their low processing capability.

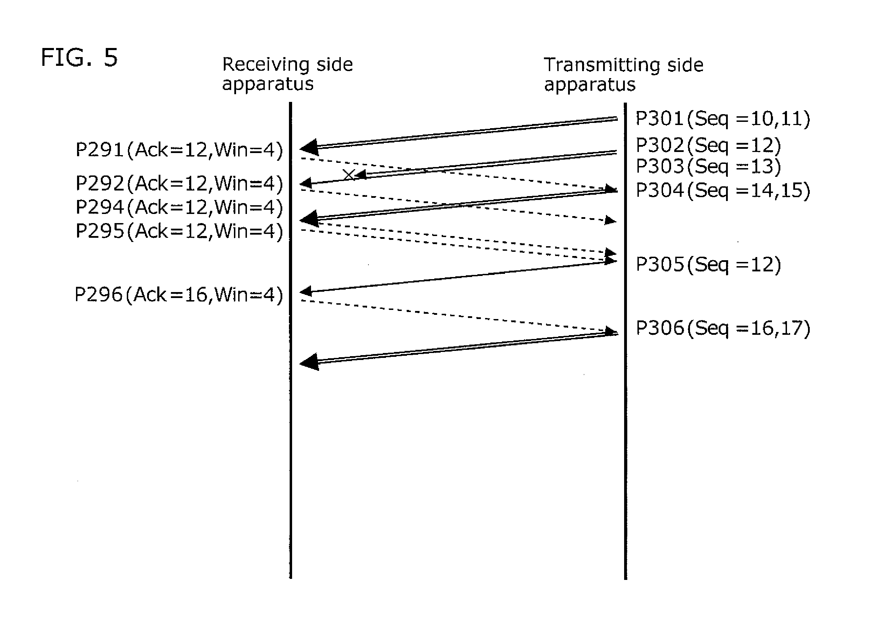

FIG. 5 is a sequence diagram illustrating reception processing performed by a receiving side apparatus having a high processing capability (a PC, for example). Note that a description shall be provided of an example case where the RWIN_MAX is assumed to be 4.

First, as illustrated in FIG. 5, suppose a data packet P302 among data packets P301, P302 and P303 transmitted from the transmitting side apparatus has failed to reach the receiving side apparatus due to a packet loss. At this time, having received the data packets P301, the receiving side apparatus transmits an ACK packet P291. Having received the ACK packet P291, the transmitting side apparatus transmits subsequent data packets P304, since the sequence number has reached 11 and the window size is 4. In contrast, by receiving the data packet P303 having the sequence number 13 before the arrival of the data packet P302 having the sequence number 12, the receiving side apparatus detects that a packet loss of the data packet P302 has occurred or the order has changed, and transmits an immediate acknowledgement P292 immediately after receiving the data packet P303. In addition, having received the data packets P304, the receiving side apparatus transmits immediate acknowledgement packets P294 and P295.

Next, having received three immediate acknowledgements, the transmitting side apparatus retransmits a data packet P305 having the sequence number 12, since the fast retransmission function comes in operation. As described, when a packet loss occurs, the fast retransmission function allows recovery of the communication.

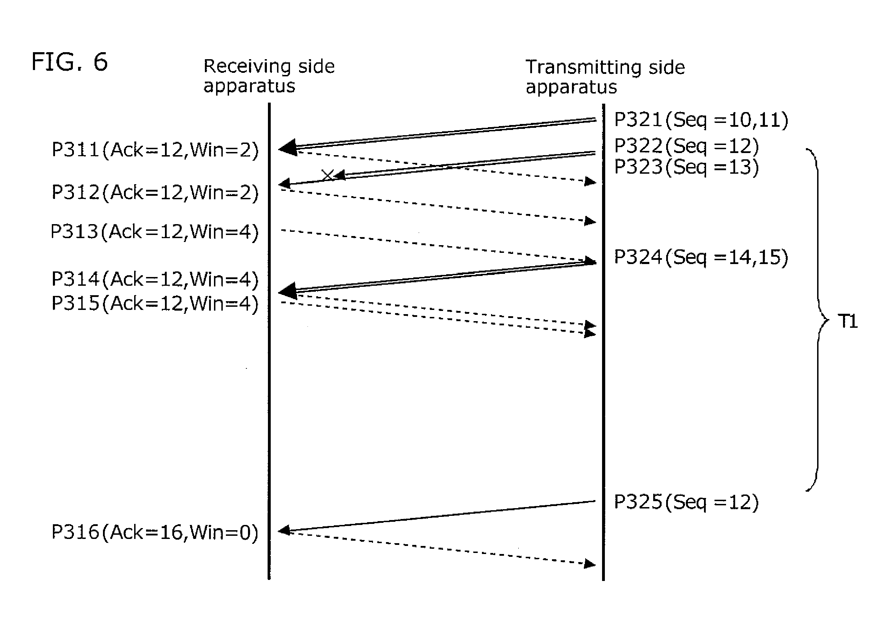

FIG. 6 is a sequence diagram illustrating reception processing performed by a receiving side apparatus having a low processing capability (a network appliance, for example). Note that a description shall be provided of an example case where the RWIN_MAX is assumed to be 4.

First, as illustrated in FIG. 6, suppose a data packet P322 among data packets P321, P322 and P323 transmitted from the transmitting side apparatus has failed to reach the receiving side apparatus due to a packet loss. Especially in the case of the receiving side apparatus having a low reception capability, data overflows the FIFO 6 of the receiving side apparatus, which results in a packet loss even when the network is not congested. At this time, having received the data packets P321, the receiving side apparatus transmits an ACK packet P311. Here, the ACK packet P311 transmitted by the receiving side apparatus indicates the window size of 2, since the receiving side apparatus has not completed the reception processing on the data packets P321 received. For this reason, the transmitting side apparatus which has received the ACK packet P311 does not transmit any data packets. After that, by receiving the data packet P323 having the sequence number 13 before the arrival of the data packet P322 having the sequence number 12, the receiving side apparatus detects that a packet loss of the data packet P322 has occurred or the order has changed, and transmits an immediate acknowledgement P312 immediately after receiving the data packet P323. At this time also, the window size is 2, since the reception processing has not been completed. Subsequently, having finished the reception processing, the receiving side apparatus transmits a window updating notifying packet P313 indicating the window size 4. Having received the window updating notifying packet P313, the transmitting side apparatus transmits data packets P324 having the sequence numbers 14 and 15, since the sequence number is 11 and the window size is 4. Further, having received the data packets P324, the receiving side apparatus transmits immediate acknowledgements P314 and P315. Here, the receiving side apparatus has transmitted two immediate acknowledgements in a row. Therefore, the fast retransmission function of the transmitting side apparatus does not come in operation. Consequently, because an ACK packet having the sequence number 12 is not received, after a lapse of a time-out time T1, the transmitting side apparatus performs retransmission by time-out (P325). As described, when the processing capability is low, the receiving side apparatus cannot make successive immediate acknowledgements and thus the fast retransmission function does not come in operation, which results in low-speed retransmission waiting for a time-out. As a consequence, the transfer rate does not increase at all even when less packet loss occurs.

Therefore, in order to maximize the reception capability of network appliances even in the environment where the RTT is great while using the existing capacity of the FIFO 6 and notifying that the RWIN_MAX has increased without causing a packet loss, it is necessary that the receiving side apparatus controls the transmission rate at which the transmitting side apparatus transmits data. Moreover, even if a packet loss occurs, it is necessary that it does not cause unnecessary decrease in the rate.

Patent Reference 1 discloses a method for controlling, by a receiving side apparatus, a data transmission rate of a transmitting side apparatus. According to the method of Patent Reference 1, having generated an ACK in response to the received data, the receiving side apparatus does not transmit the ACK immediately, but once holds the ACK packet in an ACK transmission queue. Then, in accordance with the following (1) and (2), the data transmission rate is controlled by transmitting the ACK at regular intervals.

(1) When the number of ACK packets remaining in the ACK transmission queue is less than a predetermined number, the ACK to be transmitted is divided.
(2) Every time an ACK is transmitted, window size is increased by 1 MSS.

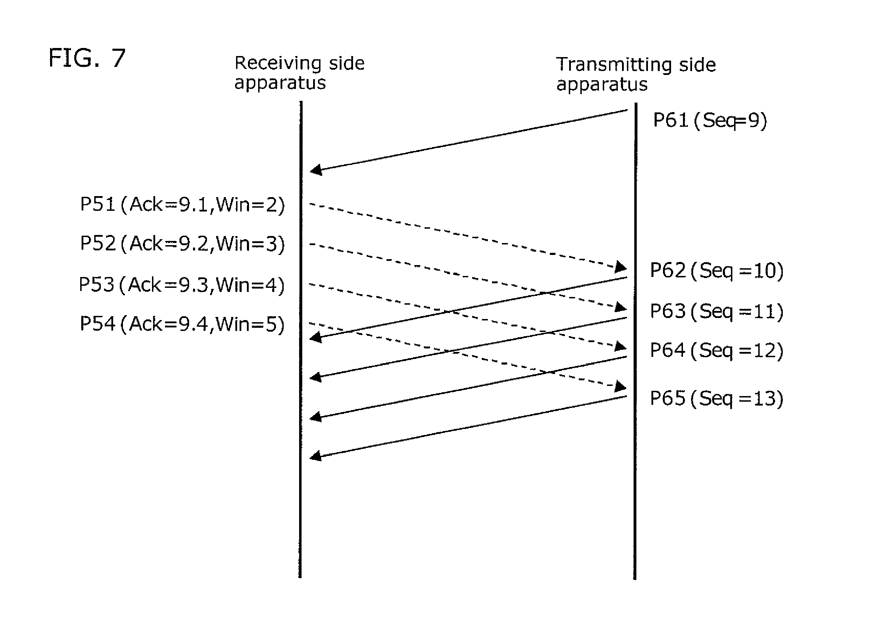

FIG. 7 is a sequence diagram illustrating transmissions of data packets and ACK packets according to Patent Reference 1.

Having received a data packet P61 from the transmitting side apparatus, the receiving side apparatus generates an ACK packet to transmit to the transmitting side apparatus, and inserts it into the ACK transmission queue. Note that the ACK packet generated here is an ACK packet having the ACK number 10. After that, the receiving side apparatus transmits an ACK packet P51 at a predetermined time determined by the regular intervals. When ACK packets are transmitted, ACK division is performed on the ACK packet P51 because the number of ACK packets in the ACK transmission queue did not reach the predetermined number (assumed to be 2). As a result, the ACK number is 9.1 instead of 10. Further, the window size is 2, increased by 1 MSS.

Next, having received the packet indicating the window size 2, the transmitting side apparatus which has received the ACK packet P51 now can transmit data packets having sequence numbers 9.1 to 11.1 and thus transmits a data packet P62 having the sequence number 10 which is subsequent data that has not yet been transmitted.

In addition, after transmitting the ACK packet P51, the receiving side apparatus transmits an ACK packet P52 at a predetermine time determined by the regular intervals. When ACK packets are transmitted, ACK division is also performed on the ACK packet P52 because the number of ACK packets in the ACK transmission queue did not reach the predetermined number (assumed to be 2). As a result, the ACK number is 9.2 instead of 10, and the window size is 3, increased by 1 MSS. Similar to when receiving the ACK packet P51, the receiving side apparatus which has received the ACK packet P52 now can transmit data packets having sequence numbers 9.2 to 12.2 and thus transmits a data packet P63 having the sequence number 11 which is subsequent data that has not yet been transmitted.

From there onward, while increasing the window size by 1 MSS at a time in a similar manner, ACK packets P53 and P54 are transmitted at the regular intervals.

As described, by performing the ACK division, increasing the window size by 1 MSS at a time, and transmitting ACK packets at the regular intervals, the intervals of data packets that are transmitted by the transmitting side apparatus are controlled.
Patent Reference 1: Japanese Patent No. 3617649
Non-Patent Reference 1: Standard Specification "RFC 2001", IETF, [Retrieved from the Internet on July 21, 2006] URL: http://www.ietf.org/rfc/rfc2001.txt

## Disclosure of Invention

## Problems that Invention is to Solve

The method of Patent Reference 1 enables the receiving side apparatus to control the transmission rate through control of the transmission rate of the transmitting side apparatus by once holding in the queue the ACK corresponding to the received data before being transmitted, performing the ACK division at regular intervals, and increasing the window size by 1 MSS at a time. However, with the method of Patent Reference 1, there are problems as follows:

(1) The problem that the control cannot commence without receiving data.

(2) The problem of having a processing load due to ACK division.

(3) The problem of having a load due to the need of precise control of ACK transmission intervals for increasing the window size by 1 MSS.

(4) The problem of not addressing the occurrence of packet loss.

For instance, assuming that RTT is 10 milliseconds, ACK is transmitted four times during one RTT (10 milliseconds) as illustrated in FIG. 7. This means that the ACK transmission interval is 2.5 milliseconds. However, with the transmission of ACK at the 2.5 millisecond interval, the maximum RWIN_MAX in a RTT does not increase beyond 5. Suppose, in the case where it is desired to increase the RWIN_MAX up to 32, the ACK transmission interval needs to be 10 milliseconds/ (32-1) = 0.32 millisecond, which results in an increase of the processing load. For example, with a network appliance having a CPU operation clock of 133 MHz, approximately 0.3 millisecond is required for the processing of receiving a data packet of 1 MSS, and approximately 0.2 millisecond is required for the processing of transmitting an ACK packet. As a result, in such a case, it is impossible to perform the ACK transmission at the intervals of 0.32 millisecond.

Therefore, the present invention has been conceived in view of such problems, and a first object thereof is to provide a communication apparatus which is capable of voluntarily controlling, according to its own reception capability, data transmission traffic of a transmitting side apparatus which transmits data, while reducing the burden for the control. Additionally, a second object is to provide a communication apparatus which is capable of prompting the transmitting apparatus to immediately retransmit a lost packet even in the case of a packet loss.

**Means to Solve the Problems**

In order to achieve the above described objects, the communication apparatus according to the present invention is a communication apparatus which receives data transmitted from an other communication apparatus, the communication apparatus including: a receiving unit which receives the data; a first packet generating unit which generates an acknowledgement packet and transmits the acknowledgement packet to the other communication apparatus, the acknowledgement packet indicating a response to the other communication apparatus, the response corresponding to the data received by the receiving unit; and a second packet generating unit which generates a data request packet and transmits the data request packet to the other communication apparatus irrespective of a result of the data reception by the receiving unit, the data request packet requesting the other communication apparatus to transmit data. For example, the second packet generating unit generates the data request packet in such a way that a receivable data size is included in the data request packet as a reception size.

With this, it is possible to voluntarily control the amount of data transmitted from the other communication apparatus at any given timing, since the data request packet which is a window updating notifying packet for requesting the other communication apparatus to transmit data is transmitted to the other communication apparatus regardless of the result of the data reception from the other communication apparatus. For example, control can be performed without waiting to receive data from the other communication apparatus. Furthermore, since ACK division and transmission of many ACKs at short transmission intervals are unnecessary, it is possible to reduce the burden for the control. In addition, since the data request packet includes the reception size, it is possible to notify the other communication apparatus of the size of data which can be received, and as a result, control of transmission traffic in accordance with the reception capability can be implemented.

Further, the communication apparatus may further include a size computing unit which updates the reception size by adding an updating amount to the reception size, wherein every time an updating time period elapses, the second packet generating unit may (i) cause the size computing unit to update the reception size, (ii) generate the data request packet which includes the updated reception size, and (iii) transmit the data request packet to the other communication apparatus.

With this, every time an updating time period elapses, that is, at predetermined updating intervals, the reception size which is the window size increases by an updating amount at a time and the data request packet which is the window updating notifying packet is transmitted, and thus it is possible control the traffic pattern of the data transmitted by the other communication apparatus and data can be received in accordance with the processing performed by the communication apparatus. Moreover, since the window size increases by the updating amount at a time, the amount of each data continuously transmitted from the other communication apparatus can be set to the updating amount. As a result, the communication apparatus which receives the data becomes capable of reducing the capacity of a memory, which temporarily stores the received data before it is passed to an application program, to the updating amount.

Moreover, the communication apparatus may further include an update determining unit which determines the updating time period and the updating amount based on a communication capability of the communication apparatus.

With this, it is possible to match the data transmission pattern of the other communication apparatus to the traffic pattern which is in accordance with the communication capability of the communication apparatus.

Further, the receiving unit may be structured as a physical layer communication device having a memory for temporarily holding the received data, and the update determining unit may determine the updating time period and the updating amount based on a capacity of the memory and a transfer capability for transferring the data held in the memory.

With this, it is possible to match the data transmission pattern of the other communication apparatus to the traffic pattern appropriate to the capability of a physical layer communication device, and thus packet loss in the physical layer communication device can be prevented.

Furthermore, the communication apparatus may further include a processing unit which processes data received by the receiving unit, and the update determining unit may further determine the updating time period based on the processing capability of the processing unit.

With this, it is possible to match the data transmission pattern of the other communication apparatus to the traffic pattern appropriate to the communication capability of the communication apparatus, and thus the processing amount set apart for the communication and the data processing of the communication apparatus can be controlled.

Furthermore, the update determining unit may further determine the updating time period based on a bit rate necessary for an application program that operates in the communication apparatus.

With this, it is possible to match the data transmission pattern of the other communication apparatus to the traffic pattern appropriate to the bit rate needed for the application program of the communication apparatus, and thus the occurrence of useless traffic that is beyond what is requested by the application program can be prevented.

In addition, the second packet generating unit may suspend the generation of the data request packet, when the receiving unit receives the data while the second packet generating unit is generating the data request packet which is performed every time the updating time period elapses.

With this, since the transmission of the data request packet, that is, the window updating notifying packet, is suspended, in other words, the window updating notifying function is ceased, it is possible to prevent the transmission rate at which the other communication apparatus transmits data from infinitely rising as the data request packets are continuously transmitted.

Further, the second packet generating unit may resume the generation of the data request packet when the receiving unit receives the data while the generation of the data request packet is suspended, the generation of the data request packet being performed every time the updating time period elapses.

With this, when the other communication apparatus suspends the data transmission and resumes it, it is possible to again control the traffic pattern in accordance with the communication capability of the communication apparatus.

Also, the size computing unit may further obtain the total amount of data requested by the application program that operates in the communication apparatus, and compute a response size which reduces as the amount of data received by the receiving unit draws near to the total amount, and the first packet generating unit may generate the acknowledgement packet which indicates, as the response, that the receivable data size is the response size.

With this, in accordance with the end of receiving a series of data, the response size (window size) of the acknowledgement packet, that is, the ACK packet, which corresponds to the data decreases, and therefore when the other communication apparatus resumes data transmission, the amount of data transmitted from the other communication apparatus at the time of the resumption can be restricted to the decreased response size, which allows resumption of data transmission in accordance with the reception performance of the communication apparatus.

Furthermore, the first packet generating unit may generate the acknowledgement packet which indicates the receivable data size as a response size, and when data which has been transmitted earlier and then lost is retransmitted and is received by the receiving unit while the generation of the data request packet, performed every time the updating time period elapses, is suspended: the first packet generating unit may generate the acknowledgement packet which indicates a response size smaller than the response size of a previously generated acknowledgement packet; and the second packet generating unit may resume the generation of the data request packet which is performed every time the updating time period elapses.

With this, it is possible to control the rate of data transmission even when a packet loss occurs.

The communication apparatus may further include a delaying unit which delays a timing at which the first packet generating unit transmits the acknowledgement packet, while the generation of the data request packet is suspended, the generation of the data request packet being performed every time the updating time period elapses.

With this, since the timing of transmitting the acknowledgement packet delays, it is possible to continuously maintain the controlled traffic pattern even when there are changes in the intervals at which each of data successively transmitted from the other transmitting apparatus is received. For example, the reception of plural data transmitted from the other communication apparatus and the transmission of plural acknowledgement packets (ACK packets) from the communication apparatus corresponding to the plural data are both performed every time an updating time period elapses, that is, at predetermined intervals. At times like this, when data transmitted from the other communication apparatus is received at intervals shorter than the predetermined intervals, the communication apparatus that has received the data does not immediately transmit an acknowledgement packet corresponding to the data but delays the transmission of the acknowledgement packet. In other words, the communication apparatus transmits the acknowledgement packet after the updating time period elapses since the previous transmission of the acknowledgement packet.

Moreover, the receiving unit may be structured as a physical layer communication device having a memory for temporarily holding the received data, the communication apparatus may further include a transmission interval determining unit which determines a transmission interval at which the acknowledgement packet is transmitted, based on a capacity of the memory and a transfer capability for transferring the data held in the memory, and the delaying unit may delay the timing so that a plurality of acknowledgement packets including the acknowledgement packet are transmitted at the transmission interval determined by the transmission interval determining unit.

With this, since the acknowledgement packet is transmitted at transmission intervals which are based on the capacity of the memory and the transferring capability, it is possible to match the data transmission pattern of the other communication apparatus to the traffic pattern appropriate to the capability of the physical layer communication device, and therefore it is possible to prevent packet loss in the physical layer communication device.

Further, the communication apparatus may further include a transmission interval determining unit which determines a transmission interval at which the acknowledgment packet is transmitted, based on the processing capability of the processing unit, and the delaying unit may delay the timing so that plural acknowledgement packets are transmitted at the transmission interval determined by the transmission interval determining unit.

With this, it is possible to match the data transmission pattern of the other communication apparatus to the traffic pattern appropriate to the data processing capability of the communication apparatus, and thus the processing amount set apart for the communication and the data processing of the communication apparatus can be controlled.

In addition, the communication apparatus may further include a transmission interval determining unit which determines a transmission interval at which the acknowledgement packet is transmitted, based on a bit rate necessary for an application program that operates in the communication apparatus, wherein the delaying unit may delay the timing so that a plurality of acknowledgement packets including the acknowledgement packet are transmitted at the transmission interval determined by the transmission interval determining unit.

With this, it is possible to match the data transmission pattern of the other communication apparatus to the traffic pattern appropriate to the bit rate requested by the application program of the communication apparatus, and thus the occurrence of useless traffic that is beyond what is requested by the application program can be prevented.

Furthermore, the communication apparatus may further include the transmission interval determining unit which determines a transmission interval at which the acknowledgement packet is transmitted, based on a request for a change in the reception rate, and the delaying unit may delay the timing so that the plural acknowledgement packets are transmitted at the transmission interval determined by the transmission interval determining unit.

With this, in the case where there has been a request for a change in the reception rate, the acknowledgement packet is transmitted at transmission intervals which are based on the request, and as a result, it is possible to match the data transmission pattern of the other communication apparatus to the traffic pattern appropriate to the request.

Further, the first packet generating unit may generate the acknowledgement packet which indicates the receivable data size as the response size, and the delaying unit may change the response size indicated in the acknowledgement packet generated by the first packet generating unit, based on the request for the change in the reception rate.

With this, in the case where there has been a request for a change of the reception rate, the acknowledgement packet (ACK packet) indicating a response size (window size) based on the request is transmitted, and as a result, it is possible to match the data transmission pattern of the other communication apparatus to the traffic pattern appropriate to the request.

Furthermore, the second packet generating unit may start the generation of the data request packet when an amount of data received by the receiving unit exceeds a threshold, the generation of the data request packet being performed every time the updating time period elapses.

With this, even when the other communication apparatus gradually raises the data transmission rate, it is possible to match the data transmission pattern of the other communication apparatus to the traffic pattern which is in accordance with the communication capability of the communication apparatus.

Moreover, the second packet generating unit may generate the data request packet which includes a head number of data requested, and in the case where the amount of data received by the receiving unit exceeds a threshold, it may start the generation of the data request packet, which is performed every time the updating time period elapses, in such a manner that the head number of the data request packet sequentially transmitted increases.

With this, when the amount of data received exceeds the threshold, the data request packet, that is, the window updating notifying packet, is transmitted every time the updating time period elapses. Then, the reception size, that is, the window size, and the head number, that is, the ACK number, of each data request packet become larger than the reception size and the head number of the previous data request packet. As a result, it is possible to reliably match the data transmission pattern of the other communication apparatus to the traffic pattern which is in accordance with the communication capability of the communication apparatus.

Moreover, the communication apparatus may further include a detecting unit which detects a loss of the data transmitted by the other communication apparatus, wherein the first packet generating unit may: generate the acknowledgement packet which indicates the receivable data size as a response size; and generate the acknowledgement packet which indicates a response size smaller than the response size of a previously generated acknowledgement packet, when the detecting unit detects the loss. For example, the first packet generating unit generates the acknowledgement packet which indicates, as the smaller response size, a difference between the response size of a previously generated acknowledgement packet and an amount of lost data.

With this, when a packet loss occurs, the response size (window size) of the acknowledgement packet (ACK packet) reduces, and thus by dropping the transmission rate at which the other communication apparatus transmits data, the occurrence of packet loss can be suppressed.

Furthermore, the first packet generating unit may further generate the acknowledgement packet which indicates a response size larger than the response size of a previously generated acknowledgement packet, when the detecting unit does not detect the loss during a predetermined time period.

With this, when packet loss does not occur within a predetermined time period, the response size (window size) of the acknowledgement packet (ACK packet) increases, and thus by raising the transmission rate at which the other communication apparatus transmits data, the data transmission efficiency can be enhanced.

In addition, the second packet generating unit may generate the data request packet as a negative acknowledgement response packet to be transmitted in a case where the data sequentially transmitted by the other communication apparatus is either not received by the receiving unit in a predetermined order, or is lost. For example, the second packet generating unit generates and transmits a predetermined number of the data request packet, in a case where a data loss occurs, the data request packet indicating a content identical to a content of an acknowledgement packet corresponding to data received by the receiving unit immediately before the data loss has occurred.

With this, even when data transmitted from the other communication apparatus is lost, it is possible to induce the fast retransmission function of the other communication apparatus regardless of the result of reception of data transmitted from the other communication apparatus. As a result, the loss data can be received without waiting for a time-out.

Further, the communication apparatus may further include a loss detecting unit which detects, in the data received by the receiving unit, loss data which has been lost, wherein the first packet generating unit may transmit, to the other communication apparatus, the acknowledgement packet for instructing the other communication apparatus to retransmit the loss data detected by the loss detecting unit, as an acknowledgement to the data transmitted by the other communication apparatus, and the second packet generating unit may, in a case where the number of transmissions of the acknowledgement packet by the first packet generating unit is less than the number necessary for causing the other communication apparatus to retransmit the loss data, to transmit to the other communication apparatus the acknowledgement packet as the data request packet, irrespective of data transmission by the other communication apparatus, the number of the acknowledgement packet transmitted to the other communication apparatus being the number of duplicates, that is, the necessary number minus the number of the transmissions.

For example, when each of three DupAcks is received as an acknowledgement packet, the other universal communication apparatus retransmits the loss data indicated by the DupAcks. In other words, the number of DupAcks necessary for causing the other communication apparatus to retransmit the loss data is "3". In such a case, the first packet generating unit of the communication apparatus of the present invention transmits a DupAck (acknowledgement packet) as a reception response to the transmission of a packet from the other communication apparatus, and in the case where the number of the DupAck transmission is less than the necessary number "3", the second packet generating unit transmits DupAcks, the number of which is the necessary number "3" minus the number of DupAck transmission, as data request packets, regardless of the transmission of data packets from the other communication apparatus. Therefore, for example, when the first packet generating unit transmits two DupAcks (the number of transmission is "2"), the second packet generating unit transmits one DupAck even though no packets have been received from the other communication apparatus.

With this, even in the case where the resource of the communication apparatus is insufficient, in other words, even in the case where the delay of reception processing of the communication apparatus does not allow the TCP Window size to recover, it is possible to cause the other communication apparatus to initiate the fast retransmission for the loss data without waiting for a time-out. As a result, a decrease of throughput caused by the loss data can be minimized. Further, it is possible to prompt the universal communication apparatus to perform fast retransmission without requesting the other communication apparatus for a function for interpreting ELN as in the example of the conventional case.

Furthermore, since the loss data is detected in the data obtained by the receiving unit, a wrong DupAck that instructs retransmission of the data which has been lost due the overloaded network (TCP packet, for example) is not transmitted. Therefore, it is possible to prevent the occurrence of useless traffic caused when the other communication apparatus further transmits data to the overloaded network in response to such a DupAck.

Furthermore, the receiving unit may include a memory, sequentially obtain the data transmitted by the other communication apparatus and store the obtained data in the memory.

With this, since the loss data which has been lost due to an overflowed for-reception FIFO memory, for example, can be reliably detected, it is possible to reliably prompt the other communication apparatus to perform fast retransmission of the data.

Further, the communication apparatus may further include a network processing unit which obtains data from the receiving unit and performs processing on the data as a network layer of the OSI reference model, and the loss detecting unit may detect loss data which has been lost in the network processing unit.

With this, since the loss data which has been lost in the network processing unit that performs Internet Protocol (IP) processing for example, that is, an IP processing unit, can be reliably detected, it is possible to reliably prompt the other communication apparatus to perform fast retransmission of the data.

Furthermore, the loss detecting unit may detect the loss data, only in the case where the loss data which has been lost is based on Transmission Control Protocol (TCP).

With this, it is possible to prevent transmission of a wrong acknowledgement packet or data request packet corresponding to the loss data other than the TCP packet, and thus it is possible to prevent the occurrence of the useless traffic caused as the other communication apparatus transmits data in response to such a packet.

Moreover, the communication apparatus may further include an apparatus specifying unit which specifies the other communication apparatus which is a target for a retransmission instruction, based on the data obtained by the receiving unit.

For example, since the other communication apparatus which is a target for a retransmission instruction is specified based on an IP address and a port number indicated in the data obtained by the receiving unit, it is possible to reliably transmit an acknowledgement packet or a data request packet to the other communication apparatus which serves as a transmission source of data, and thus possible to suppress the occurrence of useless traffic caused by transmission, to a wrong apparatus, of a retransmission instruction signal.

In addition, when loss data is detected, the loss detecting unit may hold the result of the detection, and the communication apparatus may further include a resetting unit which deletes the result of the detection held by the loss detecting unit when a predetermined time period has elapsed since the loss data detection performed by the loss detecting unit, when the communication apparatus has transmitted a predetermined number of pieces of data, when the data processing speed of the communication apparatus has slowed down compared to that at the time of the loss data detection, or when the second packet generating unit has transmitted a data request packet.

With this, since the result of the detection (packet loss information) held by the loss detecting unit is deleted, it is possible to prevent an acknowledgement packet or a data request packet from being wrongly transmitted even though data is retransmitted from the other communication apparatus, and thus, it is possible to suppress the occurrence of useless traffic caused by such a wrong packet. Also, in the case where the result of the detection is deleted when a predetermined time period has elapsed since the loss data detection, the result of the detection can be reliably deleted in accordance with the lapse of the predetermined time period. Further, in the case where the result of the detection is deleted when the communication apparatus has transmitted a predetermined number of pieces of data, the result of the detection can be easily deleted at an appropriate timing without the need of a timer function and the like. Furthermore, in the case where the result of the detection is deleted when the data processing speed (PPS, for example) of the communication apparatus has slowed down compared to that at the time of the loss data detection, it is possible to prevent an acknowledgement packet or a data request packet from being transmitted because the result of the detection is held despite the overloaded status of the communication apparatus, and thus, it is possible to suppress the occurrence of the useless traffic caused by transmission of data from the other communication apparatus in response to the packet. Moreover, frequent repetition of the loss data detection and the deletion of the detection result can be prevented, and the detection result can be deleted at an appropriate timing. In addition, in the case where the result of the detection is deleted when the second packet generating unit transmits a data request packet, an appropriate acknowledgement packet or data request packet can be transmitted. For example, in the case where the detection result is not yet deleted after a data request packet is transmitted, the first and the second packet generating units, in some cases, transmit an acknowledgement packet or a data request packet that instructs retransmission of wrong loss data, when the loss data is detected again. Accordingly, in the present invention, an appropriate retransmission instructing signal can be transmitted by deleting the detection result at the timing as described above.

Moreover, the second packet generating unit may compute the number of duplicates when the first packet generating unit generates the acknowledgement packet.

With this, since the number of duplicates is promptly computed, the second packet generating unit can immediately transmit data request packets corresponding to the computed number of duplicates, and as a result, it is possible to cause the other communication apparatus to initiate the fast retransmission of the loss data the most rapidly. Further, since the second packet generating unit can immediately transmit data request packets, it is unnecessary to hold the data request packets and information about the packets for a long time. As a result, the memory capacity can be reduced.

Furthermore, the second packet generating unit may compute the number of duplicates at one of the following timings: before a lapse of a predetermined time period since the first packet generating unit transmits the acknowledgement packet; when a loading rate of the communication apparatus falls to a predetermined threshold or below before the lapse of the predetermined time period since the acknowledgement packet is transmitted; and before the communication apparatus notifies the other communication apparatus that a receivable data amount of the communication apparatus has increased.

With this, in the case where the number of duplicates is computed before a predetermined time period (a timeout period, for example) elapses from when the first packet generating unit transmits an acknowledgement packet, the second packet generating unit can reliably count the number of transmission of the acknowledgement packet transmitted from the first packet generating unit during the predetermined time period, and thus it is possible to compute an accurate number of duplicates. Further, in the case where the number of duplicates is computed when the loading rate (the CPU usage rate, for example) of the communication apparatus has reached the predetermined threshold value or less, and before a predetermined time period elapses since when an acknowledgement packet is transmitted, the second packet generating unit can compute an accurate number of duplicates as described above, and also can appropriately generate a data request packet when the load of the communication apparatus is small. Furthermore, in the case where the number of duplicates is computed before the communication apparatus notifies the other communication apparatus that the receivable data amount of the communication apparatus has increased (WinUpdate, for example), it is possible to compute an accurate number of duplicates as described above. In addition, in the case where the number of duplicates is computed after the other communication apparatus has been notified of WinUpdate for example and after that the second packet generating unit transmits DupAcks corresponding to the computed number of duplicates as data request packets, the other communication apparatus differentiates DupAcks transmitted from the first packet generating unit (acknowledgement packets) and DupAcks transmitted from the second packet generating unit (data request packets). Therefore, in some cases, the other communication apparatus judges that the same DupAcks corresponding to the necessary number are not transmitted in response to the loss data, and does not perform fast retransmission in response to the loss data. Thus, in the present invention, by computing the number of duplicates before WinUpdate is notified as described above, DupAcks corresponding to the computed number of duplicates can be transmitted before WinUpdate is notified, and thus it is possible to reliably prompt the other communication apparatus to perform the fast retransmission.

Furthermore, the second packet generating unit may compute the number of duplicates based on a receivable data amount of the communication apparatus. For example, when the first packet generating unit transmits an initial acknowledgement packet, the second packet generating unit may compute the number of intended transmissions by the first packet generating unit based on the receivable data amount, so as to compute the number of duplicates by subtracting the number of transmissions from the necessary number.

With this, when the initial acknowledgement packet is transmitted, the number of intended transmissions by the first packet generating unit is computed based on the Window size for example, and the number of duplicates is computed based on the computed number of transmissions, and therefore, the second packet generating unit can immediately transmit data request packets corresponding to the computed number of duplicates after the initial acknowledgement packet is transmitted.

Moreover, when the number of duplicates is equal to or greater than 2, the second packet generating unit may duplicate a data request packet located in a data link layer or a transport layer of the OSI reference model, and transmit data request packet signals corresponding to the number of duplicates.

With this, in the case where a DupAck (acknowledgement packet) constructed as a Media Access Control (MAC) frame located in the data link layer is duplicated, since the DupAck which is the original for duplicates is prepared for transmission, the memory capacity necessary for retransmission of the DupAck can be reduced and the processing load of the CPU can also be reduced. In addition, in the case where a DupAck (acknowledgement packet) constructed as a TCP packet located in the transport layer is duplicated, the number of duplicates can be easily managed in the transport layer (TCP). As a result, when the present invention is applied to an existing communication apparatus, for example, it is sufficient to modify the transport layer, and thus modification can be confined.

Note that the present invention can be implemented not only as a communication apparatus as described, but also as a method and a program thereof, a recording medium which stores the program, and an integrated circuit.

**Effects of the Invention**

The communication apparatus of the present invention enables control of a transmission rate at which another communication apparatus on the transmission side transmits data, suppression of packet loss caused by reception of data exceeding the processing capability, and prevention of throughput deterioration. Furthermore, it is possible to perform efficient data transfer and obtain the maximum throughput by controlling the transmission rate of the other communication apparatus on the transmission side so as to match the transmission rate appropriate to the processing capability of the communication apparatus.

**Brief Description of Drawings**

[FIG. 1] FIG. 1 is a sequence diagram of data transmission and reception using TCP.

[FIG. 2] FIG. 2 is a sequence diagram of packet transmission and reception concerning a fast retransmission function.

[FIG. 3] FIG. 3 is a structure diagram of a network appliance.

[FIG. 4] FIG. 4 is a sequence diagram illustrating an example of data transfer in the case where data transfer efficiency deteriorates.

[FIG. 5] FIG. 5 is a sequence diagram of packet transmission and reception with a fast receiving side apparatus.

[FIG. 6] FIG. 6 is a sequence diagram of packet transmission and reception with a slow receiving side apparatus.

[FIG. 7] FIG. 7 is a sequence diagram of TCP transmission and reception in a conventional technology.

[FIG. 8] FIG. 8 is a structure diagram illustrating an example of structures of a network and a communication apparatus according to a first embodiment of the present invention.

[FIG. 9] FIG. 9 is a structure diagram illustrating an example of a functional structure of a processing unit according to the first embodiment of the present invention.

[FIG. 10] FIG. 10 is a sequence diagram of packet transmission and reception according to the first embodiment of the present invention.

[FIG. 11] FIG. 11 is a structure diagram illustrating an example of a functional structure of a processing unit according to a second embodiment of the present invention.

[FIG. 12] FIG. 12 is a sequence diagram of packet transmission and reception according to the second embodiment of the present invention.

[FIG. 13] FIG. 13 is a flowchart illustrating operations of a receiving side apparatus according to the second embodiment of the present invention.

[FIG. 14] FIG. 14 is a structure diagram illustrating an example of a functional structure of a processing unit according to a third embodiment of the present invention.

[FIG. 15] FIG. 15 is a sequence diagram of packet transmission and reception according to the third embodiment of the present invention.

[FIG. 16] FIG. 16 is a sequence diagram of packet transmission and reception according to a fourth embodiment of the present invention.

[FIG. 17] FIG. 17 is a structure diagram illustrating an example of a functional structure of a processing unit according to a fifth embodiment of the present invention.

[FIG. 18] FIG. 18 is a sequence diagram of packet transmission and reception according to the fifth embodiment of the present invention.

[FIG. 19] FIG. 19 is a sequence diagram of another packet transmission and reception according to the fifth embodiment of the present invention.

[FIG. 20] FIG. 20 is a sequence diagram of packet transmission and reception according to a sixth embodiment of the present invention.

[FIG. 21] FIG. 21 is a sequence diagram of another packet transmission and reception according to the sixth embodiment of the present invention.

[FIG. 22] FIG. 22 is a structure diagram illustrating an example of a functional structure of a processing unit according to a seventh embodiment of the present invention.

[FIG. 23] FIG. 23 is a sequence diagram of packet transmission and reception according to the seventh embodiment of the present invention.

[FIG. 24] FIG. 24 is a sequence diagram of another packet transmission and reception according to the seventh embodiment of the present invention.

[FIG. 25] FIG. 25 is a structure diagram illustrating an example of a functional structure of a processing unit according to an eighth embodiment of the present invention.

[FIG. 26] FIG. 26 is a sequence diagram of packet transmission and reception according to the eighth embodiment of the present invention.

[FIG. 27] FIG. 27 is a sequence diagram of another packet transmission and reception according to the eighth embodiment of the present invention.

[FIG. 28] FIG. 28 is a structure diagram illustrating an example of a functional structure of a processing unit according to a ninth embodiment of the present invention.

[FIG. 29] FIG. 29 is a sequence diagram of packet transmission and reception according to the ninth embodiment of the present invention.

[FIG. 30] FIG. 30 is a diagram illustrating an example of structures of a network and a communication apparatus according to a tenth embodiment of the present invention.

**EP 1 933 509 A1**

[FIG. 31] FIG. 31 is a structure diagram illustrating a functional structure of the CPU of a communication apparatus according to the tenth embodiment of the present invention.

[FIG. 32] FIG. 32 is a diagram illustrating a sequence of communication between communication apparatuses according to the tenth embodiment of the present invention.

[FIG. 33] FIG. 33 is a diagram illustrating a sequence of processing performed by a receiving side apparatus according to the tenth embodiment of the present invention.

[FIG. 34] FIG. 34 is a flowchart illustrating processing of computing the number of DupAck duplicates, performed by a DupAck managing unit according to the tenth embodiment of the present invention.

[FIG. 35] FIG. 35 is a diagram illustrating an example of structures of a network and a communication apparatus according to a first variation of the tenth embodiment of the present invention.

[FIG. 36] FIG. 36 is a structure diagram illustrating a functional structure of the CPU of a receiving side apparatus according to the first variation of the tenth embodiment of the present invention.

[FIG. 37] FIG. 37 is a diagram illustrating an example of a sequence of processing performed by the receiving side apparatus according to the first variation of the tenth embodiment of the present invention.

[FIG. 38] FIG. 38 is a structure diagram illustrating a functional structure of the CPU of a receiving side apparatus according to a second variation of the tenth embodiment of the present invention. [FIG. 39] FIG. 39 is a diagram illustrating a sequence of communication between communication apparatuses according to a third variation of the tenth embodiment of the present invention.

[FIG. 40] FIG. 40 is a diagram illustrating an example of a sequence of processing performed by a receiving side apparatus according to the third variation of the tenth embodiment of the present invention. [FIG. 41] FIG. 41 is a flowchart illustrating processing of computing the number of DupAck duplicates, performed by a DupAck managing unit according to the third variation of the tenth embodiment of the present invention.

**Numerical References**

| 1 | Receiving side apparatus |
|---|---|
| 2 | System bus |
| 3 | Processing unit |
| 4 | Storing unit |
| 5 | Communication unit |
| 6 | FIFO |
| 7 | Network |
| 8 | Transmitting side apparatus |
| 31 | Receiving side apparatus |
| 32 | System bus |
| 33 | Processing unit |
| 34 | Storing unit |
| 35 | Communication unit |
| 36 | FIFO |
| 37 | Network |
| 38 | Transmitting side apparatus |
| 41 | IP processing unit |
| 42 | TCP processing unit |
| 43 | Application processing unit |
| 44 | TCP packet processing |
| 45 | ACK generating unit |
| 46 | Window updating notification generating unit |
| 47 | Receiving buffer |
| 48 | Window size computing unit |
| 49 | Window updating timer unit |
| 50 | Reception rate determining unit |
| 51 | Previous RWIN storing unit |
| 61 | IP processing unit |
| 62 | TCP processing unit |
| 63 | Application processing unit |
| 64 | TCP packet processing unit |

13

65    ACK generating unit
66    Window updating notification generating unit
67    Receiving buffer
68    Window size computing unit
69    Window updating timer unit
70    Reception rate determining unit
71    Previous RWIN storing unit
81    IP processing unit
82    TCP processing unit
83    Application processing unit
84    TCP packet processing unit
85    ACK generating unit
86    Window updating notification generating unit
87    Receiving buffer
88    Window size computing unit
89    Window updating timer unit
90    Reception rate determining unit
91    Previous RWIN storing unit
101   IP processing unit
102   TCP processing unit
103   Application processing unit
104   TCP packet processing unit
105   ACK generating unit
106   Window updating notification generating unit
107   Receiving buffer
108   Window size computing unit
109   Window updating timer unit
110   Reception rate determining unit
111   Previous RWIN storing unit
112   ACK delaying unit
121   IP processing unit
122   TCP processing unit
123   Application processing unit
124   TCP packet processing unit
125   ACK generating unit
126   Window updating notification generating unit
127   Receiving buffer
128   Window size computing unit
129   Window updating timer unit
130   Reception rate determining unit
131   Previous RWIN storing unit
141   IP processing unit
142   TCP processing unit
143   Application processing unit
144   TCP packet processing unit
145   ACK generating unit
146   Window updating notification generating unit
147   Receiving buffer
148   Window size computing unit
149   Previous RWIN storing unit
150   Packet loss detecting unit
161   IP processing unit
162   TCP processing unit
163   Application processing unit
164   TCP packet processing unit
165   ACK generating unit
166   Duplicate ACK generating unit
167   Receiving buffer

168     Window size computing unit
169     Packet missing detecting unit

**Best Mode for Carrying Out the Invention**

With reference to the drawings, embodiments of the present invention shall be described below. Note that for the descriptions of the embodiments, communication using TCP is taken as an example, however, as with TCP, the present invention can also be applied to a communication protocol of the same type for notifying, with an acknowledgement packet, free space of buffer available for reception. Also, the descriptions of the embodiments are provided on assumptions that: a communication apparatus dedicated for reception is referred to as a receiving side apparatus; a communication apparatus dedicated for transmission is referred to as a transmitting side apparatus; and the present invention is applied to the receiving side apparatus. However, both of the receiving side apparatus and the transmitting side apparatus may be equipped with a transmission and reception function, and the present invention may be applied to the transmitting side apparatus.

(First Embodiment)

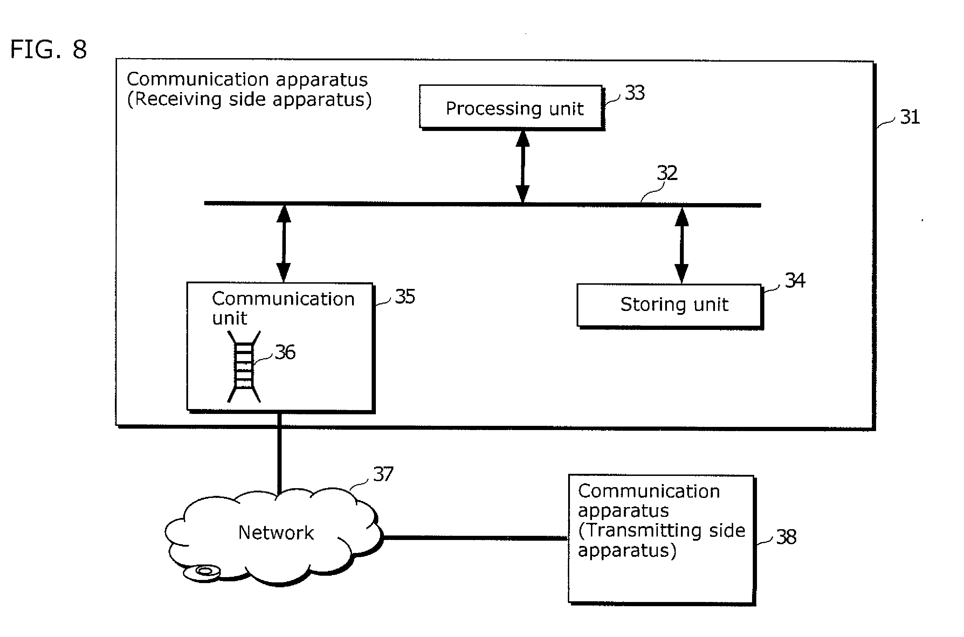

FIG. 8 is a diagram illustrating an example of a structure of a communication apparatus (receiving side apparatus) according to the present embodiment. A receiving side apparatus 31 is an apparatus connected to a network 37 via a wired or wireless connection, and has a communication function. It has an Ethernet (®) interface, for example. The network 37 is a network including a wired or wireless connection, an example of which includes a public network such as the Internet.

The receiving side apparatus 31 includes a system bus 32, a processing unit 33, a storing unit 34, and a communication unit 35.

The communication unit 35 is hardware connected to the system bus 32. The communication unit 35 has a function of transmitting a packet stored in the storing unit 34 to the network 37 and a function of receiving a packet from the network 37. In addition, the communication unit 35 has a storage region (hereinafter referred to as FIFO) 36 for temporarily holding the packet received from the network 37. Note that in the first through tenth embodiments, the communication unit is included as a receiving unit.

The processing unit 33 is hardware connected to the system bus 32. The processing unit 33 constructs the data stored in the storing unit 34 as a packet, and analyzes the received packet, for example. It should be noted that in some cases the processing unit 33 has a function of transferring a transmission packet from the storing unit 34 to the communication unit 35, and transferring a packet stored in the FIFO 36 of the communication unit 35 to the storing unit 34.

The storing unit 34 has a function of holding a packet to be transmitted and received and its data.

Here, the reception processing of the receiving side apparatus 31 shall be described below. When the receiving side apparatus 31 receives a packet from the network 37, it firstly stores the received packet in the FIFO 36 of the communication unit 35. Next, the receiving side apparatus 31 transfers the received packet stored in the FIFO 36 to the storing unit 34 from the FIFO 36 via the system bus 32. The content of the received packet which has been transferred to the storing unit 34 is analyzed by the processing unit 33 so as to perform the reception processing. When the processing unit 33 obtains the analysis result, it passes the received data to an application program (hereinafter simply referred to as application).

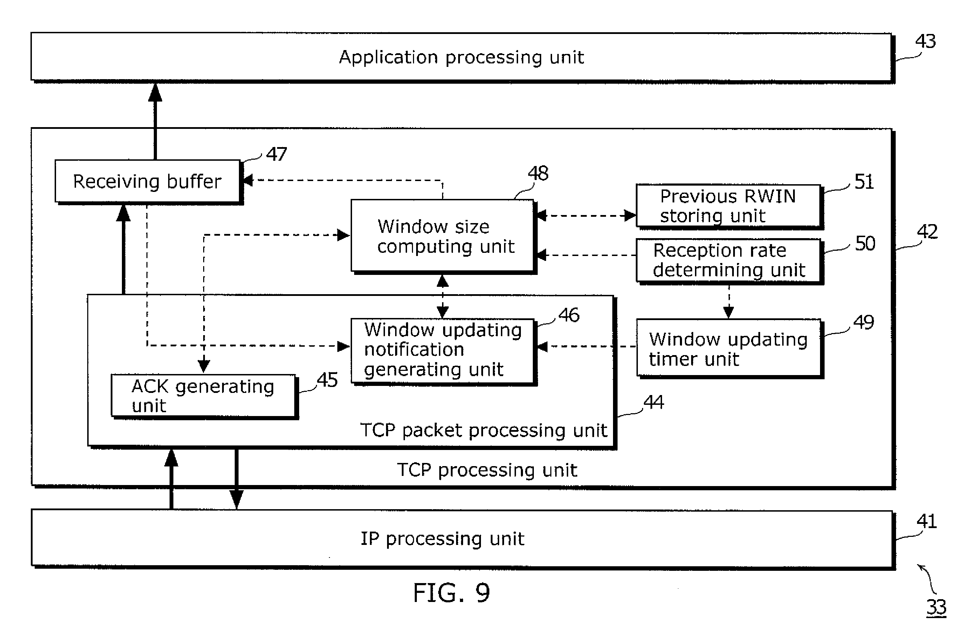

FIG. 9 is a structure diagram illustrating an example of a functional structure of the processing unit 33 of the receiving side apparatus 31 according to the present embodiment. In the present embodiment, a TCP processing unit 42 is included as a program executed by the processing unit 33. Note, however, that it may be implemented as a Large Scale Integration (LSI), and the like. Further, in the figure, the solid lines represent data flows of packet transmission and reception, whereas the broken lines represent flows related to transmission of control information.

The processing unit 33 includes an IP processing unit 41, a TCP processing unit 42, and an application processing unit 43.

The TCP processing unit 42 of the receiving side apparatus 31 includes a TCP packet processing unit 44, a receiving buffer 47, a window size computing unit 48, a window updating timer unit 49, a reception rate determining unit 50, and a previous RWIN storing unit 51. Next, the constituent elements of each of these units are described below.

The TCP packet processing unit 44 has a function for transmitting and receiving TCP packets. The TCP packet processing unit 44 specifies an application for a received packet, and stores the packet in the receiving buffer 47 so as to pass it to the application. Further, the TCP packet processing unit 44 has a function of constructing TCP packets, passing them to the IP processing unit 41, and transmitting them as TCP/IP packets. Furthermore, the TCP packet processing unit 44 includes an ACK generating unit 45 and a window updating notification generating unit 46.

The ACK generating unit 45 determines an ACK number based on the sequence number of the received TCP packet so as to generate an ACK packet. In an ACK packet, free space which is currently available for data reception (hereinafter referred to as window size) obtained from the window size computing unit 48 is also set. In should be noted that in the first through ninth embodiments, the ACK generating unit is included as a first packet generating unit, and that ACK packets correspond to acknowledgement packets. Also, a window size which is set in an ACK packet corresponds to a response size.

When there is an increase in the availability of the receiving buffer 47, the window updating notification generating unit 46 generates a window updating notifying packet. The window updating notification generating unit 46 further has a function to generate a window updating notifying packet according to an instruction from the window updating timer unit 49. In the window updating notifying packet, the window size obtained from the window size computing unit 48 is set. In should be noted that in the first through ninth embodiments, the window updating notification generating unit is included as a second packet generating unit, and that the window updating notifying packet corresponds to a data request packet. Moreover, a window size set in a window updating notifying packet corresponds to a reception size.

The receiving buffer 47 has a function to temporarily hold received data which is to be passed to the application processing unit 43. The receiving buffer 47 can store data corresponding to RWIN_MAX at maximum, and passes the data temporarily held in the receiving buffer 47 to the application processing unit 43 in sequence, in accordance with a request from the application processing unit 43. Also, when the window size has increased because data has been passed to the application processing unit 43, the receiving buffer 47 notifies the window updating notification generating unit 46 that the window size has increased.

The window size computing unit 48 has a function to compute a value which is to be notified to a transmitting side apparatus 38 as a window size. The window size computing unit 48 computes a window size based on: an updating amount (hereinafter referred to as RWIN_Update) which is instructed by the reception rate determining unit 50; and the previously notified window size (RWIN_Prev) stored in the previous RWIN storing unit 51. The window size is computed using the following expression.

$$\text{The window size} = \text{RWIN\_Prev} + \text{RWIN\_Update} \cdots \text{(Expression 1)}$$

Note that the window size may be computed using the following expression, taking into account the maximum size of data that can be stored in the receiving buffer 47 (RWIN_MAX).

$$\text{Window size} = \text{MIN}(\text{RWIN\_Prev} + \text{RWIN\_Update}, \text{RWIN\_MAX}) \cdots \text{(Expression 2)}$$

It is assumed that MIN (A, B) are minimum values of A and B.

The window updating timer unit 49 has a function to instruct the window updating notification generating unit 46 to transmit a window updating notifying packet at a predetermined interval. The predetermined interval is specified by the reception rate determining unit 50.

The reception rate determining unit 50 has a function to determine the updating amount of the window size computing unit 48 and the predetermined interval of the window updating timer unit 49 based on the reception rate of the TCP packet in the receiving side apparatus 31. Next, an example of a method for determining the updating amount and the predetermined interval shall be illustrated.

Example 1: An updating amount and a predetermined interval can be computed based on the capacity of the FIFO 36 and the transfer capability of the system bus 32, using the following expressions.

$$\text{Updating amount} = \text{Capacity of the FIFO 36} \cdots \text{(Expression 3)}$$

$$\text{Predetermined interval} = \text{Capacity of the FIFO 36/Transfer}$$
$$\text{capability of the system bus 32} \cdots \text{(Expression 4)}$$

To be more specific, in the case where the capacity of the FIFO 36 of the receiving side apparatus 31 is 4 KB and the transfer capability of the system bus 32 is 40 Mbps, the updating amount is 4 KB in conformance with the capacity of the FIFO 36, and the predetermined interval is 0.8 millisecond which is time that the system bus 32 requires for transferring 4 KB. It should be noted that the data transferring amount can be suppressed at or below the transfer capability of the system bus 32 by making the predetermined interval equal to or greater than 0.8 millisecond, and thus, the predetermined interval may be 1 millisecond. Furthermore, when computing the predetermined interval, the division is performed using the transfer capability of the system bus 32, however, the predetermined interval may be computed using the processing time for a singles packet and the transfer capability of the system bus, taking also into account the processing capability of the Central Processing Unit (CPU).

Example 2:

An updating amount and a predetermined interval can be computed based on the capacity of the FIFO 36 and a bit rate required by an application, using the following expressions.
$$\text{Updating amount} = \text{Capacity of the FIFO 36} \cdots \text{(Expression 5)}$$

$$\text{Predetermined intervals} = \text{RTT/CEILING} \left( \left( \left( \text{Bit rate required by application} \times \text{RTT} \right) /8 \right) / \text{Updating amount}, 1 \right) \cdots \text{(Expression 6)}$$

It is assumed that CEILING (A, B) are the result of rounding up A to the unit of B.
To be more specific, in the case where: the size of the FIFO 36 of the receiving side apparatus 31 is 4 KB; the bit rate required by an application is 10 Mbps; and the RTT is 10 milliseconds, the updating amount is 4 KB in conformance with the size of the FIFO 36. Further, in this case, since the bit rate required by the application is 10 Mbps, it is necessary that the application receives data of 12.5 KB during one RTT (10 milliseconds). Accordingly, taking into account an increase of 4 KB at a time as the updating amount, 3.125 times of update, that is, 4 times of update are necessary during one RTT. Therefore, the predetermined interval is RTT/4, that is, 2.5 milliseconds.

Example 3:

An updating amount and a predetermined interval can be computed based on the maximum capacity RWIN_MAX of data that can be stored in the receiving buffer 47 and a bit rate required by an application, using the following expressions.
$$\text{Updating amount} = \text{RWIN\_MAX} \cdots \text{(Expression 7)}$$

$$\text{Predetermined interval} = \text{RTT/CEILING} \left( \left( \left( \text{Bit rate required by application} \times \text{RTT} \right) /8 \right) / \text{RWIN\_MAX}, 1 \right) \cdots \text{(Expression 8)}$$

To be more specific, in the case where: the maximum data capacity RWIN_MAX available for storage in the receiving buffer 47 is 8 KB; the bit rate required by an application is 10 Mbps; and the RTT is 10 milliseconds, the updating amount is 8 KB in conformance with the RWIN_MAX. Further, in this case, since the bit rate required by the application is 10 Mbps, it is necessary to receive data of 12.5 KB during one RTT (10 milliseconds). Accordingly, taking into account an increase of 8 KB at a time as the updating amount, 1.5625 times of update, that is, 2 times of update are necessary during one RTT. Therefore, the predetermined interval is RTT/2, that is, 5 milliseconds.

It should be noted that based on the expressions illustrated in the examples 1 through 3, the updating amount may be rounded off to the nearest MSS, and the predetermined interval may be rounded up to the nearest millisecond or several milliseconds.

In addition, the reception rate determining unit 50 may have a function to dynamically change the updating amount and the predetermined interval in accordance with a change in the reception status of the receiving side apparatus 31 in such a case as where plural connections are made, or where the processing capability deteriorates since the processing unit 33 performs processing other than the communication processing.

The previous RWIN storing unit 51 has a function to record and hold the window size used when the previous window updating notification was made (hereinafter referred to as previous window size). The previous RWIN storing unit 51 passes the recorded and held previous window size to the window size computing unit 48, receives the result of computation performed by the window size computing unit 48, and updates the previous window size so as to record and hold the updated one.

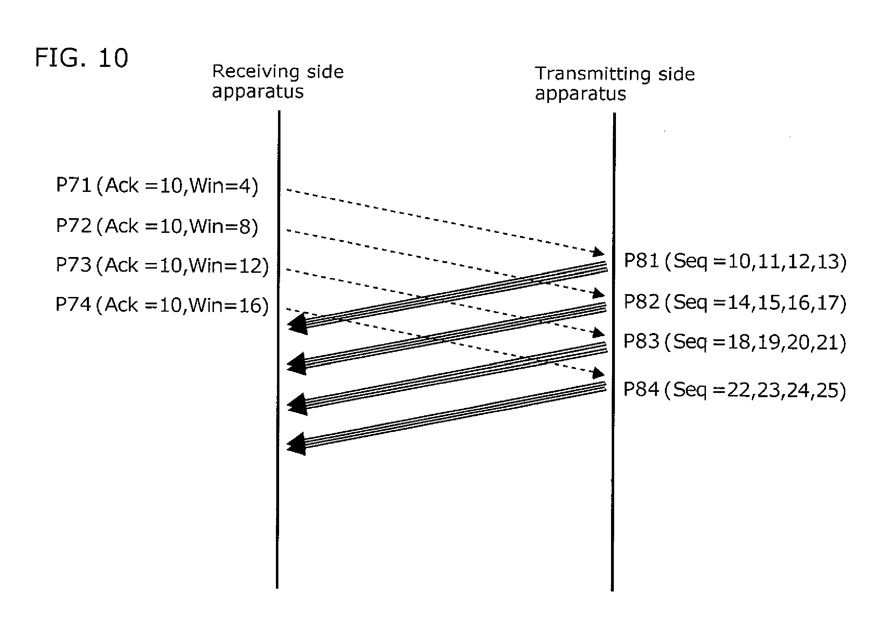

FIG. 10 is a sequence diagram illustrating transmissions of data packets and ACK packets in the present embodiment. In the example of FIG. 10, broken lines represent ACK packets or window updating notifying packets which are transmitted by the receiving side apparatus 31, and solid lines represent data packets which are transmitted by the transmitting side apparatus 38. Further, the description is provided on assumptions that the length of a single packet is 1, the updating amount is 4, and the updating interval (the above mentioned predetermined interval) is T millisecond. Furthermore, in the figure, P71 (Ack = 10, Win = 4) represents an ACK packet with the ACK number 10 and the window size 4, whereas P81 (Seq = 10, 11, 12, 13) represents data packets with the sequence numbers 10, 11, 12, and 13.

Through establishment of a connection with the transmitting side apparatus 38, for example, the receiving side apparatus 31 is in a status to receive data transmitted from the transmitting side apparatus 38. At this point, the receiving side apparatus 31 sets the updating amount 4 as the window size of the ACK packet (may be the window updating notifying packet instead), and transmits the ACK packet (the window updating notifying packet) to the transmitting side apparatus 38 (P71). The transmitting side apparatus 38 which has received the ACK packet P71 transmits four data packets P81 with the sequence numbers 10, 11, 12, and 13, since the window size of the received ACK packet P71 is 4 (P81).

Next, after T millisecond of the predetermined intervals has elapsed since the transmission of the ACK packet P71, the receiving side apparatus 31 adds the updating amount 4 to the previously notified window size 4 in accordance with Expression 1, sets 8 as the window size of the window updating notifying packet, and transmits the window updating notifying packet to the transmitting side apparatus 38 (P72). The transmitting side apparatus 38 which has received the ACK packet P72 now can transmit eight data packets including the data packets having the already transmitted sequence numbers 10, 11, 12, and 13, since the window size of the received ACK packet P72 is 8. For this reason, the transmitting side apparatus 38 transmits data packets P82, which are subsequent to the data packets P81, having the sequence numbers 14, 15, 16, and 17.

Hereinafter, ACK packets P73 and P74 are also transmitted from the receiving side apparatus 31 in the same manner as described above. Further, data packets P83 and P84 are also transmitted from the transmitting side apparatus 38 in the same manner as described above.

At this time, since the intervals at which the ACK packets are transmitted by the receiving side apparatus 31 are T millisecond intervals, the intervals at which the ACK packets are received by the transmitting side apparatus 38 are also T millisecond intervals. Furthermore, since the intervals of the ACK packets received by the transmitting side apparatus 38 are T millisecond intervals, and the window size increases by the updating amount at a time, the transmitting side apparatus 38 transmits data packets by the updating amount at a time with T millisecond intervals.

Since the transmitting side apparatus 38 transmits data packets with the T millisecond intervals, the receiving side apparatus 31 receives the data packets by the updating amount at a time at the T millisecond intervals. Note that since T millisecond is a value computed using (Expression 4) or (Expression 6), the receiving side apparatus 31 is capable of processing data corresponding to the updating amount within T millisecond. As a result, reception processing can be performed without any overflows.

As described, in the present embodiment, by having the receiving side apparatus 31 to control the intervals and the amount of transmission data transmitted from the transmitting side apparatus 38, it is possible to maximize the performance of the receiving side apparatus 31. Also, the present invention enables the control of the intervals and the amount of the transmission data to start at any given timing regardless of the data packet reception. In addition, by controlling the transmission data amount on a per-updating amount basis, the number of times the window updating notifying packet is generated is reduced, and the same ACK numbers of the window updating notifying packets are used. As a result, the only parameter to be changed in the series of window updating notifying packets is the window size, and therefore, it is possible to reduce the processing load. For example, when the RWIN_MAX is 32, the updating amount is 4, and the RTT is 10 milliseconds, the transmission intervals at which the window updating notifying packets are transmitted are 1.42 milliseconds in the present embodiment. On the other hand, in Patent Reference 1, it is necessary to perform the control at 0.32 millisecond intervals, since the method used therein is a method for performing ACK division so as to update, on an MSS basis, the free buffer space available for reception. Accordingly, unlike the conventional technology, the present embodiment makes it possible to reduce the processing load. In addition, the intervals and the amount of the transmission data transmitted from the transmitting side apparatus 38 can be controlled to be suitable to the reception rate of the application of the receiving side apparatus 31, and thus only data which corresponds to the updating amount is retained in the receiving buffer at maximum. As a result, the memory efficiency improves.

(Second Embodiment)

A communication apparatus (receiving side apparatus) according to the present embodiment has a structure similar to that illustrated in FIG. 8 of the first embodiment where only the processing unit is different. Consequently, detailed descriptions of the constituent elements other than the processing unit are omitted.

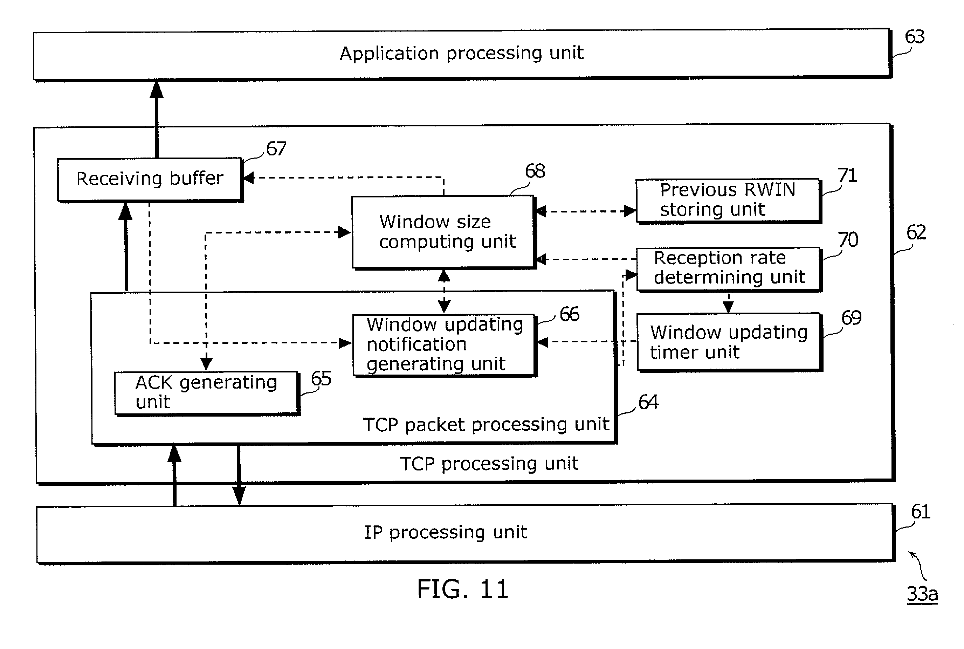

FIG. 11 is a structure diagram illustrating an example of a functional structure of a processing unit of a receiving side apparatus 31 according to the present embodiment. The receiving side apparatus 31 of the present embodiment has a processing unit 33a instead of the processing unit 33 of the first embodiment. Hereinafter, descriptions of the functions of each constituent element shall be provided. It should be noted that the processing unit 33a of the present embodiment has functions that are additional to the processing unit 33 of the first embodiment, and thus only the description of the difference from the first embodiment shall be provided.

The processing unit 33a includes an IP processing unit 61, a TCP processing unit 62, and an application processing unit 63.

Further, the TCP processing unit 62 of the receiving side apparatus 31 according to the present embodiment includes a TCP packet processing unit 64, a receiving buffer 67, a window size computing unit 68, a window updating timer unit 69, a reception rate determining unit 70, and a previous RWIN storing unit 71. Here, the receiving buffer 67, the window size computing unit 68, and the previous RWIN storing unit 71 have the same functions and structures as that of the receiving buffer 47, the window size computing unit 48, and the previous RWIN storing unit 51 of the first embodiment, respectively.

The TCP packet processing unit 64 includes an ACK generating unit 65 and a window updating notification generating unit 66. Such a TCP packet processing unit 64 has the function of the TCP packet processing unit 44 illustrated in the first embodiment, and further has a function to notify the reception rate determining unit 70 of suspension of a window updating notifying function, in the case where a packet is received from a transmitting side apparatus 38 during an (Expression 1)-based update of the window size to be notified. Note that the window updating notifying function is to increase the window size and transmit a window updating notifying packet indicating the increased window size to the transmitting side apparatus 38 at a predetermined interval, as described in the first embodiment.

The window updating timer unit 69 has the function of the window updating timer unit 49 illustrated in the first embodiment, and further has a function to suspend a timer function based on a suspension notification from the reception rate determining unit 70.

The reception rate determining unit 70 has the function of the reception rate determining unit 50 illustrated in the first embodiment, and further has functions to suspend the window updating timer unit 69 and to set the updating amount to 0 in response to the suspension notification from the suspension notification from the TCP packet processing unit 64.

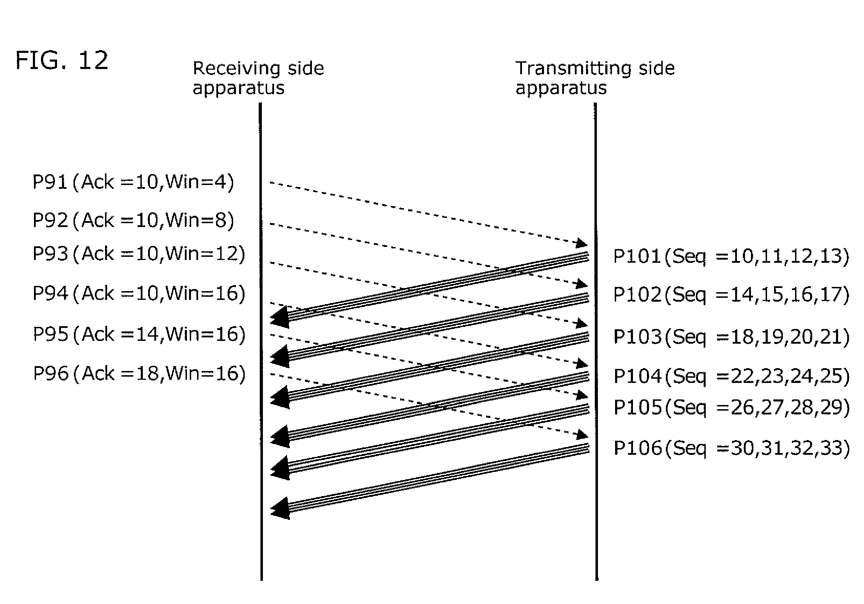

FIG. 12 is a sequence diagram illustrating transmissions of data packets and ACK packets according to the present embodiment. In the example of FIG. 12, broken lines represent ACK packets or window updating notifying packets which are transmitted by the receiving side apparatus 31, and solid lines represent data packets which are transmitted by the transmitting side apparatus 38. Further, the description is provided on assumptions that the length of a single packet is 1, the updating amount is 4, and the updating interval (the above mentioned predetermined interval) is T millisecond. Furthermore, in the figure, P91 (Ack = 10, Win = 4) represents an ACK packet with the ACK number 10 and the window size 4, whereas P101 (Seq = 10, 11, 12, 13) represents data packets with the sequence numbers 10, 11, 12, and 13.

Data transmission and reception processing performed by the receiving side apparatus 31 and the transmitting side apparatus is similar to that of the first embodiment in terms of the processing until when the receiving side apparatus 31 transmits an ACK packet P94 and also until when the transmitting side apparatus 38 transmits data packets P104. Therefore, the description starts from the processing in which the receiving side apparatus 31 transmits an ACK packet P95, that is, the processing after one RTT elapses.

After one RTT elapses, the receiving side apparatus 31 receives the data packets P101. Having received the data packets P101, the receiving side apparatus 31 generates an ACK packet P95 corresponding to the data packets P101, and transmits the generated ACK packet P95 to the transmitting side apparatus 38. Further, having received the data packets P101, the reception rate determining unit 70 suspends a window updating timer of the window updating timer unit 69, and sets the updating amount in the window size computing unit 68 to 0. Therefore, the window size of the ACK packet P95 to be transmitted is 16 which is a window size value held in the previous RWIN storing unit 71.

The transmitting side apparatus 38 which has received the ACK packet P95 can transmit data having the sequence numbers from 14 onward corresponding to the window size 16, since the ACK number is 14 and the window size is 16. Thus, the transmitting side apparatus 38 transmits data packets P105 having sequence numbers 26, 27, 28 and 29 which are data that have not yet been transmitted and which are the sequence numbers from 14 onward.

Next, a description is provided of the processing performed when the receiving side apparatus 31 receives data packets P102. When the data packets P102 are received, the window updating timer is under suspension and the updating amount is 0. Therefore, the window size of an ACK packet P96 corresponding to the data packets P102 is 16 which is a window size value held in the previous RWIN storing unit 71. Further, the transmitting side apparatus 38 which has received the ACK packet P96 transmits data packets P106 having the sequence numbers 30, 31, 32 and 33 which are data that have not yet been transmitted and which are the sequence numbers from 18 onward. From there onward, the similar processing is repeated.

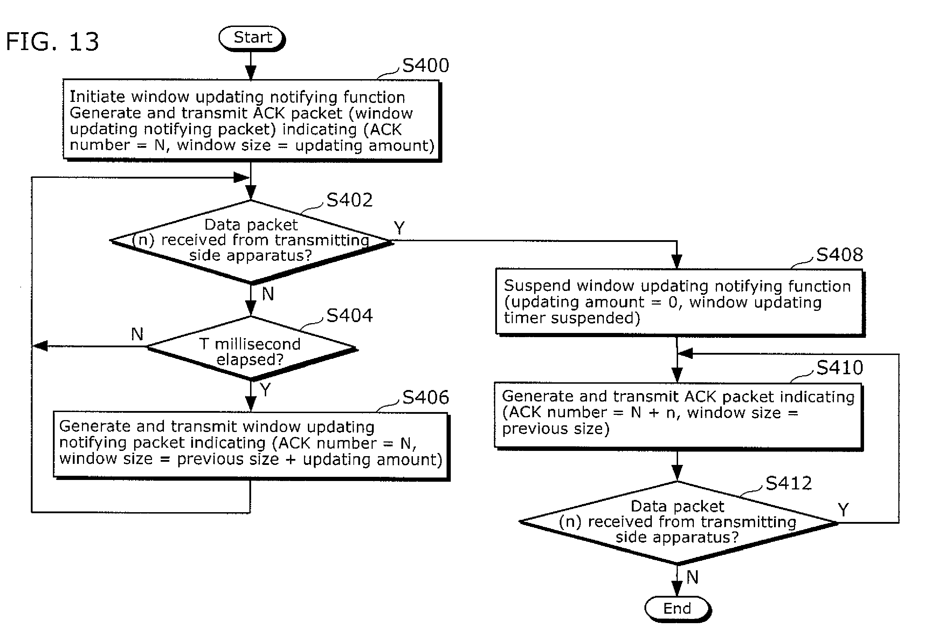

FIG. 13 is a flowchart illustrating operations of the receiving side apparatus 31 of the present embodiment.

First, the receiving side apparatus 31 establishes a connection with the transmitting side apparatus 38 so that the receiving side apparatus 31 can receive data transmitted from the transmitting side apparatus 38. Then, the receiving side apparatus 31 initiates the window updating notifying function (Step 5400). In other words, the receiving side apparatus 31 generates an ACK packet or a window updating notifying packet which indicates the ACK number = N and the window size = updating amount, and transmits the generated packet to the transmitting side apparatus 38. Note that N is a sequence number of the data packet requested by the receiving side apparatus 31. Also at this point, the window updating timer unit 49 of the receiving side apparatus 31 starts time measurement.

Next, the receiving side apparatus 31 judges whether or not a data packet has been received from the receiving side apparatus 38 (Step S402). Here, in the case where it is judged that a data packet has not been received from the receiving side apparatus 38 (N in Step S402), the receiving side apparatus 31 further judges whether or not T millisecond, that is, a predetermined time period, has elapsed (Step S404).

In the case where it is judged that T millisecond has elapsed (Y in Step S404), the receiving side apparatus 31 generates a window updating notifying packet which indicates an ACK number = N and the window size = the previous window size + the updating amount, and transmits the generated window updating notifying packet to the transmitting side apparatus 38 (Step S406). On the other hand, in the case where it is judged that T millisecond has not elapsed (N in Step S404) or where the transmission of the window updating notifying packet is finished in Step S406, the receiving side apparatus 31 again performs the processing from Step S402.

Furthermore, in the case where it is judged in Step S402 that a data packet has been received (Y in Step S402), the receiving side apparatus 31 suspends the above mentioned window updating notifying function (Step S408). In other words, the window updating timer unit 49 suspends the time measurement, and the updating amount is reset to 0. In addition, the receiving side apparatus 31 generates an ACK packet which indicates an ACK number = N + n and the window size = the previous window size, as an acknowledgement to the received data packet transmitted from the transmitting side apparatus 38, and transmits the generated ACK packet to the transmitting side apparatus 38 (Step S410). Note that n is the number of data packets received by the receiving side apparatus 31.

Then, the receiving side apparatus 31 again judges whether or not a data packet has been received from the transmitting side apparatus 38 (Step S412). As a result, in the case where it is judged that a data packet has been received (Y in Step S412), the receiving side apparatus 31 repeats the processing from Step S410, and in the case where it is judged that a data packet has not been received (N in Step S412), the receiving side apparatus 31 finishes the processing of receiving data from the transmitting side apparatus 38.

As described, in the present embodiment, effects that are similar to that of the first embodiment can be obtained, and it is also possible to maintain, even after the data reception, a constant transmission data rate at which the transmitting side apparatus 38 transmits data, since the reception rate determining unit 70 sets the updating amount to 0 so as to suspend the window updating timer after one RTT elapses.

(Third Embodiment)

A communication apparatus (receiving side apparatus) according to the present embodiment has a structure similar to that illustrated in FIG. 8 of the first embodiment where only the processing unit is different. Consequently, detailed descriptions of the constituent elements other than the processing unit are omitted.

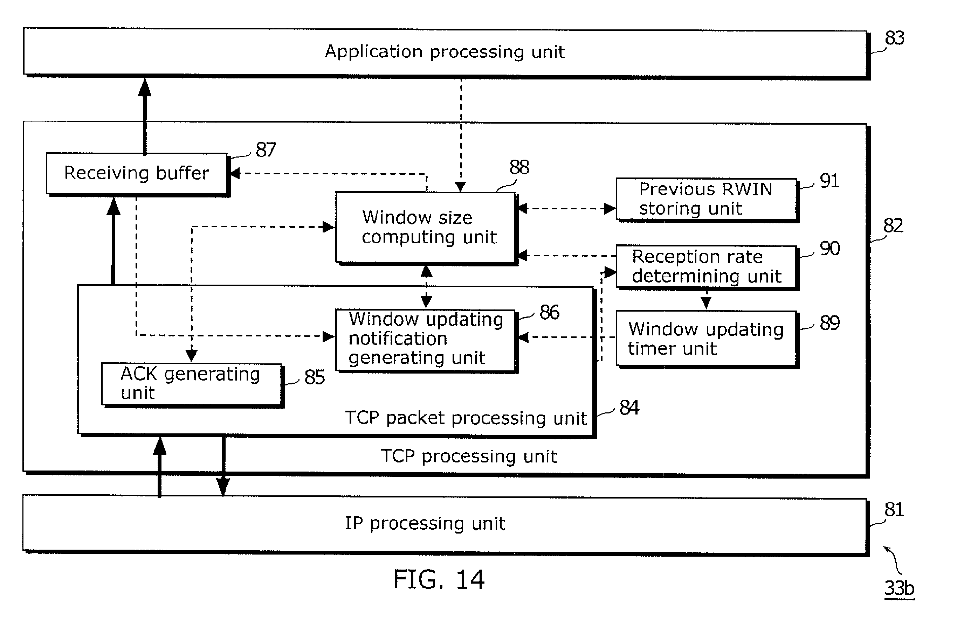

FIG. 14 is a structure diagram illustrating an example of a functional structure of a processing unit of a receiving side apparatus 31 according to the present embodiment. The receiving side apparatus 31 of the present embodiment has a processing unit 33b instead of the processing unit 33 of the first embodiment. Hereinafter, descriptions of the functions of each constituent element shall be provided. It should be noted that the processing unit 33b of the present embodiment has functions that are additional to the processing unit 33a of the second embodiment, and thus only the description of the difference from the second embodiment shall be provided.

The processing unit 33b includes an IP processing unit 81, a TCP processing unit 82, and an application processing unit 83.

Further, the TCP processing unit 82 of the receiving side apparatus 31 according to the present embodiment includes a TCP packet processing unit 84, a receiving buffer 87, a window size computing unit 88, a window updating timer unit 89, a reception rate determining unit 90, and a previous RWIN storing unit 91. Here, the receiving buffer 87 and the previous RWIN storing unit 91 have the same structures and functions as that of the receiving buffer 47 and the previous RWIN storing unit 51 of the first embodiment, respectively.

The TCP packet processing unit 84 includes an ACK generating unit 85 and a window updating notification generating unit 86. Such a TCP packet processing unit 84 has the function of the TCP packet processing unit 64 illustrated in the second embodiment, and further has a function to notify the reception rate determining unit 90 of resumption of the window updating notifying function, in the case where a packet is received from a transmitting side apparatus 38 during the suspension of the window updating notifying function.

The window size computing unit 88 has the functions of the window size computing units 48 and 68 which are respectively illustrated in the first and the second embodiments. Furthermore, in the case where the window size computing unit 88 has a function to be notified by the application processing unit 83 of a total data amount in one series of data reception, the window size computing unit 88 has a function to reduce the window size that is to be notified with an ACK packet, in accordance with the end of reception of data corresponding to the total data amount.

The window updating timer unit 89 has the function of the window updating timer unit 69 illustrated in the second embodiment, and a function to resume the window updating notifying function in response to the notification from the reception rate determining unit 90 of the resumption of the window updating notifying function.

The reception rate determining unit 90 has the function of the reception rate determining unit 70 illustrated in the second embodiment, and further has a function to compute a predetermined interval and an updating amount and notify the window updating timer unit 89 of the resumption of the window updating notifying function, after receiving the notification of the resumption of the window updating notifying function from the TCP packet processing unit 84.

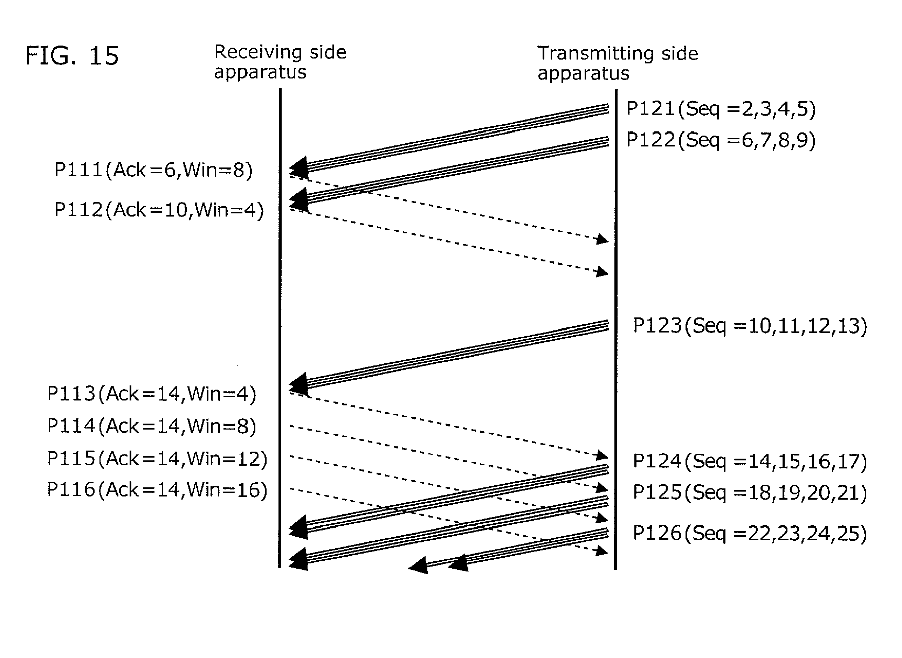

FIG. 15 is a sequence diagram illustrating transmissions of data packets and ACK packets according to the present embodiment. In the example of FIG. 15, broken lines represent ACK packets or window updating notifying packets which are transmitted by the receiving side apparatus 31, and solid lines represent data packets which are transmitted by the transmitting side apparatus 38. Further, the description is provided on assumptions that the length of a single packet is 1, the updating amount is 4, and the updating interval (the above mentioned predetermined interval) is T millisecond. Furthermore, in the figure, P111 (Ack = 6, Win = 8) indicates an ACK packet having the ACK number 6 and the window size 8, whereas P121 (Seq = 2, 3, 4, 5) indicates data packets having the sequence numbers 2, 3, 4, and 5.

The transmitting side apparatus 38 transmits data packets P121 and P122 so as to temporarily finish the data transmission. Then, after any given length of time passes, data transmission resumes so as to transmit data packets P123. The transmission of data packets and ACK packets at this point shall be described.

First, a description is provided of the case where the transmitting side apparatus 38 temporarily finishes the data transmission after the transmission of the data packets P122.

The window size computing unit 88 is already notified by the application processing unit 83 of the total data amount in the series of data reception. Therefore, the window size computing unit 88 reduces the window size of the ACK packet to transmit, in accordance with the end of reception of data corresponding to the total data amount. (Expression 9) represents window size computation performed by the window size computing unit 88.

$$\text{Window size} = \text{MIN ((total data amount} - \text{reception data amount)} + \text{updating amount, window size held in the previous RWIN storing unit)} \cdots \text{(Expression 9)}$$

That is,

$$\text{Window size} = \text{MIN (remaining reception data amount} +$$
$$\text{updating amount, window size held in the previous RWIN storing}$$
$$\text{unit)} \cdots \text{(Expression 10)}$$

Note that it may be

$$\text{window size} = \text{MIN (total data amount} - \text{reception data}$$

$$\text{amount, window size held in the previous RWIN storing unit)} \cdots$$
$$\text{(Expression 11)},$$

in accordance with the total data amount. In the case of (Expression 11), when the transmitting side apparatus 38 resumes data transmission, the data transmission starts with a prove packet with which it is checked whether or not there is free space in the receiving buffer of the receiving side apparatus 31.

In FIG. 15, the transmitting side apparatus 38 transmits the data packets P121. The receiving side apparatus 31 which has received the data packets P121 generates an ACK packet P111 corresponding to the data packets P121, and transmits the generated ACK packet P111. In the data packet transmitted by the receiving side apparatus 31 at this point, the window size is set to 8 based on (Expression 9). Then, the transmitting side apparatus 38 transmits data packets P122. The receiving side apparatus 31 which has received the data packets P122 generates an ACK packet P112 corresponding to the data packets P122 and transmits the generated ACK packet P112. In the data packet transmitted by the receiving side apparatus 31 at this point, the window size is set to 4 based on (Expression 9). As described, the window size is reduced in accordance with the remaining reception data amount.

Next, the description shall be provided on the processing from the resumption of the data transmission by the transmitting side apparatus 38 onward, that is, from the point where the data packets P123 are transmitted onward.

The transmitting side apparatus 38 resumes the data transmission by transmitting the data packets P123. At this point, since the window size of the ACK packet P112 transmitted previously by the receiving side apparatus 31 is 4, the transmitting side apparatus 38 transmits a data packet having the sequence numbers 10, 11, 12, and 13 corresponding to the window size. As described, by reducing the window size at the time of temporarily suspending the data transmission, an outburst of transmission data arriving at once can be prevented.

Then, when the receiving side apparatus 31 receives the data packets P123 with which the transmitting side apparatus 38 has resumed the data transmission, the receiving side apparatus 31 generates an ACK packet P113 corresponding to the received data packets P123, and transmits the generated ACK packet P113. Subsequently, the receiving side apparatus 31 notifies the reception rate determining unit 90 that the data transmission has resumed. The reception rate determining unit 90 which has received the notification determines an updating amount and a predetermined interval and prompts the window updating timer unit 89 to resume the window updating timer, as in the first embodiment. As a result, when T millisecond, the predetermined interval, elapses after the transmission of the ACK packet P113, the receiving side apparatus 31 adds an updating capacity 4 to the previously notified window size 4 according to (Expression 1) and sets the window size of a window updating notifying packet to 8, and transmits the window updating notifying packet to the transmitting side apparatus 38 (P114). Moreover, the receiving side apparatus 31 transmits window updating notifying packets P115 and P116 at the T millisecond interval, that is, the predetermined interval. Consequently, the transmitting side apparatus 38 transmits data packets P124, P125 and P126 at the T millisecond interval, that is, the predetermined interval.

As described, the present embodiment enables effects that are similar to that of the first and second embodiments to be obtained. In addition, in the present embodiment, even at the time of temporarily suspending the data transmission, by resuming the window updating notifying function with a reduced window size, it is also possible to control the transmission rate at which data is transmitted at the time of resuming the transmission by the transmitting side apparatus after the temporal suspension.

(Fourth Embodiment)

A communication apparatus (receiving side apparatus) according to the present embodiment has a structure similar to that illustrated in FIG. 8 of the first embodiment where only the processing unit is different. Consequently, detailed descriptions of the constituent elements other than the processing unit are omitted.

Further, a processing unit of a receiving side apparatus 31 of the present embodiment has a structure similar to that of the processing unit 33a illustrated in FIG. 11 of the second embodiment. Therefore, the processing unit of the present embodiment shall be described below with reference to FIG. 11 in such a way that its difference from the second embodiment is made clear.

A TCP packet processing unit 64 of the present embodiment has the functions illustrated in the second embodiment, and a function to detect a packet loss during the suspension of the window updating notifying function, and notify the reception rate determining unit 70 of resumption of the window updating notifying function, after checking that the lost packet is retransmitted from the transmitting side apparatus 38.

The window updating timer unit 89 of the present embodiment has the functions illustrated in the second embodiment, and a function to resume the window updating timer function in response to the notification from the reception rate determining unit 70 of the resumption of the window updating timer function.

The reception rate determining unit 70 has the functions illustrated in the second embodiment. Further, the reception rate determining unit 70 has a function to compute a predetermined interval and an updating amount and notify the window updating timer unit 69 of resumption of the window updating notifying function in response to the notification from the TCP packet processing unit 64 of the resumption of the window updating notifying function, and a function to reset a previous window size value recorded in a previous RWIN storing unit 71 to an initial value 0, for example.

The previous RWIN storing unit 71 has the functions illustrated in the second embodiment, and a function that the previous window size held in itself is initialized by the reception rate determining unit 70.

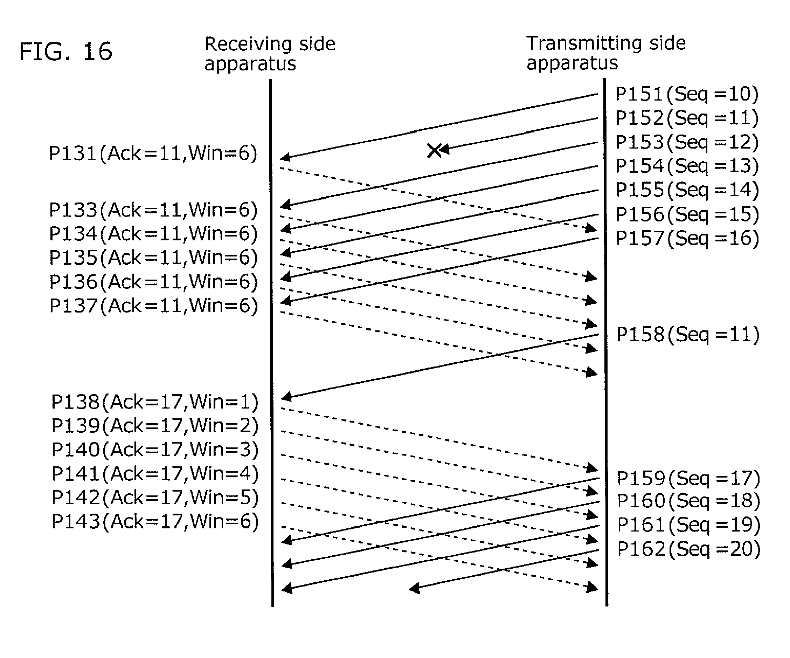

FIG. 16 is a sequence diagram illustrating transmissions of data packets and ACK packets according to the present embodiment. In the example of FIG. 16, broken lines represent ACK packets or window updating notifying packets which are transmitted by the receiving side apparatus 31, and solid lines represent data packets which are transmitted by a transmitting side apparatus 38. Further, in order to simplify the description, the description is provided on assumptions that the length of a single packet is 1, the updating amount is 1, and the updating interval (the above mentioned predetermined interval) is T millisecond. Furthermore, in the figure, P131 (Ack = 11, Win = 6) represents an ACK packet having the ACK number 11 and the window size 6, whereas P151 (Seq =10) represents a data packet having the sequence number 10.

The receiving side apparatus 31 receives transmission data packets from the transmitting side apparatus 38 at constant intervals while the window updating notifying function is under suspension. Here, the description is provided assuming that a packet loss has occurred on a data packet P152.

The receiving side apparatus 31 notices that a packet loss has occurred, since a data packet P153 has arrived. Therefore, the receiving side apparatus 31 transmits an ACK packet P133 having the ACK number 11. Subsequently, in the similar manner, the receiving side apparatus 31 receives data packets P154, P155 and P156 after the packet loss, and transmits ACK packets P134, P135 and P136 having the ACK number 11 because the packet loss has occurred. At this point, when the transmitting side apparatus 38 receives ACK packets having a duplicated ACK number four times in a row, the transmitting side apparatus 38 detects that a packet loss has occurred on the network, and immediately retransmits a data packet P158 without waiting for a time-out (TCP fast retransmission function). The function described thus far is a function also implemented by the conventional TCP.

Next, the description shall be provided from the retransmission of the data packet P158 with the TCP fast retransmission function.

When the receiving side apparatus 31 receives the retransmitted data packet P158, the TCP packet processing unit 64 notifies the reception rate determining unit 70 that a packet loss has occurred and the retransmission packet has been received. The reception rate determining unit 70 which has been notified that the retransmission packet has been received initializes the value of the previous RWIN storing unit 71, prompts the window updating timer unit 69 to activate the window updating timer, sets the updating amount to 1, and resumes the window updating notifying function. Then, the receiving side apparatus 31 generates an ACK packet P138 and transmits the generated ACK packet P138. In the ACK packet P138 generated at this point, the ACK number 17 is set based on the sequence number 16 which is currently being received, and the window size is set to 1 based on the value recorded in the previous RWIN storing unit 71 and the updating amount. The transmitting side apparatus 31 which has received the ACK packet P138 transmits a data packet P159 having the subsequent sequence number 17, based on the notified window size 1.

Next, when T millisecond, the predetermined interval, elapses after the transmission of the ACK packet P138, the receiving side apparatus 31 adds the updating capacity 1 to the previously notified window size 1 in accordance with (Expression 1), sets a window size of the window updating notifying packet to 2, and transmits the window updating notifying packet to the transmitting side apparatus 38 (P139). The transmitting side apparatus 38 which has received the ACK packet P139 now can transmit two data packets including the already transmitted packet having the sequence number 17, since the window size of the received ACK packet P139 is 2. For this reason, the transmitting side apparatus 38 transmits a data packet P160 having the sequence number 18 which is subsequent to the data packet P159. From here onward, the receiving side apparatus 31 updates the window size at the T millisecond interval and receives data packets at the T millisecond interval, in the similar manner as in the first embodiment.

As described, in the present embodiment, it is possible to obtain effects that are similar to that of the first and second embodiments. In addition, in the present embodiment, by resuming the window updating notifying function, it is also possible to control the transmission rate at which the transmitting side apparatus retransmits data, even after the occurrence of the packet loss. Moreover, by combining the present embodiment with the third embodiment, the effect obtained from the third embodiment can also be obtained.

(Fifth Embodiment)

A communication apparatus (receiving side apparatus) according to the present embodiment has a structure similar to that illustrated in FIG. 8 of the first embodiment where only the processing unit is different. Consequently, detailed descriptions of the constituent elements other than the processing unit are omitted.

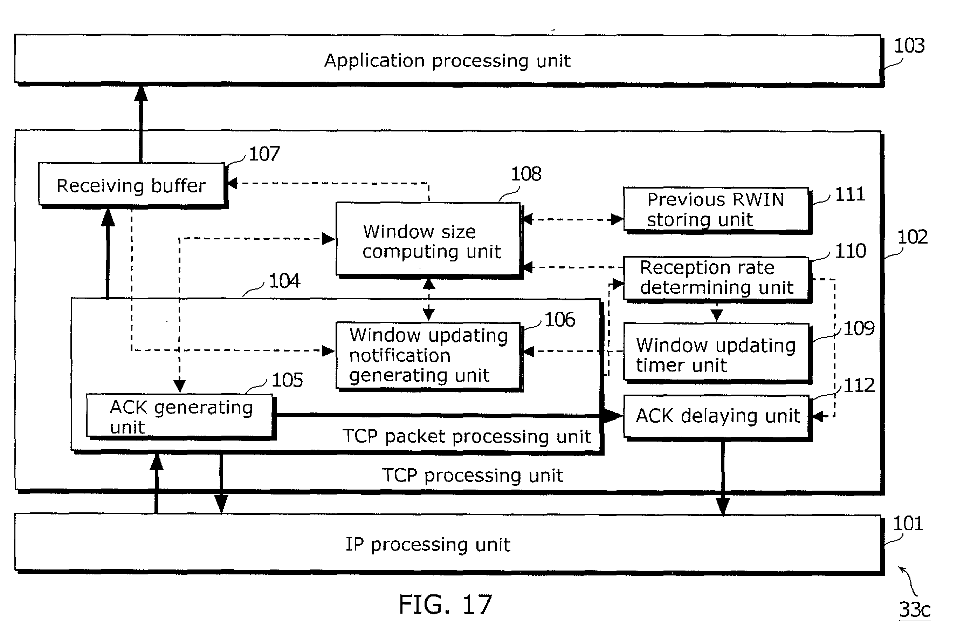

FIG. 17 is a structure diagram illustrating an example of a functional structure of a processing unit of a receiving side apparatus 31 according to the present embodiment. The receiving side apparatus 31 of the present embodiment has a processing unit 33c instead of the processing unit 33 of the first embodiment. Hereinafter, descriptions of the functions of each constituent element shall be provided. It should be noted that the processing unit 33c of the present embodiment has functions that are additional to the processing unit 33a of the second embodiment, and thus only the description of the difference from the second embodiment shall be provided.

The processing unit 33c includes an IP processing unit 101, a TCP processing unit 102 and an application processing unit 103.

Further, the TCP processing unit 102 of the receiving side apparatus 31 according to the present embodiment includes a TCP packet processing unit 104, a receiving buffer 107, a window size computing unit 108, a window updating timer unit 109, a reception rate determining unit 110, a previous RWIN storing unit 111, and an ACK delaying unit 112. Here, the receiving buffer 107, the window size computing unit 108, the window updating timer unit 109, and the previous RWIN storing unit 111 have the same functions and structure as that of the receiving buffer 67, the window size computing unit 68, the window updating timer unit 69, and the previous RWIN storing unit 71 of the second embodiment, respectively.

The TCP packet processing unit 104 includes an ACK generating unit 105 and a window updating notification generating unit 106. The window updating notification generating unit 106 has functions and a structure similar to that of the window updating notification generating unit 66 of the second embodiment.

As with the ACK generating unit of the first through fourth embodiments, the ACK generating unit 105 determines ACK numbers so as to generate ACK packets based on the sequence numbers of the received TCP packets. In an ACK packet, window size, that is, free space currently available for data reception, obtained by the window size computing unit 108 is also set. Further, the ACK generating unit 105 of the present embodiment passes the generated ACK packet to the ACK delaying unit 112. The ACK packet which has been passed is then transmitted.

The reception rate determining unit 110 has a function similar to that of the reception rate determining unit 70 of the second embodiment, and also a function to specify, for the ACK delaying unit 112, an ACK packet delaying time period and an amount of the ACK. An ACK packet delaying time period and an amount of the ACK are determined using the following expressions.

$$\text{ACK amount} = \text{updating amount} \cdots \text{(Expression 12)}$$

$$\text{ACK packet delaying time period} = \text{updating interval (above mentioned predetermined interval)} \cdots \text{(Expression 13)}$$

Note that the ACK amount and the ACK packet delaying time period can be computed using the capacity of the FIFO 36 and the transfer capability of the system bus 32, or the bit rate requested by the application, as with the expression for computing the updating amount and the updating interval.

The ACK delaying unit 112 has a function to generate a delay by temporarily holding the generated ACK packet before it is transmitted. The ACK packet delaying time period is determined by the reception rate determining unit 110.

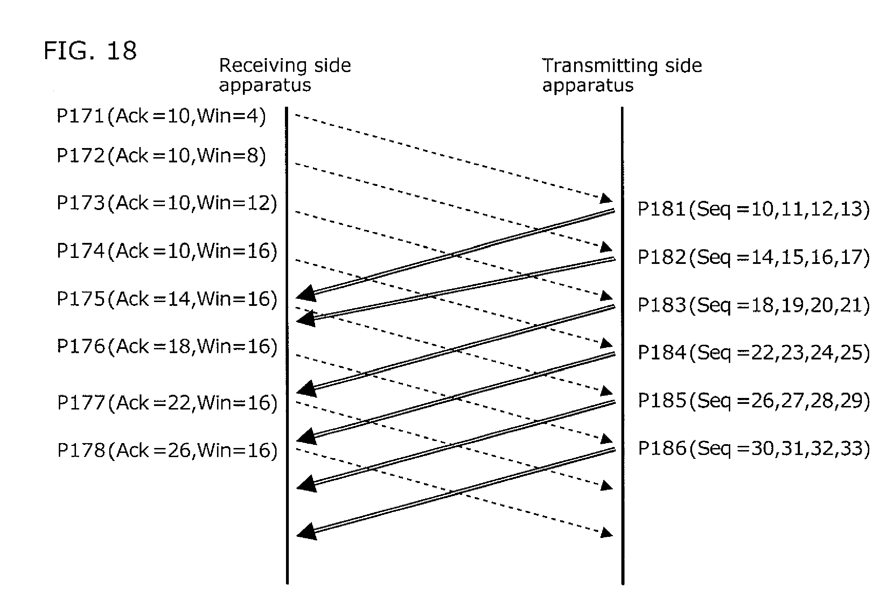

FIG. 18 is a sequence diagram illustrating transmissions of data packets and ACK packets according to the present embodiment. In the example of FIG. 18, broken lines represent ACK packets or window updating notifying packets which are transmitted by the receiving side apparatus 31, and solid lines represent data packets which are transmitted by a transmitting side apparatus 38. Further, the description is provided on assumptions that the length of a single packet is 1, the updating amount is 4, and the updating interval (the above mentioned predetermined interval) is T millisecond. Furthermore, in the figure, P175 (Ack = 14, Win = 16) represents an ACK packet having the ACK number 14 and the window size 16, whereas P183 (Seq =18, 19, 20, 21) represents data packets having the sequence numbers 18, 19, 20 and 21.

As in the second embodiment, after the initiation of the window updating notifying function, one RTT has elapsed and data packets P181 have been received, and therefore, the receiving side apparatus 31 is in a status where the window updating notifying function is under suspension.

When the ACK generating unit 105 of the receiving side apparatus 31 receives the data packets P181, it generates a corresponding ACK packet and passes to the ACK delaying unit 112. Having received the ACK packet, the ACK delaying unit 112 computes an ACK transmission time which is the time when a previous ACK packet (or a window updating notifying packet) was transmitted plus the ACK packet delaying time period. In the case where the current time is over the ACK delaying time and the ACK number has increased by the ACK amount compared to the previous ACK packet, the ACK delaying unit 112 immediately transmits the ACK packet. In FIG. 18, at the point in time when the data packets P181 are received, the ACK packet delaying time period has already passed since the previous ACK packet transmission time, and therefore the ACK packet P175 is transmitted immediately.

Here, it is assumed that the data packets P182 transmitted by the transmitting side apparatus 38 are received earlier than usual due to a change in the situation of the network 37. The ACK generating unit 105 of the receiving side apparatus 31 generates an ACK packet corresponding to the received data packets P182, and passes the generated ACK packet to the ACK delaying unit 112. The ACK delaying unit 112 which has received the ACK packet does not immediately transmit an ACK packet P176, because the computation of the ACK transmission time, that is, the time when the previous ACK packet P175 was transmitted plus the ACK delaying time period, shows that the current time has not reached the ACK transmission time. Thereafter, when the current time reaches the ACK transmission time, the ACK delaying unit 112 transmits the ACK packet P176 which has been put on hold at the ACK delaying unit 112.

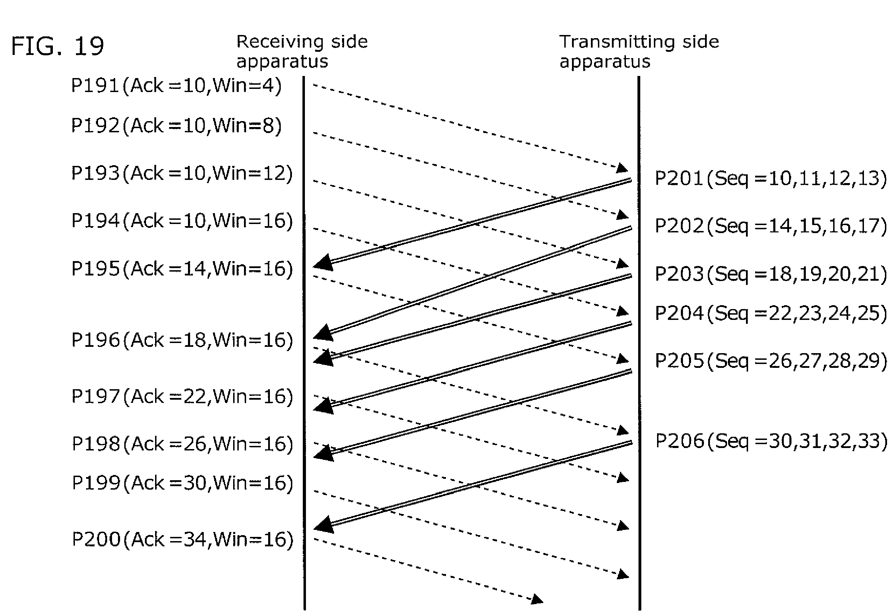

FIG. 19 is a sequence diagram illustrating another way of transmissions of data packets and ACK packets according to the present embodiment. In the example of FIG. 19, broken lines represent ACK packets or window updating notifying packets which are transmitted by the receiving side apparatus 31, and solid lines represent data packets which are transmitted by the transmitting side apparatus 38. Further, the description is provided on assumptions that the length of a single packet is 1, the updating amount is 4, and the updating interval (the above mentioned predetermined interval) is T millisecond.

As in the second embodiment, after the initiation of the window updating notifying function, one RTT has elapsed and data packets P201 have been received, and therefore, the receiving side apparatus 31 is in a status where the window updating notifying function is under suspension.

When the ACK generating unit 105 of the receiving side apparatus 31 receives the data packets P201, it generates a corresponding ACK packet and passes the generated ACK packet to the ACK delaying unit 112. Having received the ACK packet, the ACK delaying unit 112 computes an ACK transmission time which is the time when a previous ACK packet (or a window updating notifying packet) was transmitted plus the ACK packet delaying time period. In the case where the current time is over the ACK delaying time and the ACK number has increased by the ACK amount compared to the previous ACK packet, the ACK delaying unit 112 immediately transmits the ACK packet. In FIG. 19, at the point in time when the data packets P201 are received, the ACK packet delaying time period has already passed since the previous ACK packet transmission time, and therefore the ACK packet P195 is transmitted immediately.

Here, it is assumed that the data packets P202 transmitted by the transmitting side apparatus 38 are received later than usual due to a change in the situation of the network 37. The ACK generating unit 105 of the receiving side apparatus 31 generates an ACK packet corresponding to the received data packets P202, and passes the generated ACK packet to the ACK delaying unit 112. The ACK delaying unit 112 which has received the ACK packet immediately transmits an ACK packet P196, because the computation of the ACK transmission time, that is, the time when the previous ACK packet P195 was transmitted plus the ACK packet delaying time period, shows that the current time has already passed the ACK transmission time. In other words, in FIG. 19, because the ACK packet delaying time period has fully elapsed since the time when the previous ACK packet P195 was transmitted, the ACK packet P196 is immediately transmitted.

Further, the receiving side apparatus 31 receives data packets P203 transmitted by the transmitting side apparatus 38. The receiving side apparatus 31 generates an ACK packet corresponding to the received data packets P203, and passes the generated ACK packet to the ACK delaying unit 112. The ACK delaying unit 112 which has received the ACK packet does not transmit an ACK packet P197, because the computation of the ACK transmission time, that is, the time when the previous ACK packet P196 was transmitted plus the ACK packet delaying time period, shows that the current time has not reached the ACK transmission time. Thereafter, when the current time reaches the ACK transmission time, the ACK delaying unit 112 transmits the ACK packet P197 which has been put on hold at the ACK delaying unit 112. From there onward also, the ACK delaying unit 112 checks the ACK transmission time, and transmits ACK packets P198 and P199. Then at the point of an ACK packet P200, the data packet arriving intervals are back to the predetermined intervals, and thus ACK packets start to be transmitted immediately.

As described, in the present embodiment, it is possible to obtain effects that are similar to that of the first and second embodiments. In addition, in the present embodiment, even when fluctuations in the network cause changes in the data packet arriving intervals, it is possible to control the transmission rate of the transmitting side apparatus by controlling the transmission intervals at which ACK packets are transmitted. Moreover, by combining the present embodiment with the third or fourth embodiment, the effects obtained from the third or fourth embodiment can also be obtained.

(Sixth Embodiment)

A communication apparatus (receiving side apparatus) according to the present embodiment has a structure similar to that illustrated in FIG. 8 of the first embodiment where only the processing unit is different. Consequently, detailed descriptions of the constituent elements other than the processing unit are omitted.

Further, a processing unit of a receiving side apparatus 31 of the present embodiment has a structure similar to that of the processing unit 33c illustrated in FIG. 17 of the fifth embodiment. Therefore, the processing unit of the present embodiment shall be described below with reference to FIG. 17 in such a way that its difference from the fifth embodiment is made clear.

FIG. 17 illustrates an example of a processing structure centered around a TCP processing unit of the receiving side apparatus 31 according to the present invention. Hereinafter, descriptions of the functions of each constituent element shall be provided. It should be noted that the exemplary structure is the same as that of the fifth embodiment, and there are only slight differences in the functions. In the present embodiment, only the description of the difference from the fifth embodiment shall be provided.

The reception rate determining unit 110 of the present embodiment has the functions illustrated in the fifth embodiment and a function to update an ACK delaying time period and an ACK amount so as to notify the ACK delaying unit 112 in response to a request for a change in the reception rate.

The ACK delaying unit 112 of the present embodiment has the functions illustrated in the fifth embodiment and a function to receive the ACK delaying time period and the ACK amount which have been determined by the reception rate determining unit 110 based on the request for a change in the reception rate, and to reflect on an ACK packet to be transmitted.

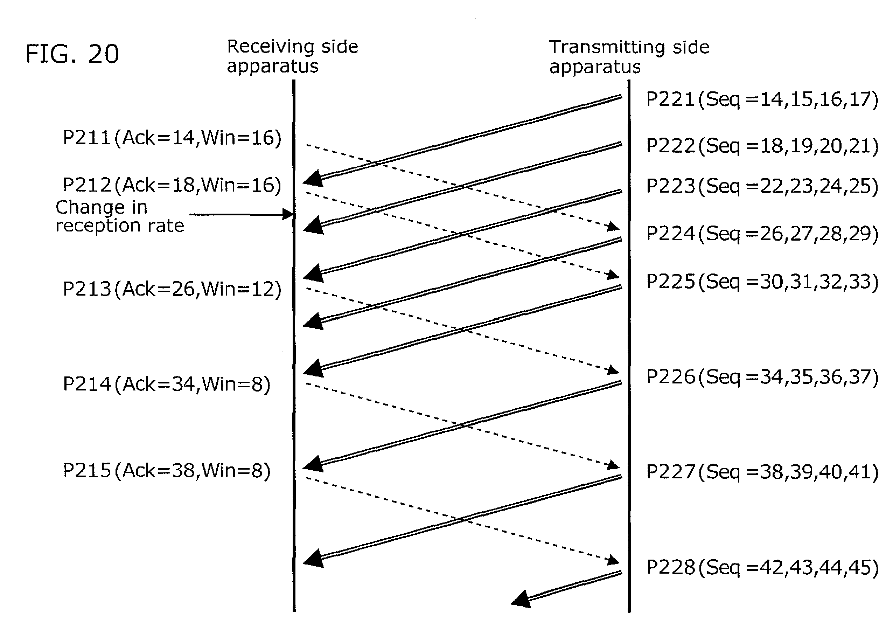

FIG. 20 is a sequence diagram illustrating transmissions of data packets and ACK packets according to the present embodiment. In the example of FIG. 20, broken lines represent ACK packets or window updating notifying packets which are transmitted by the receiving side apparatus 31, and solid lines represent data packets which are transmitted by a transmitting side apparatus 38. Further, the description is provided on assumptions that the length of a single packet is 1, the updating amount is 4, and the updating interval (the above mentioned predetermined interval) is T millisecond, until one RTT elapses after window updating notification is initiated. Furthermore, in the figure, P211 (Ack = 14, Win = 16) represents an ACK packet having the ACK number 14 and the window size 16, whereas P222 (Seq =18, 19, 20, 21) represents data packets having the sequence numbers 18, 19, 20 and 21.

The receiving side apparatus 31 receives the data packets P221 and transmits an ACK packet P212. The processing described thus far performed by the receiving side apparatus 31 is similar to the data transmission and reception of the fifth embodiment. Subsequently, it is assumed that the receiving side apparatus 31 desires to change the reception rate at the point in time shown in the figure with the notation "Change in reception rate". The present embodiment assumes that it is desired to change the reception interval (the above mentioned predetermined interval) to be twice as long, that is, 2T milliseconds. The request for a change in the rate is notified to the reception rate determining unit 110. The reception rate determining unit 110 which has received the request for a change in the reception rate instructs the ACK delaying unit 112 to make the ACK packet delaying time period twice as long, since it is desired to make the reception interval twice as long.

Thereafter, when the receiving side apparatus 31 receives data packets P222, the ACK generating unit 105 generates an ACK packet and passes the generated ACK packet to the ACK delaying unit 112. The ACK delaying unit 112 which has received the ACK packet adds the ACK packet delaying time period to the time when the previous ACK was transmitted, so as to compute an ACK packet transmission time. The ACK transmission time computed at this point is ahead of the ACK transmission time computed when the request for the change in the reception rate is not received. For this reason, at the point in time when the data packets P222 are received, the current time has not yet reached the ACK transmission time, and therefore, the ACK delaying unit 112 of the receiving side apparatus 31 does not immediately transmit an ACK packet.

Furthermore, when the receiving side apparatus 31 receives data packets P223, the ACK generating unit 105 generates an ACK packet and passes the generated ACK packet to the ACK delaying unit 112. The ACK delaying unit 112 which has received the ACK packet adds the ACK packet delaying time period to the time when the previous ACK was transmitted, so as to compute an ACK packet transmission time. The result of the computation shows that at the point in time when the data packets P223 are received, the current time reaches the ACK transmission time, and therefore, the ACK delaying unit 112 immediately transmits the ACK packet. Further, at this point, since the ACK packet corresponding to the previous data packets P222 are put on hold, the ACK delaying unit 112 subtracts the data amount 4 corresponding to the packet on hold from the window size, and transmits an ACK packet P213 with the window size 12. From there onward, in the similar manner, the receiving side apparatus 31 receives data packets P224 and P225, and transmits an ACK packet P214. As described, it is possible to change the transmission intervals, at which the transmitting side apparatus 38 transmits data packets, to be twice as long.

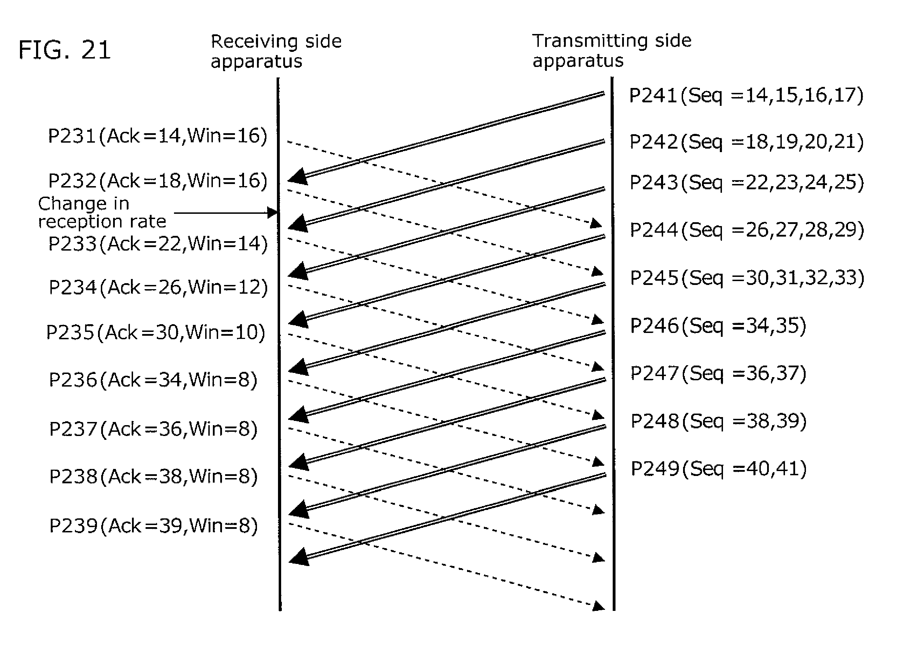

FIG. 21 is a sequence diagram illustrating another way of transmissions of data packets and ACK packets according to the present embodiment. In the example of FIG. 21, broken lines represent ACK packets or window updating notifying packets which are transmitted by the receiving side apparatus 31, and solid lines represent data packets which are transmitted by a transmitting side apparatus 38. Further, the description is provided on assumptions that the length of a single packet is 1, the updating amount is 4, and the updating interval (the above mentioned predetermined interval) is T millisecond, until one RTT elapses after the window updating notification is initiated.

The receiving side apparatus 31 receives data packets P241 and transmits an ACK packet P232. The processing described thus far performed by the receiving side apparatus 31 is similar to the data transmission and reception of the fifth embodiment. Subsequently, it is assumed that the receiving side apparatus 31 desires to change the reception rate at the point in time shown in the figure with the notation "Change in reception rate". The present embodiment assumes that it is desired to halve the updating amount. The request for the change in the rate is notified to the reception rate determining unit 110. The reception rate determining unit 110 which has received the request for the change in the reception rate instructs the ACK delaying unit 112 to halve the updating amount, since it is desired to halve the updating amount. In other words, in the present embodiment, the updating amount is changed to 2.

Thereafter, when the receiving side apparatus 31 receives data packets P242, the ACK generating unit 105 generates an ACK packet and passes the generated ACK packet to the ACK delaying unit 112. The ACK delaying unit 112 which has received the ACK packet adds the ACK packet delaying time period to the time when the previous ACK was transmitted, so as to compute an ACK packet transmission time. The ACK transmission time computed here has reached the current time at the point when the data packets P242 are received, and therefore, the ACK delaying unit 112 immediately transmits an ACK packet P233. However, due to the request for the change in the reception rate, the updating amount of the ACK delaying unit 112 is made half. Therefore, since the ACK amount of the ACK packet which is a current packet be transmitted is 4 for the sequence numbers 18, 19, 20 and 21, and the updating amount is 2, the ACK delaying unit 112 sets the window size of the ACK packet P233 to 14 in accordance with (Expression 14), and then transmits the ACK packet P233.

$$\text{Window size} = \text{window size stored in the previous RWIN}$$
$$\text{storing unit 111} - (\text{ACK amount} - \text{updating amount}) \cdots (\text{Expression} \ 14)$$

In the similar manner, having received data packets P243, P244 and P245, the receiving side apparatus 31 transmits ACK packets P234, P235 and P236 while reducing the window size by 2 at a time.

Then, the receiving side apparatus 31 receives data packets P246 from the transmitting side apparatus 38. Here, the data packets P246 correspond to two data packets respectively having the sequence numbers 34 and 35, and thus the ACK amount is 2. Therefore, in accordance with (Expression 14), the receiving side apparatus 31 transmits an ACK packet P237 indicating the window size 8 that is the same as the previous window size. As described, it is possible to halve the transmission amount of data packets transmitted by the transmitting side apparatus 38.

As described, in the present embodiment, it is possible to obtain effects that are similar to that of the first, second and fifth embodiments. In addition, in the present embodiment, it is possible to dynamically change the transmission rate at which the transmitting side apparatus transmits data packets, by controlling the ACK transmission intervals and the window size in accordance with changes in the reception state of the receiving side apparatus. Moreover, by combining the present embodiment with the third or fourth embodiment, the effects obtained from the third or fourth embodiment can also be obtained.

(Seventh Embodiment)

A communication apparatus (receiving side apparatus) according to the present embodiment has a structure similar to that illustrated in FIG. 8 of the first embodiment where only the processing unit is different. Consequently, detailed descriptions of the constituent elements other than the processing unit are omitted.

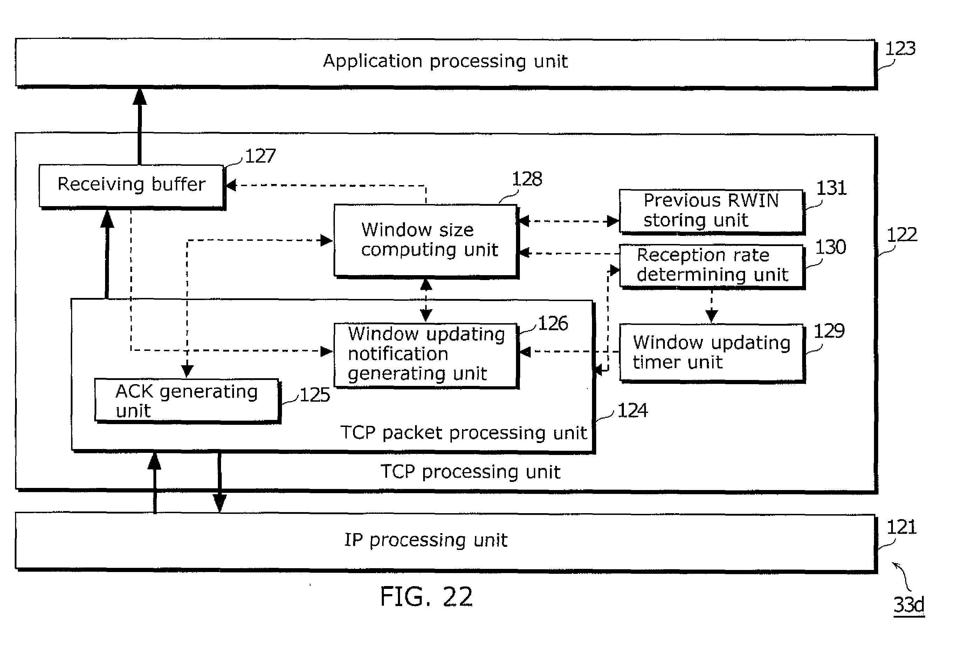

FIG. 22 is a structure diagram illustrating an example of a functional structure of a processing unit of a receiving side apparatus 31 according to the present embodiment. The receiving side apparatus 31 of the present embodiment has a processing unit 33d instead of the processing unit 33 of the first embodiment. Hereinafter, descriptions of the functions of each constituent element shall be provided. It should be noted that the processing unit 33d has functions that are additional to the processing unit 33 of the first embodiment, and thus only the description of the difference from the first embodiment shall be provided.

The processing unit 33d includes an IP processing unit 121, a TCP processing unit 122, and an application processing unit 123.

Further, the TCP processing unit 122 of the receiving side apparatus 31 according to the present embodiment includes a TCP packet processing unit 124, a receiving buffer 127, a window size computing unit 128, a window updating timer unit 129, a reception rate determining unit 130, and a previous RWIN storing unit 131. Here, the receiving buffer 127, the window size computing unit 128, the window updating timer unit 129, and the previous RWIN storing unit 131 have the same functions and structures as that of the receiving buffer 47, the window size computing unit 48, the window updating timer unit 49, and the previous RWIN storing unit 51 of the first embodiment, respectively.

The TCP packet processing unit 124 includes an ACK generating unit 125 and a window updating notification generating unit 126. Such a TCP packet processing unit 124 has the functions of the TCP packet processing unit 44 illustrated in the first embodiment, and further has a function to notify the reception rate determining unit 130 that the amount of received data packets has reached the updating amount, when the updating amount has been notified by the reception rate determining unit 130 and the amount of the successive received data packets has reached the updating amount.

The reception rate determining unit 130 has the functions of the reception rate determining unit 130 illustrated in the first embodiment. Further, the reception rate determining unit 130 has a function to notify the TCP packet processing unit 124 of an updating amount and to receive notification from the TCP packet processing unit 124 that the amount of the received data packets has reached the updating amount, when the amount of the successive received data packets has reached the updating amount. Furthermore, having received the notification that the updating amount has been reached, the reception rate determining unit 130 computes the updating amount and a predetermined interval using one of (Expression 3) to (Expression 8), and notifies the window size computing unit 128 and the window updating timer unit 129 of the computed value.

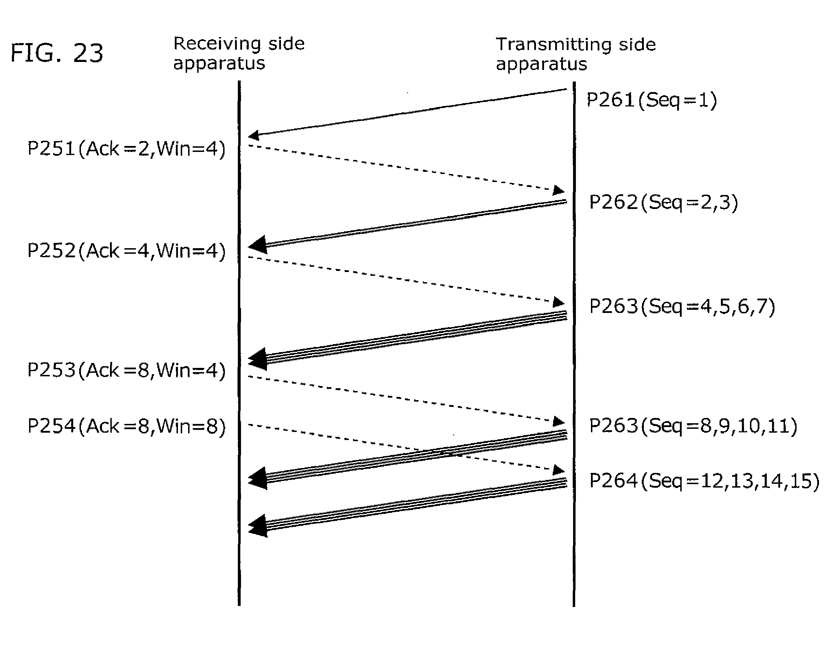

FIG. 23 is a sequence diagram illustrating transmissions of data packets and ACK packets according to the present embodiment. In the example of FIG. 23, broken lines represent ACK packets or window updating notifying packets which are transmitted by the receiving side apparatus 31, and solid lines represent data packets which are transmitted by a transmitting side apparatus 38. Further, the description is provided on assumptions that the length of a single packet is 1, the updating amount is 4, and the updating interval (the above mentioned predetermined interval) is T millisecond. Furthermore, in the figure, P251 (Ack = 2, Win = 4) represents an ACK packet with the ACK number 2 and the window size 4, whereas P261 (Seq = 1) represents a data packet with the sequence number 1.

The transmitting side apparatus 38 has a function called "slow start" for gradually increasing the transmission data amount. Therefore, the number of transmission data packets transmitted by the transmitting side apparatus 38 increases at every RTT; 1 packet (P261), 2 packets (P262) and 4 packets (P263). Until the data packets P262 are received, the amount of data packets which are successively transmitted by the transmitting side apparatus 38 does not reach the updating amount, and thus the receiving side apparatus 31 does not perform the window updating notifying function.

Then, the receiving side apparatus 31 receives data packets P263. The receiving side apparatus 31 which has received the data packets P263 generates an ACK packet P253 corresponding to the data packets P263, and transmits the generated ACK packet P253. Also, in the receiving side apparatus 31, the TCP packet processing unit 124 notifies the reception rate determining unit 130 that the updating amount has been reached. The reception rate determining unit 130 which has been notified that the updating amount has been reached notifies the window size computing unit 128 of the updating amount (4 in the present embodiment), prompts the window updating timer unit 129 to activate the window updating timer, and initiates the window updating notifying function. The transmitting side apparatus 38 which has received an ACK packet P253 transmits a subsequent data packet having the sequence numbers 8, 9, 10, and 11 since the window size of the received ACK packet P253 is 4.

Next, having initiated the window updating notifying function, when T millisecond, the predetermined interval, elapses after transmitting the ACK packet P253, the receiving side apparatus 31 adds the updating amount 4 to the previously notified window size 4 in accordance with (Expression 1), sets the window size of the window updating notifying packet to 8, and transmits the window updating notifying packet to the transmitting side apparatus 38 (P254). The transmitting side apparatus 38 which has received the ACK packet P254 now can transmit eight data packets including the already transmitted data packets having the sequence numbers 8, 9, 10 and 11, since the window size of the received ACK packet P254 is 8. For this reason, the transmitting side apparatus 38 transmits data packets P264, which are subsequent to the data packets P263, having the sequence numbers 12, 13, 14 and 15.

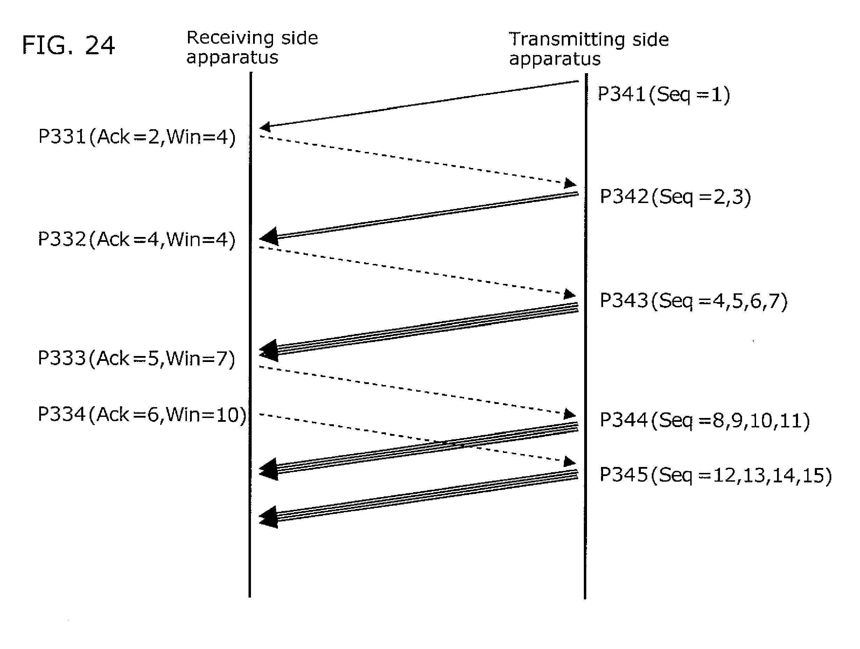

As described, in the present embodiment, it is possible to obtain an effect similar to that of the first embodiment, and to control, by the receiving side apparatus, the transmission rate of the transmitting side apparatus even in the case where the transmitting side apparatus performs the slow start function. Moreover, even in the case of data transmission and reception illustrated in FIG. 24 described below, it is possible to obtain an effect similar to the above described effect.

FIG. 24 is a sequence diagram illustrating another way of transmissions of data packets and ACK packets according to the present embodiment. In the example of FIG. 24, broken lines represent ACK packets or window updating notifying packets which are transmitted by the receiving side apparatus 31, and solid lines represent data packets which are transmitted by the transmitting side apparatus 38. Further, the description is provided on assumptions that the length of a single packet is 1, the updating amount is 4, and the updating interval (the above mentioned predetermined interval) is T millisecond.

Here, the data transmission and reception between the receiving side apparatus 31 and the transmitting side apparatus 38 is performed in a similar manner as in the data transmission and reception illustrated in FIG. 23 until data packets P343 are received. Next, when the data packets P343 are received, the TCP packet processing unit 124 of the receiving side apparatus 31 notifies the reception rate determining unit 130 that the updating amount has been reached. The reception rate determining unit 130 which has been notified that the updating amount has been reached notifies the window size computing unit 128 of the updating amount (4 in the present embodiment), prompts the window updating timer unit 129 to activate the window updating timer, and initiates the window updating notifying function.

Then, the receiving side apparatus 31 which has initiated the window updating notifying function updates the window size in accordance with the following Expression 14.

$$\text{Window size = previously notified window size +}$$
$$\text{updating amount } - \text{ ACK number increased amount } \cdots \text{(Expression 14)}$$

It should be noted that in the present embodiment, the description is provided with assumptions that the previously notified window size is 4, the updating amount is 4, and the ACK number increased amount is 1.

The receiving side apparatus 31 which has received the data packets P343 transmits, after receiving the data packet, an ACK packet P333 to the transmitting side apparatus using the window updating notifying function. The ACK packet P333 here indicates the ACK number 5 since the ACK number increased amount is 1, and indicates the window size 7 as a result of (Expression 14). The transmitting side apparatus 38 which has received the ACK packet P333 transmits data packets P344 having the sequence numbers 8, 9, 10, and 11 that are after the sequence number 5 and are not yet transmitted, since the window size and the ACK number of the received ACK packet P333 are respectively 7 and 5.

Next, when T millisecond, the predetermined interval, elapses after the transmission of the ACK packet P333, the receiving side apparatus 31 adds the updating capacity 4 to the previously notified window size 7, and computes the window size 10 based on the ACK number increased amount 1 in accordance with (Expression 14), using the window updating notifying function. The receiving side apparatus 31 transmits an ACK packet P334 in which the computed window size 10 is set to the transmitting side apparatus 38. The transmitting side apparatus 38 which has received the ACK packet P334 transmits data packets P345 having the sequence numbers 12, 13, 14, and 15 that are after the sequence number 6 and are not yet transmitted, since the window size and the ACK number of the received ACK packet P334 are respectively 10 and 6.

As described, in the present embodiment, it is possible to obtain an effect similar to that of the first embodiment, and to control, by the receiving side apparatus, the transmission rate of the transmitting side apparatus even in the case where the transmitting side apparatus performs the slow start function. In addition, by combining the present embodiment with an embodiment such as the second, third or fourth embodiment, the effects of each of the embodiments can also be obtained.

In the present embodiment, the window updating notifying function is initiated when the amount of data packets successively transmitted by the transmitting side apparatus 38 reaches the updating amount. It should be noted, however, that the window updating notifying function may be initiated when a predetermined time period elapses or when the number of all data packets transmitted by the transmitting side apparatus 38 reaches a predetermined number.

(Eighth Embodiment)

A communication apparatus (receiving side apparatus) according to the present embodiment has a structure similar to that illustrated in FIG. 8 of the first embodiment where only the processing unit is different. Consequently, detailed descriptions of the constituent elements other than the processing unit are omitted.

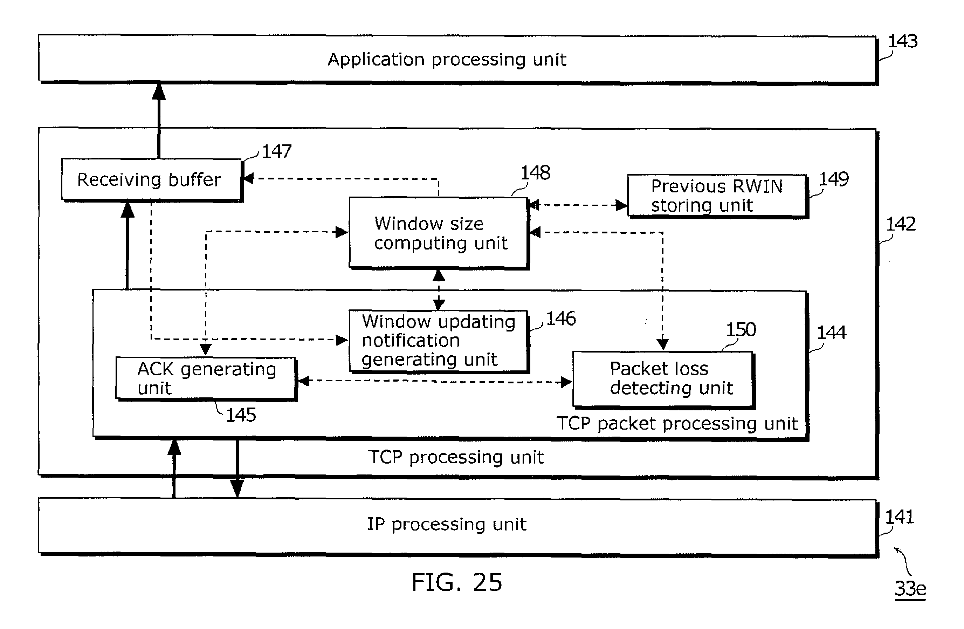

FIG. 25 is a structure diagram illustrating an example of a functional structure of a processing unit of a receiving side apparatus 31 according to the present embodiment. The receiving side apparatus 31 of the present embodiment has a processing unit 33e instead of the processing unit 33 of the first embodiment.

The processing unit 33e includes an IP processing unit 141, a TCP processing unit 142, and an application processing unit 143. In the present embodiment, the TCP processing unit 142 is included as a program executed by the processing unit 33e. Note, however, that it may be implemented as an LSI, and the like. Further, in the figure, the solid lines represent data flows of packet transmission and reception, whereas the broken lines represent flows related to transmissions of control information.

The TCP processing unit 142 of the receiving side apparatus 31 includes a TCP packet processing unit 144, a receiving buffer 147, a window size computing unit 148, and a previous RWIN storing unit 149.

The TCP packet processing unit 144 has a function for transmitting and receiving TCP packets. The TCP packet processing unit 144 specifies an application for a received packet, and stores the packet in the receiving buffer 147 so as to pass it to the application. Further, the TCP packet processing unit 144 has a function of constructing TCP packets, passing them to the IP processing unit 141, and transmitting them as TCP/IP packets. Furthermore, the TCP packet processing unit 144 includes an ACK generating unit 145, a window updating notification generating unit 146, and a packet loss detecting unit 150.

The ACK generating unit 145 determines an ACK number based on the sequence number of the received TCP packet so as to generate an ACK packet. In an ACK packet, window size, that is, free space currently available for reception, obtained from the window size computing unit 148 is also set.

When there is an increase in the availability of the receiving buffer 147, the window updating notification generating unit 146 generates a window updating notifying packet. In addition, the window updating notification generating unit 146 sets the window size obtained from the window size computing unit 148 in the window updating notifying packet.

The packet loss detecting unit 150 has a function to detect a missing TCP packet and/or a loss of a TCP packet. Further, the packet loss detecting unit 150 has a function to notify the window size computing unit 148 that a loss has occurred.

The receiving buffer 147 has a function to temporarily hold received data to be passed to the application processing unit 143. The receiving buffer 147 can store data corresponding to RWIN__MAX at maximum, and passes the data temporarily held in the receiving buffer 147 to the application processing unit 143 in sequence in accordance with a request from the application processing unit 143. Also, when the window size has increased because data has been passed to the application processing unit 143, the receiving buffer 147 notifies the window updating notification generating unit 146 that the window size has increased.

The window size computing unit 148 has a function to compute a value which is to be notified to a transmitting side apparatus 38 as a window size. In other words, the window size computing unit 148 of the present embodiment computes the window size based on the packet loss notified by the packet loss detecting unit 150. The window size is computed using the following expression.

$$\text{Window size} = \text{previously notified window size} - \text{lost data amount out of previously notified window size} \cdots (\text{Expression 15})$$

Moreover, in the case where a packet loss is not detected during a predetermined time period H, window size may be computed using the following expression.

$$\text{Window size} = \text{previously notified window size} + \text{updating amount} \cdots (\text{Expression 16})$$

Note that the updating amount may be a single MSS or plural MSSs.

The previous RWIN storing unit 149 has a function to record and hold the window size used when the previous window updating notification was made (hereinafter referred to as previous window size). The previous RWIN storing unit 149 passes the recorded and held previous window size to the window size computing unit 148, receives the result of computation performed by the window size computing unit 148, and updates the previous window size so as to record and hold the updated one.

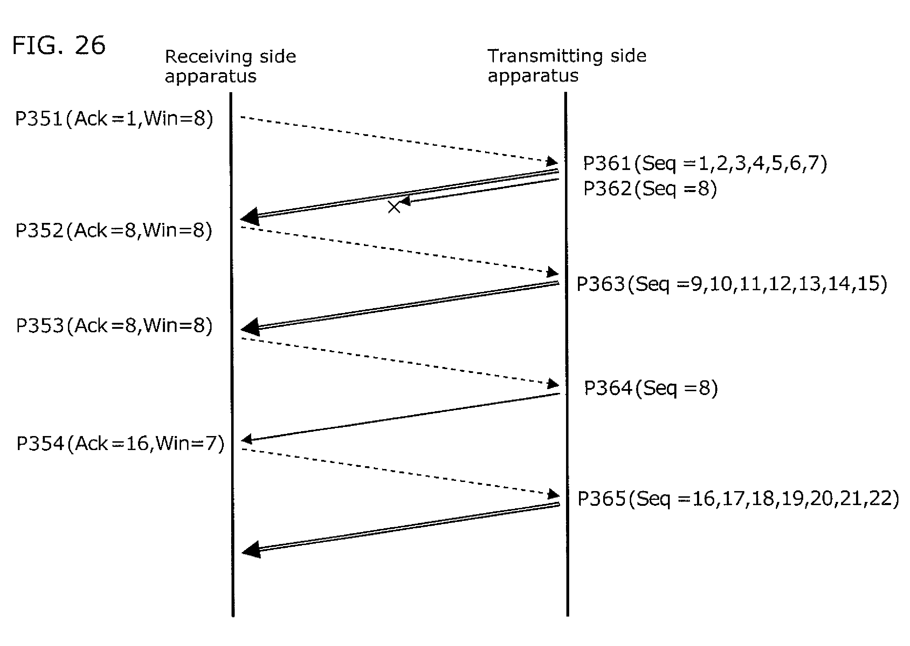

FIG. 26 is a sequence diagram illustrating transmissions of data packets and ACK packets according to the present embodiment. In the example of FIG. 26, broken lines represent ACK packets or window updating notifying packets which are transmitted by the receiving side apparatus 31, and solid lines represent data packets which are transmitted by the transmitting side apparatus 38. Further, in order to simplify the description, the description is provided on assumptions that the length of a single packet is 1, the updating amount is 2, and the predetermined time period is H millisecond. Furthermore, in the figure, P351 (Ack = 1, Win = 8) indicates an ACK packet having the ACK number 1 and the window size 8, whereas P362 (Seq = 8) indicates a data packet having the sequence number 8.

Through establishment of a connection with the transmitting side apparatus 38, for example, the receiving side apparatus 31 comes to be in a status to receive data transmitted from the transmitting side apparatus 38. Here, the receiving side apparatus 31 notifies the transmitting side apparatus 38 of the window size 8 (P351). The transmitting side apparatus 38 transmits data packets P361 and P362 to the receiving side apparatus 31 based on the window size 8. It is assumed here, however, that the data packet P362 is lost due to congestion of the network 37, a lack of capability of a relay apparatus, or the like. The receiving side apparatus 31 to which the data packet P362 did not reach transmits an ACK packet P352 corresponding to sequence numbers up to the sequence number which has arrived. The transmitting side apparatus 31 which has received the ACK packet P352 transmits data packets P363 having a subsequent sequence number.

Having received the data packets P363, the receiving side apparatus 31 detects that the sequence number 8 has been lost, and transmits an ACK packet P353 (hereinafter referred to as duplicate ACK packet) which is similar to the previously transmitted ACK packet P352, corresponding to the number of received packets (packets having sequence numbers 9 to 15). Note that in the present embodiment, 7 duplicate ACK packets P353 are transmitted. Having received the duplicate ACK packet, the transmitting side apparatus 38 notices that the sequence number 8 has been lost, and retransmits a data packet P364 having the sequence number 8, using the fast retransmission function.

The receiving side apparatus 31 which has received the retransmitted data packet P364 reduces the window size using (Expression 15), and transmits an ACK packet P354 with the window size 7. The transmitting side apparatus 38 which has received the ACK packet P354 transmits data packets P365 corresponding to 7 packets, since the window size set in the ACK packet is 7.

In other words, in the case where the window size set in the ACK packet P354 is 8, the transmitting side apparatus 38 tries to transmit data packets with 8 packets to the receiving side apparatus 31 again as in the case where the data packets P361 and P362 are transmitted. As a result, there is a higher possibility that a packet loss occurs again.

However, in the present embodiment, since the window size is set to 7 in the ACK packet P354, it is possible to prevent a packet loss from occurring again.

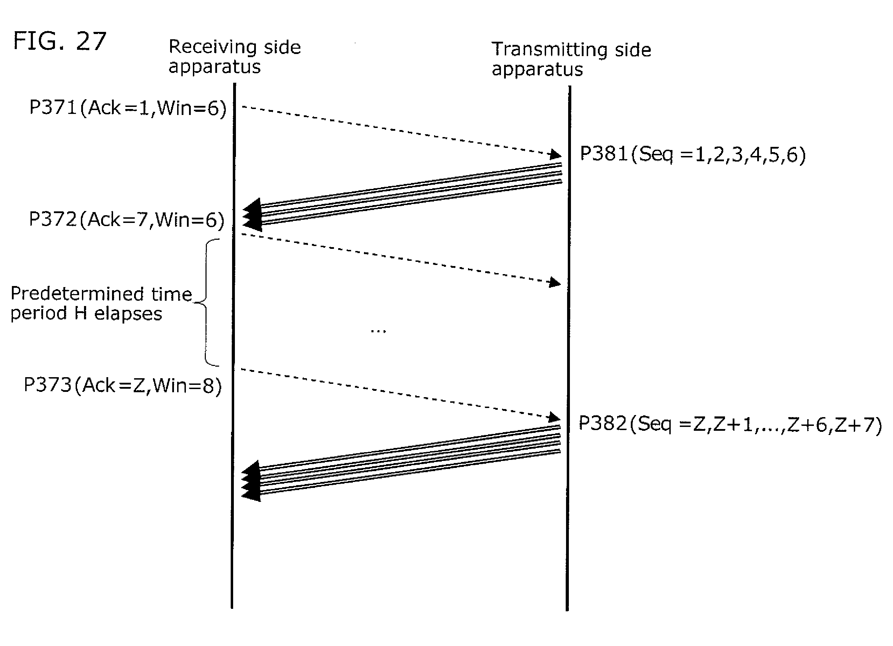

FIG. 27 is a sequence diagram illustrating another way of transmissions of data packets and ACK packets according to the present embodiment. In the example of FIG. 27, broken lines represent ACK packets or window updating notifying packets which are transmitted by the receiving side apparatus 31, and solid lines represent data packets which are transmitted by the transmitting side apparatus 38. Further, in order to simplify the description, the description is provided on assumptions that the length of a single packet is 1, the updating amount is 2, and the predetermined time period is H millisecond.

Through establishment of a connection with the transmitting side apparatus 38, for example, the receiving side apparatus 31 comes to be in a status to receive data transmitted from the transmitting side apparatus 38. Here, the receiving side apparatus 31 notifies the transmitting side apparatus 38 of the window size 6 (P371). The transmitting side apparatus 38 transmits data packets P381 to the receiving side apparatus 31 based on the window size 6. The receiving side apparatus 31 which has received the data packets P381 transmits to the transmitting side apparatus 38 an ACK packet P372 which indicates the ACK number 7 and the window size 6. Such data transmission and reception between the receiving side apparatus 31 and the transmitting side apparatus 38 is repeatedly and continuously performed for a while.

Then, when the predetermined time period H elapses after reception of data packets has started, the receiving side apparatus 31 increases the window size by the updating amount using (Expression 16), and notifies the window size as 8 (P373). As a result, the transmitting side apparatus 38 transmits data packets P382 appropriate to the window size 6.

In other words, when a packet loss does not occur during the predetermined time period H, there is a higher possibility that the transmitting side apparatus 38 can transmit more packets while the occurrence of packet loss is suppressed. Therefore, in the present embodiment, when a packet loss does not occur during the predetermined time period H, a larger window size is set, and therefore, it is possible to improve data transfer efficiency.

As described, in the present embodiment, it is possible to prevent successive packet losses by dynamically changing the window size in accordance with the packet loss status. Furthermore, by detecting that there is no occurrence of packet losses, and increasing the window size, more efficient data transfer can be achieved.

(Ninth Embodiment)

A communication apparatus (receiving side apparatus) according to the present embodiment has a structure similar to that illustrated in FIG. 8 of the first embodiment where only the processing unit is different. Consequently, detailed descriptions of the constituent elements other than the processing unit are omitted.

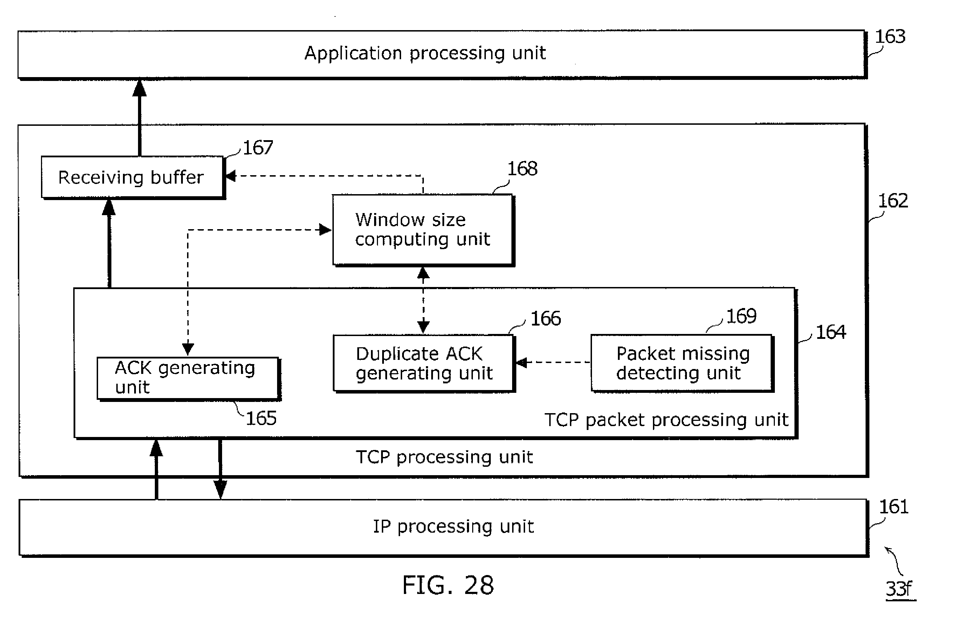

FIG. 28 is a structure diagram illustrating an example of a functional structure of a processing unit of a receiving side apparatus 31 according to the present embodiment. The receiving side apparatus 31 of the present embodiment has a processing unit 33e instead of the processing unit 33 of the first embodiment.

The processing unit 33f includes an IP processing unit 161, a TCP processing unit 162 and an application processing unit 163. In the present embodiment, the TCP processing unit 162 is included as a program executed by the processing unit 33f. Note, however, that it may be implemented as an LSI, and the like. Further, in the figure, the solid lines represent data flows of packet transmission and reception, whereas the broken lines represent flows related to transmissions of control information.

Further, the TCP processing unit 162 of the receiving side apparatus 31 includes a TCP packet processing unit 164, a receiving buffer 167, and a window size computing unit 168. Note that the receiving buffer 167 has the same functions and structure as that of the receiving buffer 47 of the first embodiment.

The TCP packet processing unit 164 has a function for transmitting and receiving TCP packets. The TCP packet processing unit 164 specifies an application for a received packet, and stores the packet in the receiving buffer 167 so as to pass it to the application. Further, the TCP packet processing unit 164 has a function of constructing TCP packets, passing them to the IP processing unit 161, and transmitting them as TCP/IP packets. In addition, the TCP packet processing unit 164 includes an ACK generating unit 165, a duplicate ACK generating unit 166 and a packet missing detecting unit 169.

The ACK generating unit 165 determines an ACK number based on the sequence number of the received TCP packet so as to generate an ACK packet. In an ACK packet, window size, that is, free space currently available for reception, obtained from the window size computing unit 168 is also set.

The duplicate ACK generating unit 166 has a function to generate a duplicate ACK packet and transmits the generated duplicate ACK packet, when it is notified by the packet missing detecting unit 169 that there is a missing reception packet. In the duplicate ACK packet, the window size obtained from the window size computing unit 168 is set.

The packet missing detecting unit 169 has a function to detect that a TCP packet is missing and/or there is a loss of a TCP packet. Furthermore, the packet missing detecting unit 169 notifies the duplicate ACK generating unit 166 that there has been a missing packet.

The window size computing unit 168 has a function to compute the window size based on the availability of the receiving buffer 167 and to notify the ACK generating unit 165 and the duplicate ACK generating unit 166 of the computed window size.

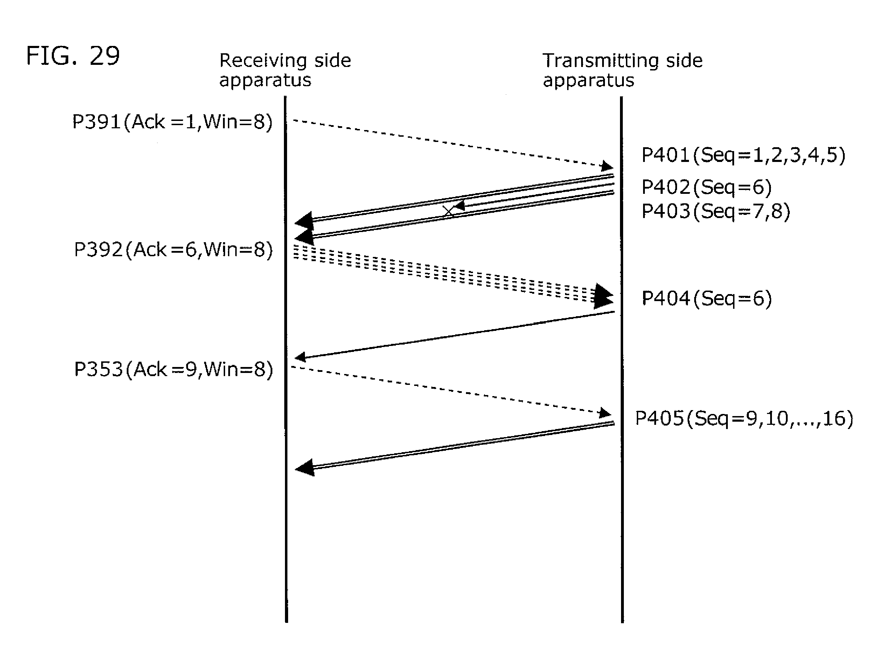

FIG. 29 is a sequence diagram illustrating transmissions of data packets and ACK packets according to the present embodiment. In the example of FIG. 29, broken lines represent ACK packets or window updating notifying packets which are transmitted by the receiving side apparatus 31, and solid lines represent data packets which are transmitted by a transmitting side apparatus 38.

Having received an ACK packet P391 from the receiving side apparatus 31, the transmitting side apparatus 38 transmits data packets P401, P402 and P403 to the receiving side apparatus P391. Here, it is assumed that among the data packets P401, P402 and P403 transmitted by the transmitting side apparatus 38, the data packet P402 is not received by the receiving side apparatus 31.

At this point, the receiving side apparatus 31 detects that a packet is missing, since the data packets P403 arrive. The receiving side apparatus 31 which has detected that a packet is missing immediately generates ACK packets P392 corresponding to a predetermined number, and transmits the generated ACK packets P392 to the transmitting side apparatus 38.

The transmitting side apparatus 38 which has received the ACK packets P392 corresponding to the predetermined number immediately retransmits a data packet P404 using the fast retransmission function.

As described, in the present embodiment, by transmitting to the transmitting side apparatus identical ACK packets corresponding to the predetermined number after a missing of a packet is detected, it is possible to prompt the transmitting side apparatus to immediately initiate the fast retransmission function, and is thus possible to quickly make a recovery from the packet missing.

(Tenth Embodiment)

With reference to the drawings, the present embodiment shall be described.

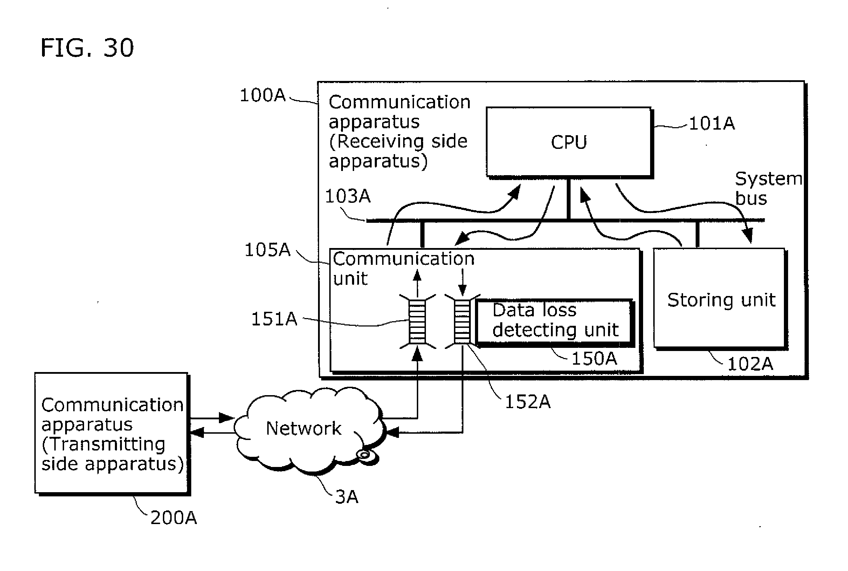

FIG. 30 is a diagram illustrating an example of structures of a network and a communication apparatus according to a tenth embodiment of the present invention. In FIG. 30, it is assumed that a communication apparatus 200A communicates with a communication apparatus 100A via a network 3A. The communication apparatus 100A and the communication apparatus 200A are apparatuses connected to the network 3A via a wired or wireless connection, and have a communication function. They are, for example, apparatuses having an Ethernet (®) interface (Personal Computers (PC) and home appliances having a network communication capability, for example). The network 3A is a network including a wired or wireless connection, an example of which includes a public network such as the Internet.

In the present embodiment, it is assumed that the communication apparatus 100A and the communication apparatus 200A establish a TCP connection between each other, and that data is transmitted from the communication apparatus 200A to the communication apparatus 100A. With such an assumption, in the data transmission via the TCP connection, the communication apparatus 200A which is the source of the transmission data is referred to as a transmitting side apparatus, and the communication apparatus 100A which is the destination of the transmission data is referred to as a receiving side apparatus. For example, it is assumed that this is such a case as where the receiving side apparatus which serves as a FTP client that performs operations based on an application program downloads a file from the transmitting side apparatus (PC, for example) which serves as a File Transfer Protocol (FTP) server, or a case where the receiving side apparatus which performs operations based on an application program handling electronic mails receives an electronic mail from the transmitting side apparatus which serves as a Post Office Protocol (POP) server.

The communication apparatus 100A includes a CPU 101A that is a processing unit, a storing unit 102A, a system bus 103A, and a communication unit 105A.

The communication unit 105A is hardware connected to the system bus 103A. The communication unit 105A has a function to transmit data passed from the CPU 101A to the network 3A, and a function to receive data from the network 3A and pass it to the CPU 101A.

In addition, the communication unit 105A includes a for-reception FIFO memory 151A that temporarily holds the data received from the network 3A, and a for-transmission FIFO memory 152A that temporarily holds the data passed from the CPU 101A. Further, the communication unit 105A includes a data loss detecting unit 150A that detects data loss caused when the data received from the network 3A overflows the for-reception FIFO memory 151A.

It should be noted that the data loss detecting unit 150A may notify the CPU 101A of the occurrence of overrun only in the case where the protocol and the port number of the lost packet match the protocol and the port number of the packet in the current communication. Furthermore, the for-reception FIFO memory 151A and the for-transmission FIFO memory 152A may be shared for both transmission and reception.

The CPU 101A has a function to transport (read) the data stored in the for-reception FIFO memory 151A of the communication unit 105A to the storing unit 102A, and a function to transport (write) the data stored in the storing unit 102A to the for-transmission FIFO memory 152A of the communication unit 105A. Also, the CPU 101A performs processing of protocols including TCP, such as analysis of the data stored in the storing unit 102A and creation of data to be transmitted. Moreover, the CPU 101A has a function to execute a communication application program and other programs as needed, while utilizing the storing unit 102A.

Note that in the transport of data from the storing unit 102A to the for-transmission FIFO memory 152A of the communication unit 105A or from the for-reception FIFO memory 151A of the communication unit 105A to the storing unit 102A, there are cases where the communication apparatuses 100A and 200A are equipped with a separate Direct Memory Access (DMA) controller and transport data using the DMA controller instead of using the CPU. Furthermore, each protocol processing may be implemented by separate hardware instead of by the CPU 101A.

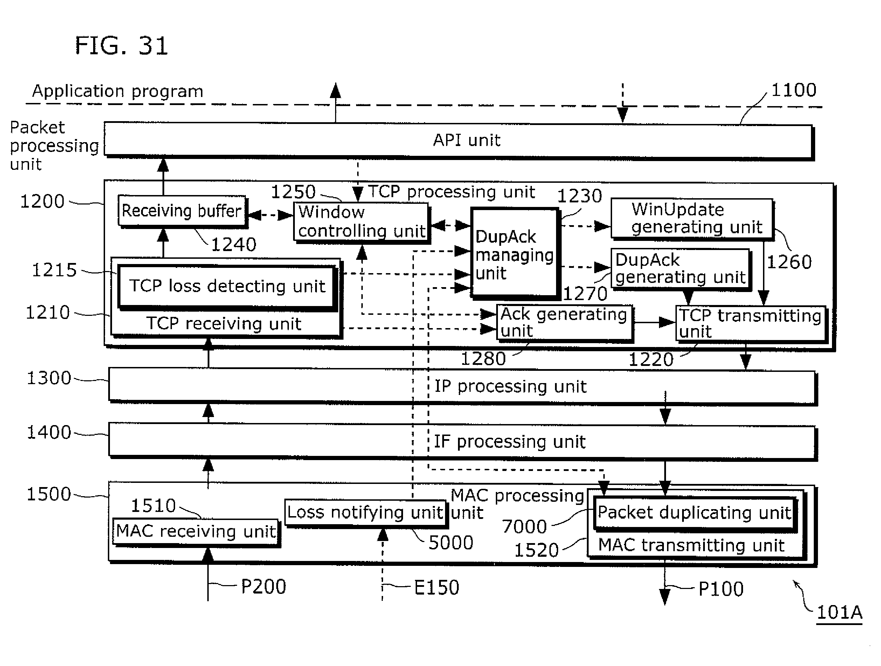

FIG. 31 is a structure diagram illustrating a functional structure of the CPU 101A of the communication apparatus 100A.

The functional structure illustrated in FIG. 31 can be implemented as software operating in the CPU 101A shown in FIG. 30. Note that the description of the structure diagram of FIG. 31 is centered around the reception of TCP data performed by the communication apparatus 100A serving as the receiving side apparatus according to the present invention, however, the communication apparatus 100A may be equipped with functional units for transmitting TCP data. Furthermore, the communication apparatus 200A may be a conventional communication apparatus, or a communication apparatus having a functional unit for reception processing to which the present invention is applied. In the following description of each functional unit, only the reception processing according to the present invention shall be described in detail, and the description of the functions and operations for transmission processing shall be omitted. Also, the description of other structures for implementing TCP communication that are not directly related to the present invention shall be omitted.

Note that FIG. 31 illustrates data flows using different types of lines. Solid lines are data flows showing flows of packets or data, whereas dotted lines are control flows showing flows of control signals (notification or parameter).

In FIG. 31, the detailed structure of a packet processing unit which processes packets to be received or transmitted is that the CPU 101A of the communication apparatus 100A includes an API unit 1100, a TCP processing unit 1200, an IP processing unit 1300, an IF processing unit 1400, and an MAC processing unit 1500. Further, the TCP processing unit 1200 has a receiving buffer 1240, a Window controlling unit 1250, a WinUpdate generating unit 1260, a DupAck generating unit 1270, an Ack generating unit 1280, a TCP transmitting unit 1220, a TCP receiving unit 1210, a TCP loss detecting unit 1215, and a DupAck managing unit 1230. Furthermore, the MAC processing unit 1500 has a loss notifying unit 5000, a packet duplicating unit 7000, an MAC transmitting unit 1520, and an MAC receiving unit 1510.

The API unit 1100 passes data between the TCP processing unit 1200 and an application program such as FTP, and makes notification when this processing is completed. In response to a request from the application program, the API unit 1100 requests the TCP processing unit 1200 to pass the data, converts or copies data passed from the TCP processing unit 1200 as needed so that the data can be processing by the application program, and notifies the TCP processing unit 1200 when this processing is completed.

The processing unit 1200 converts a TCP packet received from the IP processing unit 1300 into data to be passed to the API unit 1100. The TCP processing unit 1200 extracts, from a TCP packet, data included in one or plural TCP packets received from the IP processing unit 1300, holds the extracted data, and passes appropriate data in response to a request from the API unit 1100 for the passing of data. Further, the TCP processing unit 1200 generates an Ack which corresponds to the TCP packet received from the IP processing unit 1300, and passes it to the IP processing unit 1300. It should be noted that in the present embodiment, the description is provided with an assumption that an Ack is an ACK or an ACK packet of the above described first through ninth embodiments.

The IP processing unit 1300 extracts a TCP packet from an IP packet received from the IF processing unit 1400, and passes the extracted TCP packet to the TCP processing unit 1200. Also, the IP processing unit 1300 adds an IP header to the TCP packet received from the TCP processing unit 1200 so as to construct an IP packet, and passes the IP packet to the IF processing unit 1400.

The IF processing unit 1400 extracts an IP packet from an MAC frame received from the MAC processing unit 1500, and passes the extracted IP packet to the IP processing unit 1300. Further, the IF processing unit 1400 adds an MAC header to the IP packet received from the IP processing unit 1300 so as to construct an MAC frame, and passes the MAC frame to the MAC processing unit 1500.

The MAC processing unit 1500 passes the data received by the communication unit 105A illustrated in FIG. 30 to the IF processing unit 1400. This processing is for passing (reading) data from the for-reception FIFO memory 151A of the communication unit 105A of FIG. 30 to the storing unit 102A of FIG. 30. Further, the MAC processing unit 1500 passes the MAC frame received from the IF processing unit 1400 to the communication unit 105A. This processing is for passing (writing) data from the storing unit 102A of FIG. 30 to the for-transmission FIFO memory 152A of the communication unit 105A.

Hereinafter, with reference to FIG. 31, the detailed structures of the above mentioned TCP processing unit 1200 and the MAC processing unit 1500 shall be described.

The receiving buffer 1240 of the TCP processing unit 1200 is a buffer region for managing data received from the TCP receiving unit 1210. The actual data managed is placed in the storing unit 102A of FIG. 30. The receiving buffer 1240 has a function to pass the managed data to the API unit 1100, and to open the buffer region in which the passed data has been held. Also, the receiving buffer 1240 has a function to notify the Window controlling unit 1250 of a usable buffer size, in response to an inquiry from the Window controlling unit 1250 about the usable buffer size.

The Window controlling unit 1250 computes Win using the usable buffer size obtained through the inquiry to the receiving buffer 1240, and holds the computed Win. It should be noted that in the present embodiment, the description is provided with an assumption that the Win refers to the window size of the above described first through ninth embodiments. Further, in response to inquiries from the DupAck managing unit 1230 and the ACK generating unit 1280, the Window controlling unit 1250 passes the Win it is managing to the DupAck managing unit 1230 and to the ACK generating unit 1280. Furthermore, having received notification from the API unit 1100 that the application processing is completed, the Window controlling unit 1250 computes Win using the usable buffer size obtained through the inquiry to the receiving buffer 1240, and passes the computed Win to the DupAck managing unit 1230.

In the case where the WinUpdate generating unit 1260 receives the Win from the DupAck managing unit 1230, it creates WindowUpdate (Ack for notifying the transmitting side apparatus that the receivable Win has increased, hereinafter referred to as WinUpdate), and passes the created WinUpdate to the TCP transmitting unit 1220.

The DupAck generating unit 1270 generates DupAck (Duplicate acknowledgement: Immediate acknowledgement) using DupAck information received from the DupAck managing unit 1230, and passes the generated DupAck to the TCP transmitting unit 1220. Note that the DupAck information includes Win and a sequence number (hereinafter referred to as Seq) that is an ACK number in the above described first through ninth embodiments. Further, a DupAck or a DupAck packet is equivalent to a duplicate ACK in the above described first through ninth embodiments.

In the case where the Ack generating unit 1280 receives Seq from the TCP receiving unit 1210, it creates an Ack based on the Win obtained through the inquiry to the Window controlling unit 1250 and the Seq received from the TCP receiving unit 1210, and passes the created Ack to the TCP transmitting unit 1220.

Note that in the present embodiment, each of the DupAck generating unit 1270 and the ACK generating unit 1280 is structured as the first packet generating unit which generates a DupAck or an Ack, that is, an acknowledgement packet.

The TCP transmitting unit 1220 sets TCP header information necessary for the TCP packet (DupAck or Ack) received from the DupAck managing unit 1230 or the ACK generating unit 1280, and passes the TCP packet to the IP processing unit 1300.

The TCP receiving unit 1210 includes a TCP loss detecting unit 1215 which examines whether or not the Seq of the TCP packet fits in the order. In the case where the Seq of the TCP packet received from the IP processing unit 1300 fits in the order (in the case where the TCP loss detecting unit 1215 does not detect a loss of a TCP packet), the TCP processing unit 1200 performs processing of extracting data from the TCP packets, and passes the extracted data to the receiving buffer 1240. Also, in the case where the Seq fits in the order, the TCP receiving unit 1210 passes the next Seq to the Ack generating unit 1280. It should be noted that the function to pass the next Seq to the Ack generating unit 1280 does not need to be performed every time. In such a case, the notification to the Ack generating unit 1280 is sent at a frequency of once in several times, or sent using Delayed Ack algorithm after a predetermined time period elapses by a timer of the system.

The TCP loss detecting unit 1215 examines the Seq of the TCP packet received by the TCP receiving unit 1210, and in the case where the Seq does not fit in the order, passes a Seq which has been expected to the DupAck managing unit 1230.

The DupAck managing unit 1230 holds, as the DupAck information, the Seq received from the TCP loss detecting unit 1215 and the Win obtained through inquiry to the Window controlling unit 1250. In addition, the DupAck managing unit 1230 passes the DupAck information to the DupAck generating unit 1270, and counts the number of times the DupAck information is passed as the number of DupAck transmissions.

Furthermore, in the case where the DupAck managing unit 1230 receives Win from the Window controlling unit 1250, it computes, based on the packet loss information received from the loss notifying unit 5000, the number of DupAck duplicates which is the predetermined number minus the number of DupAck transmissions held. In the case where the computed number of DupAck duplicates is equal to or greater than 1, the DupAck managing unit 1230 passes the DupAck information (Seq and Win) it is holding to the DupAck generating unit 1270 before passing the Win, received from the Window controlling unit 1250, to the WinUpdate generating unit 1260. Then, the DupAck managing unit 1230 notifies the computed number of DupAck duplicates in response to an inquiry from the packet duplicating unit 7000.Note that in the present embodiment, the description of the number of DupAck duplicates computed by the DupAck managing unit 1230 is provided using an example case where the number of DupAck duplicates is managed per packet.

Note that the number of DupAck duplicates may be managed per TCP connection or per communication apparatus as a whole, for example, instead of being managed per packet to be transmitted.

Further, having notified the packet duplicating unit 7000 of the number of DupAck duplicates, the DupAck managing unit 1230 deletes the packet loss information received from the packet loss notifying unit 5000, and further, resets the number of DupAck duplicates and the number of DupAck transmissions to initial values. The description is provided with an assumption that the initial value of the DupAck duplicates is 1. Also, the description is provided with an assumption that the initial value of the DupAck transmissions is 0.

The MAC processing unit 1500 includes the MAC receiving unit 1510, the MAC transmitting unit 1520, and the loss notifying unit 5000. Each unit shall be described in detail below.

The MAC receiving unit 1510 passes, to the IF processing unit 1400, an MAC frame (P200) read from the for-reception FIFO memory 151A of the communication unit 105A in FIG. 30. In other words, the MAC receiving unit 1510 is going to transport the data in the for-reception FIFO memory 151A of FIG. 30 to the storing unit 102A via the CPU 101A.

The MAC transmitting unit 1520 has the packet duplicating unit 7000. The MAC transmitting unit 1520 writes, to the for-transmission FIFO memory 152A of the communication unit 105A in FIG. 30, an MAC frame (P100) which has been received from the IF processing unit 1400 and which corresponds to the number of duplicates instructed by the packet duplicating unit 7000. In other words, the MAC transmitting unit 1520 is going to transport the data from the CPU 101A of FIG. 30 to the for-transmission FIFO memory 152A. Accordingly, the MAC transmitting unit 1520 duplicates the DupAck so as to write to the for-transmission FIFO memory 152A.

The packet duplicating unit 7000 makes an inquiry to the DupAck managing unit 1230, and based on the number of DupAck duplicates (N) obtained through the inquiry, instructs the MAC transmitting unit 1520 to transmit a corresponding MAC frame N times. Note that in the case where the communication unit 105A of FIG. 30 has a function to duplicate only the MAC frame corresponding to the number of DupAck duplicates (N) so as to transmit the duplicated MAC frame, the packet duplicating unit 7000 may only instruct that duplication and transmission are performed N times and that the transportation of data of a corresponding MAC frame is performed once.

It should be noted that in the present embodiment, the MAC transmitting unit 1520 and the packet duplicating unit 7000 are structured as the second packet generating unit which generates DupAcks, that is, data request packets.

The loss notifying unit 5000 receives a packet loss notification (E150) from the data loss detecting unit 150A of FIG. 30, and passes packet loss information to the DupAck managing unit 1230. Note that in the case where the packet loss notification (E150) includes an IP address, a protocol and a port number, the loss notifying unit 5000 also passes the IP address, the protocol and the port number as the packet loss information to the DupAck managing unit 1230. As a result, based on the IP address, the port number, and the like obtained from the loss notifying unit 5000, the DupAck managing unit 1230 identifies the transmitting side apparatus 200A as the target for prompting retransmission of a lost packet. In other words, the DupAck managing unit 1230 has an apparatus identifying unit.

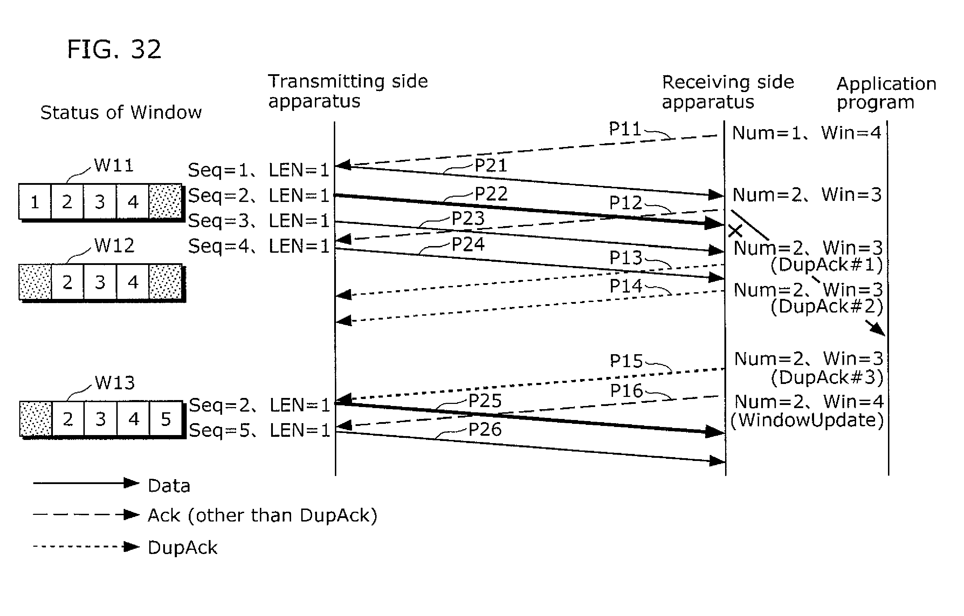

Hereinafter, a sequence of communication between the communication apparatuses according to the present embodiment shall be described below with reference to FIG. 32, using an example where the communication apparatus 100A operates as a receiving side apparatus and the communication apparatus 200A operates as a transmitting side apparatus.

FIG. 32 is a diagram illustrating a sequence of communication between the communication apparatuses according to the present embodiment. Note that the performance of the receiving side apparatus 100A is low (for example, the performance of the CPU 101A is 133 MHz). Further, in order to simplify the description, the length of a single packet (LEN), that is, the length of data stored in a single packet, is assumed to be 1 KByte, and the units and the values of Seq and Win are set accordingly. Furthermore, FIG. 32 illustrates a situation where the Win of the receiving side apparatus 100A is getting smaller. Moreover, in FIG. 32, the establishment of the connection between the transmitting side apparatus 200A and the receiving side apparatus 100A using TCP is omitted, and also, the sequence of communication from the point where the Win of the receiving side apparatus 100A is large, up to the point where the Win is small (Win = 4, refer to W11 in FIG. 32) is omitted.

As illustrated in FIG. 32, the receiving side apparatus 100A transmits an Ack (P12) to the transmitting side apparatus 200A in response to data of Seq = 1 (P21) received. This Ack includes, as parameters, the sequence number (Num = 2) of the packet to be requested next, and a receivable data amount (Win = 3) of the receiving side apparatus 100A. The value of Win is 3 (W12) because the reception processing in an application program associated with the data of Seq = 1 has not yet completed and the receivable data amount has decreased. In the example of FIG. 32, the data of Seq = 2 (P22) is lost before the TCP (the transport layer of the communication protocol) processing, during the reception processing of the receiving side apparatus 100A (loss of a packet has occurred). For this reason, the receiving side apparatus 100A does not send an Ack which corresponds to the data of Seq = 2 (P22).

Next, the receiving side apparatus 100A transmits an Ack to the transmitting side apparatus in response to data of Seq = 3 and 4 (P23 and P24) which have been received. These Acks (P13 and P14) both have parameters indicating Num = 2 and Win =3. This is because the receiving side apparatus 100A has detected that the data of Seq = 2 is missing, since it has received the data of Seq = 3 and 4 after the reception of the data of Seq = 1. The receiving side apparatus 100A has already transmitted the Ack for requesting the packet of Seq = 2 at the time of receiving the packet of Seq = 1. Therefore, these Acks (P13 and P14) serve as DupAcks which inform that the data of Seq = 2 has not arrived. At this point, the Win of the DupAcks (P13 and P14) is the same as the Win of the Ack (P12) corresponding to the packet of Seq =1. The reason for this is because the reception processing in the application program associated with the data of Seq = 1 has not yet completed.

Since the speed of the CPU 101A of the receiving side apparatus 100A is slow, the reception processing in the application program associated with the data of Seq = 1 is completed after the receiving side apparatus 100A transmits the second DupAck. After the reception processing in the application program is completed, the receiving side apparatus 100A transmits a WinUpdate (Num = 2 and Win = 4) (P16) which informs the transmitting side apparatus 200A that the Win has been restored. At this point, the receiving side apparatus 100A makes a copy of the already transmitted DupAck (P14) and transmits the copied DupAck (P15) to the transmitting side apparatus 200A just before transmitting the WinUpdate. The transmitting side apparatus 200A receives the third DupAck (P15), and performs fast retransmission to retransmit retransmission data of Seq = 2 (P25).

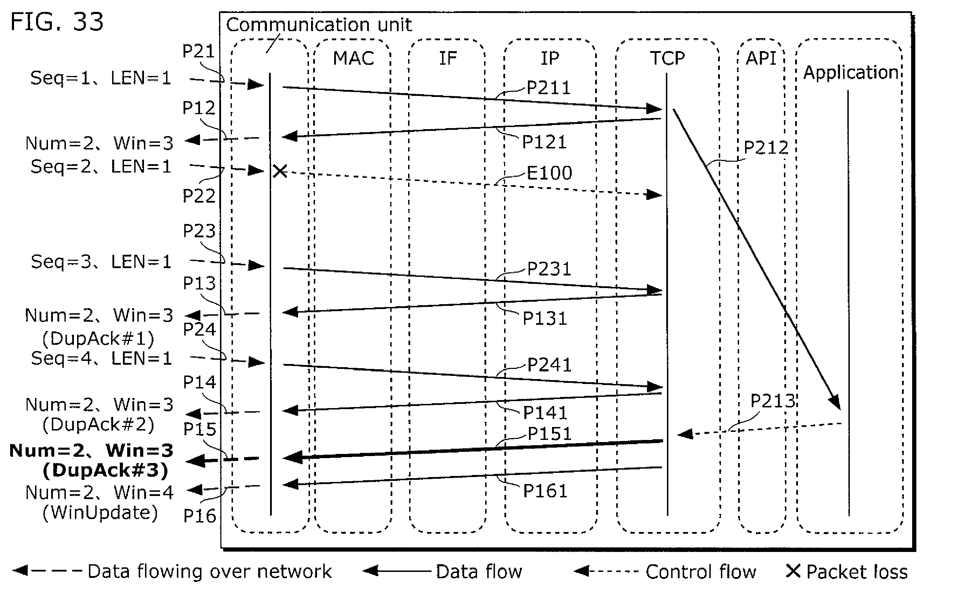

FIG. 33 is a diagram illustrating a sequence of processing performed by the receiving side apparatus 100A. To be more specific, FIG. 33 illustrates a sequence of processing from the point where the receiving side apparatus 100A receives data of Seq = 1 (P21) up to the point where the receiving side apparatus 100A transmits a WinUpdate (P16). With reference to the sequence of processing in FIG. 33 and the structure of the receiving side apparatus 100A in FIG. 30 and FIG. 31, the processing performed by the receiving side apparatus 100A according to the present embodiment shall be described. It should be noted that the "communication unit" surrounded by a dotted line represents the communication unit 105A of FIG. 30, the "MAC" surrounded by a dotted line represents the MAC processing unit 1500 of FIG. 31, the "IF" surrounded by a dotted line represents the IF processing unit 1400 of FIG. 31, and the "IP" surrounded by a dotted line represents the IP processing unit 1300 of FIG. 31. Further, in FIG. 33, the "TCP" surrounded by a dotted line represents the TCP processing unit 1200 of FIG. 31, the "API" surrounded by a dotted line represents the API unit 1100 of FIG. 31, and the "application" surrounded by a dotted line represents the application program of FIG. 31.

First, in line with the processing flow of FIG. 33, the description shall be provided of the sequence of processing (P21, P211, P121 and P12) from the point where the receiving side apparatus 100A receives the packet of Seq = 1 (P21) up to the point where the receiving side apparatus 100A transmits the Ack (P12).

As illustrated in FIG. 33, the packet of Seq = 1 (P21) transmitted from the communication apparatus (transmitting side apparatus) 200A is received by the communication apparatus (receiving side apparatus) 100A via the network 3A. The packet of Seq = 1 (P21) stored in the for-reception FIFO memory 151A of the communication unit 105A is read from the for-reception FIFO memory 151A to the storing unit 102A by the CPU 101A. Note that for the transfer of the packet from the for-reception FIFO memory 151A to the storing unit 102A, the receiving side apparatus 100A may be equipped with a separate DMA controller, and the packet may be transferred by the DMA controller instead of by the CPU 101A.

The MAC frame of Seq = 1 (P21) read from the for-reception FIFO memory 151A of the communication unit 105A by the MAC receiving unit 1510 of the MAC processing unit 1500 is depacketized by the IF processing unit 1400 and the IP processing unit 1300, and the resultant is passed to the TCP receiving unit 1210 (data flow P211).

The TCP receiving unit 1210 analyzes the TCP header of the TCP packet of Seq = 1, and completes the depacketization. At this point, since no packet loss occurs before the packet of Seq = 1 (P21) is received, the TCP loss detecting unit 1215 judges that the packet of Seq = 1 is reception data that fits in the order, and passes the packet to the receiving buffer 1240 and the DupAck managing unit 1230 as reception data. The passed reception data is passed to an application program via the API unit 1100.

Further, since the TCP loss detecting unit 1215 has checked that the packet is in order, the TCP receiving unit 1210 passes to the Ack generating unit 1280 a packet of Seq = 2 which is the next Seq, in order to notify the transmitting side apparatus 200A that the data has been received. The Ack generating unit 1280 which has received the Seq from the TCP receiving unit 1210 inquires the receiving buffer 1240 via the Window controlling unit 1250 about a currently receivable Win. Based on Win = 3 which is the result of the inquiry and the Seq which has been received from the TCP receiving unit 1210, the Ack generating unit 1280 generates a TCP packet which indicates Num = 2 and Win = 3 in response to the packet of Seq = 1 (P21), and passes the generated TCP packet to the TCP transmitting unit 1220.

The TCP transmitting unit 1220 constructs a TCP header on the TCP packet, and the IP processing unit 1300 and the IF processing unit 1400 construct, as a packet, the TCP packet on which the TCP header has been constructed. The MAC frame, which has been constructed as a packet, indicating Num = 2 and Win = 3 is written in the for-transmission FIFO memory 152A of the communication unit 105A as a packet by the MAC transmitting unit 1520 of the MAC processing unit 1500 (data flow P121).

As described, the data (MAC frame) written in the for-transmission FIFO memory of the communication unit 105A is transmitted to the transmitting side apparatus 200A via the network 3A as the Ack (P12) for the packet of Seq = 1 (P21).

Next, in line with the processing flow of FIG. 33, the description shall be provided of the sequence of processing (P22 and E100) from the point where the receiving side apparatus 100A receives a packet of Seq = 2 (P22).

The packet of Seq = 2 (P22) transmitted from the communication apparatus (transmitting side apparatus) 200A is received by the communication unit 105A of the communication apparatus (receiving side apparatus) 100A via the network 3A. However, since the speed of the CPU 101A is slow, the for-reception FIFO memory 151A of the communication unit 105A overflows with the already received packets, and thus an overrun occurs. As a result, the packet of Seq = 2 (P22) is not stored in the for-reception FIFO memory 151A.

Since an overrun has occurred due to the packet of Seq = 2, the data loss detecting unit 150A notifies the CPU 101A that an overrun has occurred (control flow E100). That is, the loss notifying unit 5000 receives a packet loss notification, and passes packet loss information to the DupAck managing unit 1230 of the TCP processing unit 1200. The DupAck managing unit 1230 holds the packet loss information which has been received.

Next, in line with the processing flow of FIG. 33, the description shall be provided of the sequence of processing (P231, P131, P241 and P141) from the point where the receiving side apparatus 100A receives packets of Seq = 3 and Seq = 4 (P23 and P24) up to the point where the receiving side apparatus 100A transmits Acks (P13 and P14). The processing on the data of P23 and P24 is similar to the processing on the data of P21, and thus the description thereof is omitted here. Further, the processing on the data of P13 and P14 is similar to the processing on the data of P12, and thus the description thereof is omitted here.

The packet of Seq = 3 (P23) read by the MAC receiving unit 1510 of the MAC processing unit 1500 is depacketized by the IF processing unit 1400 and the IP processing unit 1300, and the resultant is passed to the TCP receiving unit 1210 (data flow P231). The TCP receiving unit 1210 analyzes the TCP header of the received TCP packet, and completes the depacketization. At this point, since the packet of Seq = 2 (P22) has not yet arrived, the TCP loss detecting unit 1215 judges that the TCP packet of Seq = 3 is reception data that does not fit in the order. The TCP loss detecting unit 1215 passes, to the DupAck managing unit 1230, the data of a sequence number (Seq = 2) which is supposed to arrive in the order.

The DupAck managing unit 1230 which has received the data of Seq = 2 inquires the receiving buffer 1240 via the Window controlling unit 1250 about the currently receivable Win, and receives Win =3. The DupAck managing unit 1230 holds, as DupAck information, the data of Seq = 2 received from the TCP loss detecting unit 1215 and Win = 3 obtained through the inquiry to the Window controlling unit 1250, and passes the DupAck information to the DupAck generating unit 1280. In addition, the DupAck managing unit 1230 counts the number of DupAck transmissions as "1". The DupAck generating unit 1280 generates a DupAck which indicates Num =2 and Win =3 using the DupAck information (Win and Seq) which has been received, and passes the generated DupAck to the TCP transmitting unit 1220.

The DupAck (Num = 2 and Win = 3) is constructed as a packet by being processed through the IP processing unit 1300 and the IF processing unit 1400 from the TCP transmitting unit 1220. The packet (MAC frame) which has been constructed is outputted to the packet duplicating unit 7000 of the MAC processing unit 1500. At this point, the packet duplicating unit 7000 inquires the DupAck managing unit 1230 about the number of duplicates, and because the number of duplicates is "1", the packet duplicating unit 7000 does not instruct the MAC processing unit 1500 to duplicate the packet. As a result, the MAC transmitting unit 1520 writes only one packet to the for-transmission FIFO memory 152A of the communication unit 105A.

In a similar manner to the data flow P231, the packet of Seq = 4 (P24) read by the MAC receiving unit 1510 of the MAC processing unit 1500 reaches the DupAck managing unit 1230 and the DupAck generating unit 1270 of the TCP processing unit 1200 (data flow P241). The DupAck managing unit 1230 judges whether or not Seq = 2 of the DupAck information which is currently held and the Seq received from the TCP loss detecting unit 1215 are the same, and when they are judged to be the same, the DupAck managing unit 1230 counts the number of DupAck transmissions that it manages as 2.

In a similar manner to the data flow P131, a DupAck (P14) reaches the packet duplicating unit 7000 of the MAC processing unit 1500 from the TCP transmitting unit 1220, and is written to the FIFO memory 152A of the communication unit 105A by the MAC transmitting unit 1520 (data flow P141).

Next, in line with the processing flow of FIG. 33, the description shall be provided of the sequence of processing (P212 and P213) up to the point where the processing performed on the data of Seq = 1 (P21) by the application program is completed and duplication of a DupAck is started.

With the transmitting side apparatus 200A, the status of Win (W12 shown in FIG. 32) has not changed since the Ack (P12) is received from the receiving side apparatus 100A. While in the status of W12, the next packet (Seq = 5) cannot be newly transmitted. During that time, in the receiving side apparatus 100A, the receiving buffer 1240 and the DupAck managing unit 1230 pass the reception data to the application program via the API unit 1100 in response to a reception request from the application program.

Having passed the reception data to the application program, the API unit 1100 notifies the Window controlling unit 1250 that the reception is completed (data flow P213).

Next, in line with the processing flow of FIG. 33, the description shall be provided of the sequence of processing (P151) in which a DupAck is constructed as a packet and the DupAck is duplicated in the MAC processing unit 1500.

The Window controlling unit 1250 which has been notified by the API unit 1100 that the reception is completed inquires the receiving buffer 1240 about the free space of the buffer, and computes Win = 4 using the buffer free space obtained through the inquiry. Then, the Window controlling unit 1250 passes the computed Win to the DupAck managing unit 1230.

The DupAck managing unit 1230 which has received the Win computes the number of DupAck duplicates in a number-of-DupAck duplicate computation method using the number of DupAck transmissions "2" and a predetermined number "3", based on the packet loss information held in the control flow E100. The computation result here is "1", and this value is held by the DupAck managing unit 1230. The number-of-DupAck duplicate computation method shall be described later. Furthermore, the DupAck managing unit passes, to the DupAck generating unit 1270, the DupAck information (Seq = 2 and Win = 3) that it has been holding.

The DupAck generating unit 1270 generates a DupAck (Num =2 and Win =3) using the DupAck information which has been received, and passes the generated DupAck to the TCP transmitting unit 1220.

The TCP packet (DupAck) indicating Num = 2 and Win = 3 which has been passed to the TCP transmitting unit 1220 is constructed as a packet through the IP processing unit 1300 and the IF processing unit 1400 (data flow P151). The DupAck packet (MAC frame) which has been constructed as a packet is outputted to the packet duplicating unit 7000 of the MAC processing unit 1500. At this point, the packet duplicating unit 7000 makes an inquiry to the DupAck managing unit 1230. Since the number of DupAck duplicates obtained through the inquiry to the DupAck managing unit 1230 is "1", the packet duplicating unit 7000 instructs the MAC transmitting unit 1520 to write one packet to the for-transmission FIFO memory 152A of the communication unit 105A. Then, the MAC transmitting unit 1520 writes one DupAck packet to the for-transmission FIFO memory 152A.

In the present embodiment, since the number of DupAck duplicates is "1", the MAC transmitting unit 1520 writes the DupAck packet to the for-transmission FIFO memory 152A of the communication unit 105A only once. However, in the case where the number of DupAck duplicates is N (N ≥ 2), N DupAck packets are transmitted by writing the same DupAck packet N times.

The packet written to the for-transmission FIFO memory 152A of the communication unit 105A is transmitted to the transmitting side apparatus 200A via the network 3A as a DupAck packet (P15).

Next, in line with the processing flow of FIG. 33, the description shall be provided of the sequence of processing (P161 and P16) in which the WinUpdate generated by the TCP processing unit 1200 is constructed as a packet and transmitted.

The DupAck managing unit 1230 passes, to the WinUpdate generating unit 1260, the Win = 4 which has been received from the Window controlling unit 1250. The WinUpdate generating unit 1260 generates a WinUpdate and passes the WinUpdate to the TCP transmitting unit 1220. The WinUpdate passed to the TCP transmitting unit 1220 is constructed as a packet through the IP processing unit 1300 and the IF processing unit 1400 (data flow P161). The WinUpdate packet (MAC frame) which has been constructed as a packet is passed to the communication unit 105A from the MAC transmitting unit 1520.

Then, the communication unit 105A transmits the WinUpdate (P16) to the transmitting side apparatus 200A via the network 3A.

After transmitting the duplicated DupAck packet (P15), the DupAck managing unit 1230 deletes the packet loss information which has been held after it was passed from the loss notifying unit 5000 in the control flow E100, and initializes the number of DupAck duplicates to "1".

Further, by receiving the packet of the sequence on which a packet loss has occurred, the DupAck managing unit 1230 deletes the DupAck information (Seq and Win) which has been stored in the DupAck managing unit 1230, and sets the number of DupAck transmissions to "0" and the number of DupAck duplicates to "0".

Note that even in the case where the DupAck managing unit 1230 does not duplicate the DupAck, the packet loss information may be deleted after a predetermined time period elapses since the packet loss information is received from the loss notifying unit 5000 (after one second, for example).

Also, the packet loss information may be deleted when Packet Per Sec (PPS) drops after the packet loss information is received from the loss notifying unit 5000. In other words, the DupAck managing unit 1230 includes a resetting unit.

Furthermore, the packet duplicating unit 7000 may manage the number of packets which have been transmitted after the packet loss information was received from the loss notifying unit 5000, and when a particular number of packets has been transmitted, the packet loss information may be deleted.

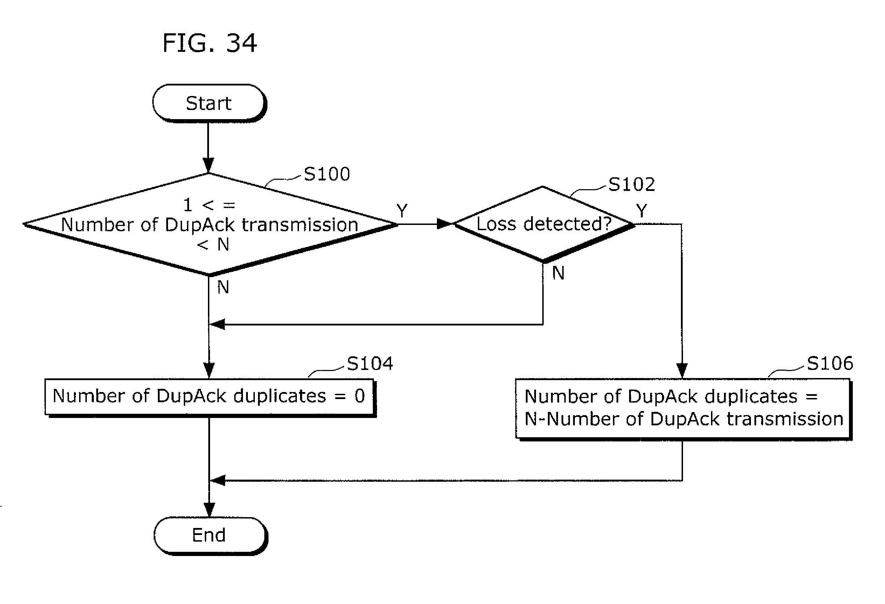

Here, with reference to FIG. 34, the description shall be provided of the algorithm of the number-of-DupAck duplicate computation method used by the DupAck managing unit 1230 of the TCP processing unit 1200 according to the present embodiment.

FIG. 34 is a flowchart illustrating the algorithm of the number-of-DupAck duplicate computation method according to the present embodiment.

Having been notified by the Window controlling unit 1250 of a Win update, the DupAck managing unit 1230 examines whether or not the number of DupAck transmissions it is holding is equal to or greater than 1 and less than N (Step S100). In addition, the DupAck managing unit 1230 examines whether or not the loss notifying unit 5000 has made a loss notification and packet loss information has been recoded (Step S102).

In other words, in Step S100, the DupAck managing unit 1230 sets the number of DupAck duplicates to "0" when the number of DupAck transmissions it is managing is equal to or less than 0, or equal to or greater than (N + 1) (N in Step S100) (Step S104). On the other hand, the DupAck managing unit 1230 performs processing of Step S102 when the number of DupAck transmissions it is holding is equal to or greater than 1 and less than N (Y in Step S100). It should be noted that N is a number of DupAcks necessary for prompting the transmitting side apparatus to retransmit data (predetermined number or necessary number).

In Step S102, in the case where the packet loss information received from the loss notifying unit 5000 has been recorded (Y in Step S102), the DupAck managing unit 1230 computes the number of DupAck duplicates using an expression of "N - number of DupAck transmissions" (Step S106). On the other hand, in the case where the packet loss information has not been recorded (N in Step S102), the DupAck managing unit 1230 sets the number of DupAck duplicates to "0" (Step S104).

For example, in the present embodiment, when at the start of the algorithm of the above described number-of-DupAck duplicate computation method, the DupAck managing unit 1230 receives and holds (records): packet loss information from the loss notifying unit 5000; and the number of DupAck transmissions "2". Therefore, since the number of DupAck transmissions is "2" in Step S100, the DupAck managing unit 1230 performs the processing of Step S102. Then, in Step S102, because the DupAck managing unit 1230 holds the packet loss information, it computes the number of DupAck duplicates using N = 3 and the number of DupAck transmissions "2". Thus, using the expression of "number of DupAck duplicates = N - number of DupAck transmissions", the number of DupAck duplicates is computed as "1".

Note that it is preferable that the above mentioned N is a number which prompts the transmitting side apparatus 200A to perform fast retransmission. Also, although N in the present embodiment is 3 as an example, it may be equal to or greater than 3 as a condition to avoid DupAck packet loss in the network. A large value is especially effective when the network quality is low and a DupAck is likely to be lost on the path. Nevertheless, a large value results in an increase in network traffic, and thus it is not preferable to make the value unnecessarily large. Desirably 3, and preferably 4 at a maximum.

As described, in the present embodiment, the above processing produces the advantageous effects of: preventing a reduction in throughput caused by TCP retransmission through prompting the transmitting side apparatus 200A to perform fast retransmission; prompting the transmitting side apparatus 200A to perform fast retransmission only in the case where the packet loss has occurred in the receiving side apparatus 100A; preventing the network from being overloaded; suppressing useless traffic caused by the DupAck which is duplicated; suppressing CPU consumption of the receiving side apparatus 100A necessary for DupAck transmission; and preventing wrong DupAck transmission.

(Variation 1)

Hereinafter, a first variation of the above described tenth embodiment shall be described.

In the above described tenth embodiment, the receiving side apparatus 100A detects data loss in the communication unit 105A, however, a receiving side apparatus 100A according to the present variation detects data loss in an IP processing unit 1300.

Note that only the difference between the present variation and the above described tenth embodiment shall be described.

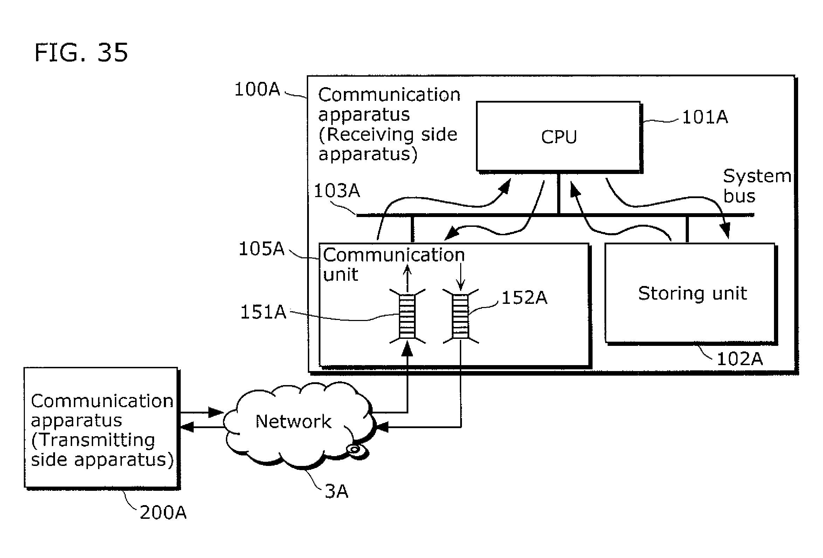

FIG. 35 is a diagram illustrating an example of structures of a network and a communication apparatus according to the first variation of the above described tenth embodiment.

A communication unit 105A is hardware connected to a system bus 103A, and unlike the communication unit 105A of the above described tenth embodiment, it does not have a data loss detecting unit 150A. The communication unit 105A has a function to transmit, to a network 3A, data passed from a CPU 101A, and a function to receive data from the network 3A. In addition, the communication unit 105A includes a for-reception FIFO memory 151A that temporarily holds the data received from the network 3A, and a for-transmission FIFO memory 152A that temporarily holds data passed from the CPU 101A.

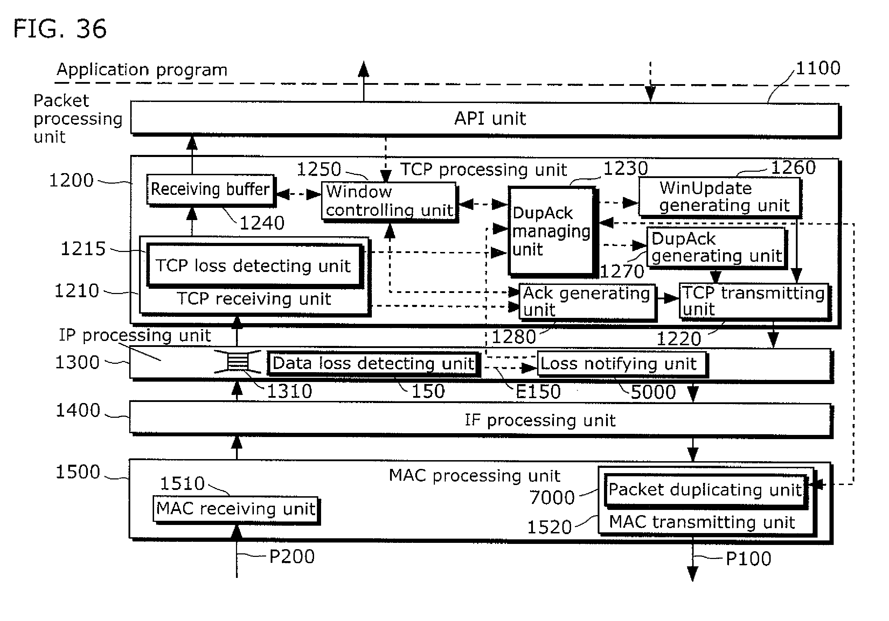

With reference to FIG. 36, the functional structure embodied by a program of the CPU 101A of the present variation shall be described below.

FIG. 36 is a structure diagram illustrating the functional structure of the CPU 101A of the receiving side apparatus 100A. Note that in FIG. 36, solid lines are data flows showing flows of data, whereas dotted lines are control flows showing flows of control signals. The detailed structure of a packet processing unit which processes packets to be received or transmitted by the receiving side apparatus 100A is that the CPU 101A of the receiving side apparatus 100A includes an API unit 1100, a TCP processing unit 1200, an IP processing unit 1300, and an MAC processing unit 1500. Each functional unit in FIG. 36 shall be described below. The API unit 1100 and the TCP processing unit 1200 have the same functions as that of the above described tenth embodiment, and thus the descriptions thereof are omitted.

Unlike the MAC processing unit 1500 of the above described tenth embodiment, the MAC processing unit 1500 according to the present variation does not have a loss notifying unit 5000, and only has an MAC receiving unit 1510 and an MAC transmitting unit 1520. The MAC receiving unit 1510 and the MAC transmitting unit 1520 have similar functions to that of the above described tenth embodiment.

As with the IP processing unit 1300 of the above described tenth embodiment, the IP processing unit 1300 extracts a TCP packet from an IP packet received from the IF processing unit 1400, and passes the extracted TCP packet to the TCP processing unit 1200. Also, the IP processing unit 1300 adds an IP header to the TCP packet received from the TCP processing unit 1200 so as to construct an IP packet, and passes the IP packet to the IF processing unit 1400. Such an IP processing unit 1300 differs from the IP processing unit 1300 of the above described tenth embodiment, and has a for-reception FIFO queue 1310, a data loss detecting unit 150A and a loss notifying unit 5000.

The for-reception FIFO queue 1310 is a region for temporarily storing data passed from the IF processing unit 1400. A part of the storing unit 102A is allocated for this region, and the for-reception FIFO queue 1310 has a function of managing the data stored therein. That is, the for-reception FIFO queue 1310 manages the data in such a manner that the data received from the IF processing unit 1400 is processed by the IP processing unit 1300 in an order that the data is received (First-In First-Out).

The data loss detecting unit 150A detects that reception overrun has occurred in the for-reception FIFO queue 1310, and transmits, to the loss notifying unit 5000, a packet loss notification (E150) notifying that loss has occurred.

The loss notifying unit 5000 receives the packet loss notification (E150) from the data loss detecting unit 150A, and passes packet loss information notifying that the loss has occurred to the DupAck managing unit 1230 of the TCP processing unit 1200. Note that in the case where the packet loss notification (E150) includes an IP address, a protocol and a port number, the loss notifying unit 5000 also passes the packet loss information including the IP address, the protocol and the port number to the DupAck managing unit 1230.

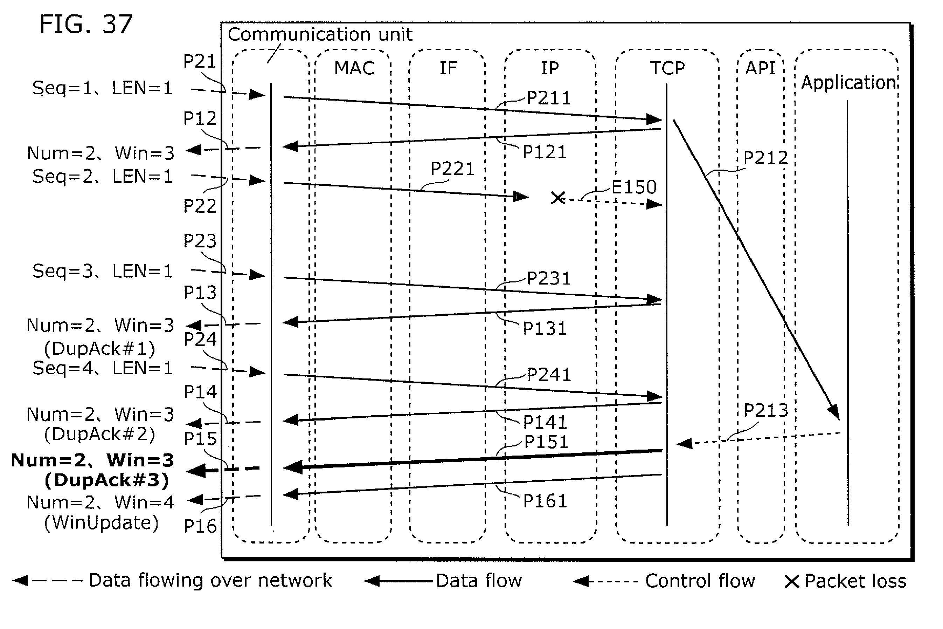

FIG. 37 is a diagram illustrating a sequence of processing performed by the receiving side apparatus 100A according to the present variation. To be more specific, FIG. 37 illustrates a sequence of processing from the point where the receiving side apparatus 100A receives a packet of Seq = 1 (P21) up to the point where the receiving side apparatus 100A transmits a WinUpdate (P16). It should be noted that in FIG. 37, the "communication unit" surrounded by a dotted line represents the communication unit 105A of FIG. 35, the "MAC" surrounded by a dotted line represents the MAC processing unit 1500 of FIG. 36, the "IF" surrounded by a dotted line represents the IF processing unit 1400 of FIG. 36, and the "IP" surrounded by a dotted line represents the IP processing unit 1300 of FIG. 36. Further, in FIG. 37, the "TCP" surrounded by a dotted line represents the TCP processing unit 1200 of FIG. 36, the "API" surrounded by a dotted line represents the API unit 1100 of FIG. 36, and the "application" surrounded by a dotted line represents the application program of FIG. 36.

The sequence of processing illustrated in FIG. 37 is different from the sequence of processing illustrated in FIG. 33, only in terms of the sequence of reception processing in which the receiving side apparatus 100A detects a loss of a packet of Seq = 2 (P22). Hereinafter, the description shall be provided, only of the sequence of this reception processing.

Next, in line with the processing flow of FIG. 37, the description shall be provided of the sequence of processing (P22, P221 and E150) on the packet of Seq = 2 (P22) performed by the receiving side apparatus 100A.

The packet of Seq = 2 (P22) transmitted from the communication apparatus (transmitting side apparatus) 200A is received by the communication unit 105A of the communication apparatus (receiving side apparatus) 100A via the network 3A.

The MAC receiving unit 1510 of the MAC processing unit 1500 receives the packet (P22) read from the for-reception FIFO memory 151A of the communication unit 105A. The packet (P22) of Seq = 2 which has been read is passed to the for-reception FIFO queue 1310 of the IP processing unit 1300 via the IF processing unit 1400 (data flow P221).

Here, the speed or the amount of processing in which the IP packet is passed from the IF processing unit 1400 to the for-reception FIFO queue 1310 of the IP processing unit 1300 exceeds the speed or the amount of processing in which a TCP packet is extracted from the IP packet in the IP processing unit 1300 and the extracted TCP packet is passed to the TCP processing unit 1200, which causes overrun of the for-reception FIFO queue 1310. The data loss detecting unit 150A notifies the loss notifying unit 5000 that loss has occurred (E150).Having received the packet loss notification notifying that overrun of the for-reception FIFO queue 1310 has occurred, the loss notifying unit 5000 passes packet loss information to the DupAck managing unit 1230 of the TCP processing unit 1200.

In the present variation, the description has been provided based on the assumption that the for-reception FIFO queue 1310 is provided in the IP processing unit 1300. Note, however, that in the case where a similar for-reception FIFO queue is provided in the IF processing unit 1400, the IF processing unit 1400 may have a data loss detecting unit and a loss notifying unit. Further, lost data may be examined, and notification may be made only in the case where the lost data is a specific protocol (IPv4, IPv6, for example).

Furthermore, the lost data may be examined by the data loss detecting unit 150A, and the loss may be notified only in the case where the lost data is a specific protocol (TCP, for example).

In addition, the address, the port number, and the like of the lost data may be added to the packet loss notification by the data loss detecting unit 150A. Further, the loss may be judged by the DupAck managing unit 1230 based on the received IP address, the port number and the like.

As described, in the present variation, the above processing produces the advantageous effects of: preventing a reduction in throughput caused by TCP retransmission through prompting the transmitting side apparatus 200A to perform fast retransmission; prompting the transmitting side apparatus 200A to perform fast retransmission only in the case where the packet loss occurred in the receiving side apparatus 100A is a loss of a specific TCP packet; preventing the network from being overloaded; suppressing useless traffic caused by DupAck which is duplicated; and preventing wrong DupAck transmission.

(Variation 2)

Hereinafter, a second variation of the above described tenth embodiment shall be described.

In the above described tenth embodiment, DupAck is duplicated by the MAC processing unit 1500, however in the present variation, DupAck is duplicated by the TCP processing unit 1200.

Hereinafter, only the difference between the present variation and the above described tenth embodiment shall be described.

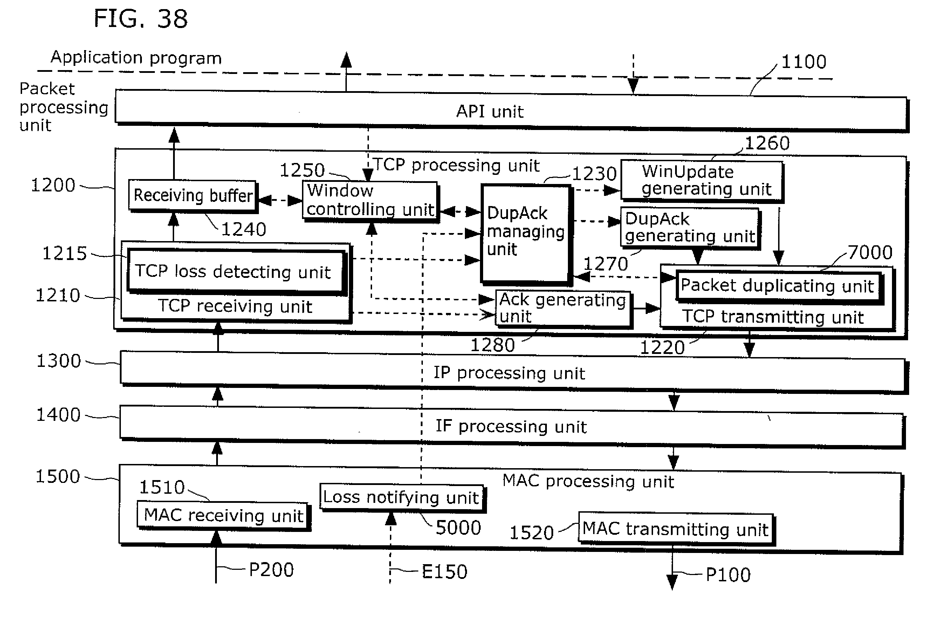

FIG. 38 is a structure diagram illustrating a functional structure of a CPU 101A according to the second variation of the above described tenth embodiment. Solid lines are data flows showing flows of data, whereas dotted lines are control flows showing flows of control signals. The detailed structure of a packet processing unit which processes packets to be received or transmitted by the receiving side apparatus 100A is that the CPU 101A of the receiving side apparatus 100A includes an API unit 1100, a TCP processing unit 1200, an IP processing unit 1300, and an MAC processing unit 1500. Each functional unit in FIG. 38 shall be described below. Note that the API unit 1100, the IP processing unit 1300, and the IF processing unit 1400 have the same functions as that in the above described tenth embodiment, and thus the descriptions thereof are omitted.

The TCP processing unit 1200 according to the present variation has a feature in a TCP transmitting unit 1220 having a packet duplicating unit 7000.

The TCP transmitting unit 1220 sets necessary TCP header information in a TCP packet (Ack, WinUpdate, and DupAck) received from an Ack generating unit 1280, a WinUpdate generating unit 1260, and a DupAck generating unit 1270, and passes, to the IP processing unit 1300, the TCP packet in which the TCP header information has been set. Further, the TCP transmitting unit 1220 passes, to the IP processing unit 1300, a DupAck that the packet duplicating unit 7000 has duplicated.

Based on the number of DupAck duplicates obtained through an inquiry to a DupAck managing unit 1230, the packet duplicating unit 7000 duplicates the DupAck corresponding to the number, and instructs the TCP transmitting unit 1220 to pass the duplicated DupAck to the IP processing unit 1300.

Note that in the present variation, the packet duplicating unit 7000 is structured as the second packet generating unit which generates the DupAck as a data request packet.

Unlike the MAC processing unit 1500 of the above described tenth embodiment, the MAC processing unit 1500 according to the present variation does not have the packet duplicating unit 7000. An MAC receiving unit 1510, an MAC transmitting unit 1520, and a loss notifying unit 5000 have functions similar to that of the above described tenth embodiment.

Here, with reference to the sequence of processing illustrated in FIG. 33, the processing performed by the receiving side apparatus 100A according to the present variation shall be described. It should be noted that in FIG. 33, the "communication unit" surrounded by a dotted line represents the communication unit 105A of FIG. 30, the "MAC" surrounded by a dotted line represents the MAC processing unit 1500 of FIG. 38, the "IF" surrounded by a dotted line represents the IF processing unit 1400 of FIG. 38, and the "IP" surrounded by a dotted line represents the IP processing unit 1300 of FIG. 38. Further, in FIG. 33, the "TCP" surrounded by a dotted line represents the TCP processing unit 1200 of FIG. 38, the "API" surrounded by a dotted line represents the API unit 1100 of FIG. 38, and the "application" surrounded by a dotted line represents the application program of FIG. 38.

The present variation has a feature of duplicating a DupAck packet of Seq = 2 (P15) shown in FIG. 33 (data flow P151), and only this point shall be described below.

A Window controlling unit 1250 which has been notified that the reception is completed inquires a receiving buffer 1240 about the free space of the buffer, and computes Win = 4 using the buffer free space obtained through the inquiry. Then, the Window controlling unit 1250 notifies the DupAck managing unit 1230 of the computed Win. The DupAck managing unit 1230 which has received the Win holds the packet loss information in the control flow E100, and thus computes the number of DupAck duplicates in a predetermined method (the number-of-DupAck duplicate computation method illustrated in FIG. 34) using the number of DupAck transmissions "2" and the predetermined number "3". Since the computed number of DupAck duplicates is "1", the DupAck managing unit 1230 passes, to the DupAck generating unit 1270, DupAck information (Seq = 2 and Win = 3) it has been holding, and holds the computed number of DupAck duplicates. After passing the DupAck information to the DupAck generating unit, the DupAck managing unit 1230 passes, to the WinUpdate generating unit 1260, the Win = 4 which has been received from the Window controlling unit 1250. The DupAck generating unit 1270 generates a DupAck (Num =2 and Win =3) using the DupAck information which has been received, and passes the generated DupAck to the packet duplicating unit 7000 of the TCP transmitting unit 1220.

The packet duplicating unit 7000 duplicates the DupAck, received from the DupAck generating unit 1270, corresponding to the number of DupAck duplicates obtained through the inquiry to the DupAck managing unit 1230, and causes the TCP transmitting unit 1220 to transmit the duplicated DupAcks. In the above described example, the number of DupAck duplicates is "1", and thus the packet duplicating unit 7000 does not duplicate the DupAck which has been received, and instructs the TCP transmitting unit 1220 to transmit the one DupAck. However, in the case where the number of DupAck duplicates is N (≥2), the packet duplicating unit 7000 duplicates the DupAck so that the number of DupAcks becomes N in total, and instructs the TCP transmitting unit 1220 to transmit all of the duplicated DupAcks (including the original DupAck).

The TCP transmitting unit 1220 passes, to the IP processing unit 1300, the DupAck(s) that the packet duplicating unit 7000 has instructed to transmit. Then the DupAck(s) is constructed as a packet through the IF processing unit 1400, and is written into the FIFO memory 152A of the communication unit 105A by the MAC transmitting unit 1520 of the MAC processing unit 1500.

As described the above processing according to the present variation makes it easier to manage the number of DupAcks to be duplicated, in the case where the number of packets and the like is managed using TCP. Furthermore, in the case where a packet duplicating unit is introduced to an existing communication module, the TCP processing unit is to be modified, which means that the part to be modified can be limited.

(Variation 3)

Hereinafter, a third variation of the above described tenth embodiment shall be described.

In the above described tenth embodiment, a receiving side apparatus 100A duplicates a DupAck and transmits the duplicated DupAck at the timing based on the status of the Window. However, the receiving side apparatus 100A according to the present variation duplicates a DupAck and transmits the duplicated DupAck at the timing of the first DupAck transmission, irrespective of the status of the Window.

Hereinafter, only the difference between the present invention and the above described tenth embodiment shall be described.

A TCP processing unit 1200 according to the present variation has a feature in a DupAck managing unit 1230.

In the case where the DupAck managing unit 1230 receives Seq from a TCP loss detecting unit 1215, the DupAck managing unit 1230 holds, as DupAck information, the received Seq and Win obtained through an inquiry to a Window controlling unit 1250, computes the number of DupAck duplicates based on the DupAck information, and holds the computed number of DupAck duplicates. In addition, the DupAck managing unit 1230 passes the DupAck information to a DupAck generating unit 1270, and counts the number of times the DupAck information is passed as the number of DupAck transmissions.

The DupAck managing unit 1230 notifies a packet duplicate unit 7000 of the computed number of DupAck duplicates in response to an inquiry from the packet duplicate unit 7000. Note that in the present variation, the description of the number of DupAck duplicates computed by the DupAck managing unit 1230 is provided using an example case where the number of DupAck duplicates is managed per packet.

Further, the DupAck managing unit 1230 has a function that after notifying the packet duplicating unit 7000 of the number of DupAck duplicates, it deletes the packet loss information received from a packet loss notifying unit 5000, and further, resets the number of DupAck duplicates to an initial value. Here, the description is provided with an assumption that the initial value of the DupAck duplicates is "1". Also, the description is provided with an assumption that the initial value of the DupAck transmissions is 0.

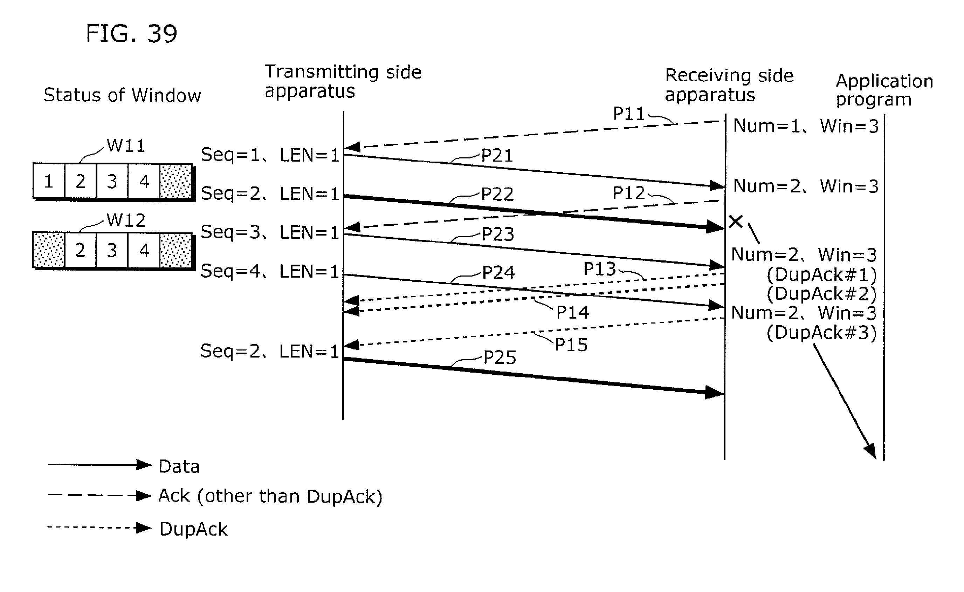

FIG. 39 is a diagram illustrating a sequence of communication between communication apparatuses according to the present variation. Note that as in the above described tenth embodiment, this communication sequence is an example of the sequence in the case where the performance of the receiving side apparatus 100A is low (the performance of CPU is 133 MHz, for example).

The receiving side apparatus 100A transmits an Ack to a transmitting side apparatus 200A in response to data of Seq = 3 which has been received. This Ack (P13) has a parameter indicating Num = 2 and Win =3. This is because the receiving side apparatus 100A has detected that data of Seq = 2 is missing since it has received the data of Seq = 3 after receiving the data of Seq = 1. The Ack for requesting the data of Seq = 2 has already been transmitted at the time of receiving the data of Seq = 1, and this Ack (P13) is a DupAck for notifying that the data of Seq = 2 has not yet arrived. The Win of the DupAck (P13) is the same as the Win of an Ack (P12) corresponding to the data of Seq =1. The reason for this is because the reception processing in the application program associated with the data of Seq = 1 is not completed.

The receiving side apparatus 100A according to the present variation detects, at the time of transmitting the first DupAck, that the data of Seq = 2 has not arrived, and thus transmits, to the transmitting side apparatus 200A, a DupAck (P14) which is a duplicate of the previously transmitted DupAck (P13).

Then, in response to the data of Seq = 4 received, the receiving side apparatus 100A transmits, to the transmitting side apparatus 200A, a DupAck (P15) for requesting the data of Seq = 2, as in the case of receiving the data of Seq = 3. Since the transmitting side apparatus 200A has received three DupAcks (P13, 14 and 15), it performs fast retransmission to retransmit retransmission data of Seq = 2 (P25).

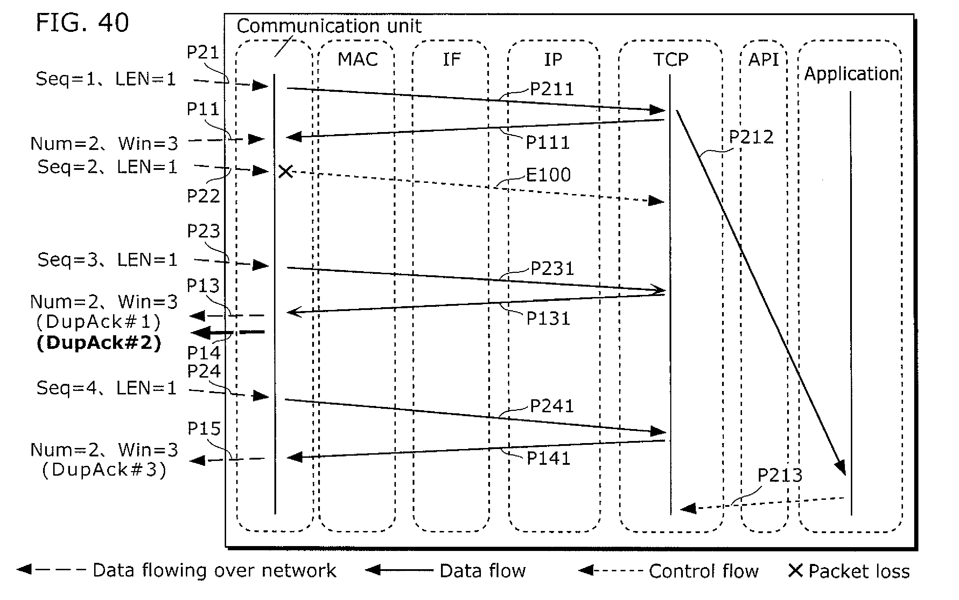

FIG. 40 is a diagram illustrating a sequence of processing performed by the receiving side apparatus 100A. To be more specific, FIG. 40 illustrates an example of a sequence of processing from the point where the receiving side apparatus 100A receives data of Seq = 1 (P21) up to the point where the receiving side apparatus 100A transmits the third DupAck (P15).

Hereinafter, in line with the processing flow of FIG. 40, the description shall be provided of the sequence of processing (P231, P131, P13, P14, P241 and P141) from the point where the receiving side apparatus 100A receives a packet of Seq = 3 (P23) up to the point where the receiving side apparatus 100A transmits an Ack (P15). It should be noted that in FIG. 40, the "communication unit" surrounded by a dotted line represents the communication unit 105A of FIG. 30, the "MAC" surrounded by a dotted line represents the MAC processing unit 1500 of FIG. 31, and the "IF" surrounded by a dotted line represents the IF processing unit 1400 of FIG. 31. Further, in FIG. 40, the "IP" surrounded by a dotted line represents the IP processing unit 1300 of FIG. 31, the "TCP" surrounded by a dotted line represents the TCP processing unit 1200 of FIG. 31, the "API" surrounded by a dotted line represents the API unit 1100 of FIG. 31, and the "application" surrounded by a dotted line represents the application program of FIG. 31.

The MAC receiving unit 1510 of the MAC processing unit 1500 receives data (MAC frame) (P23) read from a for-reception FIFO memory 151A of the communication unit 105A. The data of Seq = 3 (MAC frame) which has been read is depacketized by the IF processing unit 1400 and the IP processing unit 1300, and is passed to a TCP receiving unit 1210 as a TCP packet (data flow P231).

The TCP receiving unit 1210 analyzes the TCP header of the TCP packet of Seq = 3, and completes the depacketization. At this point, since the data of Seq = 2 has not yet arrived, the TCP loss detecting unit 1215 judges that the TCP packet of Seq = 3 is data that does not fit in the order. The TCP receiving unit 1210 passes the data of Seq = 3 to a receiving buffer 1240, and the TCP loss detecting unit 1215 passes, to the DupAck managing unit 1230, data of a sequence number (Seq = 2) which is supposed to arrive in the order. The receiving buffer 1240 manages the data which did not arrive in the order, so as to hold it until the data which fits in the order arrives.

As DupAck information, the DupAck managing unit 1230 passes, to the DupAck generating unit 1270, the received Seq (Seq = 2) and a Win (Win = 3) which is obtained through an inquiry to the receiving buffer 1240 via the Window controlling unit 1250 about the currently available Win, and counts the number of DupAck transmissions as "1". The DupAck generating unit 1270 generates DupAck (Num =2 and Win =3) using the received DupAck information, and passes the generated DupAck to the TCP transmitting unit 1220.

Further, since the DupAck managing unit 1230 holds in the control flow E100 the packet loss information received from the loss notifying unit 5000, the DupAck managing unit 1230 computes the number of DupAck duplicates at this point ,using the number-of-DupAck duplicates computation method. With the number-of-DupAck duplicates computation method according to the present variation, the number of DupAck duplicates is computed as "2" using Win = 3, MSS = 1 and the predetermined number = 3 (details of the number-of-DupAck duplicates computation method according to the present variation shall be described later).

Note that the DupAck managing unit 1230 may hold in advance a Seq and a Win at the time of generating the first DupAck, and may pass the Seq and Win to the DupAck generating unit 1270 and compute the number of duplicates of a missing DupAck (the number of duplicates) after a lapse of a predetermined time period from when the DupAck is generated until a time-out brought about by retransmission.

Note that the DupAck managing unit 1230 may hold in advance a Seq and a Win at the time of generating the first DupAck, and may pass the Seq and Win to the DupAck generating unit 1270 and compute the number of duplicates of a missing DupAck (the number of duplicates) when the usage rate of the CPU has become equal to or less than a threshold before a lapse of a predetermined time period from when the DupAck is generated until a time-out brought about by retransmission.

Next, the TCP transmitting unit 1220 outputs a DupAck, and the DupAck is constructed as a packet through the IP processing unit 1300 and the IF processing unit 1400 (data flow P131). Since the number of DupAck duplicates obtained through the inquiry to the DupAck managing unit 1230 is "2", the packet duplicating unit 7000 of the MAC transmitting unit 1520 instructs the MAC transmitting unit 1520 to transmit two MAC frames from the MAC frame received from the IF processing unit 1400. The MAC transmitting unit 1520 duplicates the received MAC frame, and writes two MAC frames into the for-transmission FIFO memory 152A of the communication unit 105A.

The two DupAcks (MAC frames P13 and P14) written into the for-transmission FIFO memory 152A of the communication unit 105A are transmitted to the transmitting side apparatus 200A via the network 3A.

Immediately after transmitting the packet (P14), the DupAck managing unit 1230 deletes the packet loss information received from the packet loss notifying unit 5000. Further, the DupAck managing unit 1230 resets the number of DupAck duplicates to the initial value "1".

Next, the MAC receiving unit 1510 of the MAC processing unit 1500 receives the packet (MAC frame (P24)) read from the for-reception FIFO memory 151A of the communication unit 105A. The packet of Seq = 4 (MAC frame) which has been read is depacketized by the IF processing unit 1400 and the IP processing unit 1300, and is then passed to the TCP receiving unit 1210 as a TCP packet (data flow P241).

The TCP receiving unit 1210 analyzes the TCP header of the TCP packet of Seq = 3, and completes the depacketization. At this point, since the data of Seq = 2 has not yet arrived, the TCP loss detecting unit 1215 judges that the data of Seq = 3 is data that does not fit in the order. The TCP receiving unit 1210 passes the data of Seq = 3 to the receiving buffer 1240, and the TCP loss detecting unit 1215 passes, to the DupAck managing unit 1230, data of a sequence number (Seq = 2) which is supposed to arrive in the order. The receiving buffer 1240 manages the data which did not arrive in the order, so as to hold it until the data which fits in the order arrives.

The DupAck managing unit 1230 inquires the receiving buffer 1240 via the Window controlling unit 1250 about a currently available Win, and holds, as DupAck information, the Win obtained through the inquiry and the Seq received from the TCP loss detecting unit 1215. The DupAck managing unit 1230 passes the DupAck information to the DupAck generating unit 1270. The DupAck generating unit 1270 generates a packet (P15) which indicates Num = 2 and Win = 3 using the received DupAck information (Seq = 2 and Win = 3), and passes the generated DupAck to the TCP transmitting unit 1220. At this point, the DupAck managing unit 1230 does not compute the number of DupAck duplicates, since it has not received the packet loss information from the loss notifying unit 5000. The number of DupAck duplicates continues to be "1".

Next, the TCP transmitting unit 1220 outputs the DupAck, and the DupAck is constructed as a packet through the IP processing unit 1300 and the IF processing unit 1400 (data flow P141). The DupAck (MAC frame) which has been constructed as a packet is obtained by the MAC transmitting unit 1520 of the MAC processing unit 1500. At this point, the packet duplicating unit 7000 makes an inquiry to the DupAck managing unit 1230 about the number of DupAck duplicates so as to find out that the number of duplicates is "1". Since the number of duplicates is "1", the MAC transmitting unit 1520 writes only one MAC frame into the for-transmission FIFO memory 152A of the communication unit 105A.

The MAC frame written into the for-transmission FIFO memory 151A of the communication unit 105A by the MAC transmitting unit 1520 is transmitted, as a packet, to the transmitting side apparatus 200A via the network 3A. This is the third DupAck and thus the transmitting side apparatus 200A performs fast retransmission.

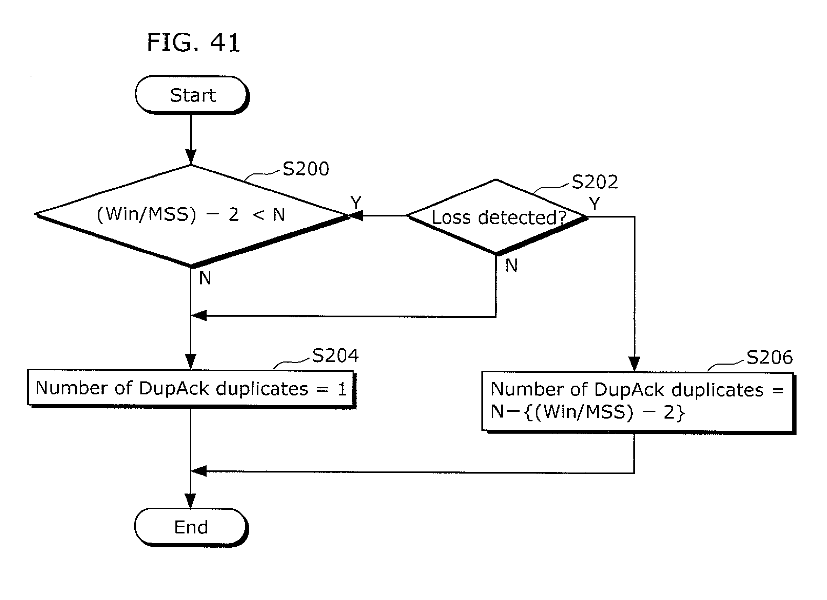

FIG. 41 is a flowchart illustrating an algorithm of the number-of-DupAck duplicates computation method used by the DupAck managing unit 1230 of the TCP processing unit 1200 according to the present variation.

When the DupAck managing unit 1230 receives a Seq from the TCP loss detecting unit 1215, it examines whether or not a quotient, obtained by dividing a Win obtained from the Window controlling unit 1250 through an inquiry, by a Max Section Size (MSS) (Win/MSS) minus "2" is less than a predetermined number (that is "N" which is the number of DupAcks necessary for fast retransmission, and N = 3, for example) (Step S200). Note that the above mentioned MSS is the maximum length of data which the transmitting side apparatus 200A can transmit at once, and is "1" in the present variation, for example.

In addition, the DupAck managing unit 1230 examines whether or not the packet loss information received from the loss notifying unit 5000 has been recorded (Step S202).

In other words, in Step S200, in the case where the quotient obtained by dividing a Win by an MSS (Win/MSS) minus "2" is equal to or greater than the predetermined number "N" (N in Step S200), the DupAck managing unit 1230 sets the number of DupAck duplicates to "1" (Step S204). On the other hand, in the case where the quotient obtained by dividing a Win by an MSS (Win/MSS) minus "2" is less than the predetermined number "N" (Y in Step S200), the DupAck managing unit 1230 performs the processing of Step 5202.

In Step 5202, in the case where the packet loss information received from the loss notifying unit 5000 has been recorded (Y in Step S202), the DupAck managing unit 1230 computes the number of DupAck duplicates using an expression of "the number of DupAck duplicates = N - {(Win/MSS) - 2}". On the other hand, in the case where the packet loss information has not been recorded (N in Step S202), the DupAck managing unit 1230 sets the number of DupAck duplicates to "1" (Step S204).

To be more specific, in the present variation, the DupAck managing unit 1230 firstly obtains Win = 3 from the Window controlling unit 1250. Further, the MSS is "1", for example, and the packet loss information received from the loss notifying unit 5000 is recorded.

In such a case, since ((Win/MSS) - 2 = 3/1 - 2 = 1) < (N = 3) in Step 5200, the DupAck managing unit 1230 performs the processing of Step S202.

Then, the DupAck managing unit 1230 judges, in Step S202, that the packet loss information is recorded, and computes, in Step S206, the number of DupAck duplicates = 3 - {(3/1) - 2} = 2.

Note that in Step S206, the DupAck managing unit 1230 may compute the number of DupAck duplicates as a predetermined number "N".

As described, in the present variation, the above processing produces the advantageous effects of: preventing a reduction in throughput caused by TCP retransmission through prompting most immediately the transmitting side apparatus 200A to perform fast retransmission; prompting the transmitting side apparatus 200A to perform fast retransmission only in the case where the packet loss has occurred in the receiving side apparatus 100A; preventing the network from being overloaded; suppressing useless traffic caused by DupAck to be duplicated; suppressing the CPU consumption of the receiving side apparatus 100A necessary for transmitting DupAcks; and preventing wrong DupAck transmission.

As above, the present invention has been described with the first through tenth embodiments and the variations thereof, and the functional blocks in the block diagrams (including FIGS. 8, 30 and 35) are typically achieved in the form of an integrated circuit or an LSI circuit. The function blocks may be individually incorporated into a single chip or may be incorporated into a chip in such a way that they are partially or fully included (for example, functional blocks other than a memory can be incorporated into a single chip).

The name used here is LSI, but it may also be called IC, system LSI, super LSI, or ultra LSI, depending on the degree of integration.

Moreover, ways to achieve integration are not limited to the LSI, and a special circuit or a general purpose processor and so forth can also achieve the integration. A Field Programmable Gate Array (FPGA) that can be programmed after manufacturing LSI or a reconfigurable processor that allows re-configuration of the connection or configuration of circuit cells within LSI can be used for the same purpose.

In the future, with advancement in semiconductor technology, a brand-new technology may replace LSI. The integration of the functional blocks can be carried out by that technology. Application of biotechnology is one such possibility.

Furthermore, a unit, among the functional blocks, which stores data to be coded or decoded may have a separate configuration, without being incorporated into a chip.

Industrial Applicability

The communication apparatus of the present invention produces an advantageous effect of voluntarily controlling data transmission traffic according to its own reception capability while reducing the burden for the control. It is applicable to various communication apparatuses which perform reception processing based on TCP, for example, or a communication protocol having a window controlling function and an acknowledgement function that are equivalent to that of TCP.

**Claims**

1. A communication apparatus which receives data transmitted from an other communication apparatus, said communication apparatus comprising:

   a receiving unit operable to receive the data;
   a first packet generating unit operable to generate an acknowledgement packet and transmit the acknowledgement packet to the other communication apparatus, the acknowledgement packet indicating a response to the other communication apparatus, the response corresponding to the data received by said receiving unit; and
   a second packet generating unit operable to generate a data request packet and transmit the data request packet to the other communication apparatus irrespective of a result of the data reception by said receiving unit, the data request packet requesting the other communication apparatus to transmit data.

2. The communication apparatus according to Claim 1,
   wherein said second packet generating unit is operable to generate the data request packet in such a way that a receivable data size is included in the data request packet as a reception size.

3. The communication apparatus according to Claim 2, further comprising
   a size computing unit operable to update the reception size by adding an updating amount to the reception size,
   wherein said second packet generating unit is operable, every time an updating time period elapses, (i) to cause said size computing unit to update the reception size, (ii) to generate the data request packet which includes the updated reception size, and (iii) to transmit the data request packet to the other communication apparatus.

4. The communication apparatus according to Claim 3, further comprising
   an update determining unit operable to determine the updating time period and the updating amount based on a communication capability of said communication apparatus.

5. The communication apparatus according to Claim 4,
   wherein said receiving unit is structured as a physical layer communication device having a memory for temporarily holding the received data, and
   said update determining unit is operable to determine the updating time period and the updating amount based on a capacity of the memory and a transfer capability for transferring the data held in the memory.

6. The communication apparatus according to Claim 4,
   wherein said update determining unit is further operable to determine the updating time period based on a bit rate necessary for an application program that operates in said communication apparatus.

7. The communication apparatus according to Claim 3,
   wherein said second packet generating unit is operable to suspend the generation of the data request packet, when said receiving unit receives the data while said second packet generating unit is generating the data request packet which is performed every time the updating time period elapses.

8. The communication apparatus according to Claim 7,
   wherein said second packet generating unit is operable to resume the generation of the data request packet when said receiving unit receives the data while the generation of the data request packet is suspended, the generation of the data request packet being performed every time the updating time period elapses.

9. The communication apparatus according to Claim 7,
wherein said first packet generating unit is operable to generate the acknowledgement packet which indicates the receivable data size as a response size, and
when data which has been transmitted earlier and then lost is retransmitted and is received by said receiving unit while the generation of the data request packet, performed every time the updating time period elapses, is suspended:

said first packet generating unit is operable to generate the acknowledgement packet which indicates a response size smaller than the response size of a previously generated acknowledgement packet; and
said second packet generating unit is operable to resume the generation of the data request packet which is performed every time the updating time period elapses.

10. The communication apparatus according to Claim 7, further comprising
a delaying unit operable to delay a timing at which said first packet generating unit transmits the acknowledgement packet, while the generation of the data request packet is suspended, the generation of the data request packet being performed every time the updating time period elapses.

11. The communication apparatus according to Claim 10,
wherein said receiving unit is structured as a physical layer communication device having a memory for temporarily holding the received data,
said communication apparatus further comprises
a transmission interval determining unit operable to determine a transmission interval at which the acknowledgement packet is transmitted, based on a capacity of the memory and a transfer capability for transferring the data held in the memory, and
said delaying unit is operable to delay the timing so that a plurality of acknowledgement packets including the acknowledgement packet are transmitted at the transmission interval determined by said transmission interval determining unit.

12. The communication apparatus according to Claim 10, further comprising
a transmission interval determining unit operable to determine a transmission interval at which the acknowledgement packet is transmitted, based on a bit rate necessary for an application program that operates in said communication apparatus,
wherein said delaying unit is operable to delay the timing so that a plurality of acknowledgement packets including the acknowledgement packet are transmitted at the transmission interval determined by said transmission interval determining unit.

13. The communication apparatus according to Claim 3,
wherein said second packet generating unit is operable to start the generation of the data request packet when an amount of data received by said receiving unit exceeds a threshold, the generation of the data request packet being performed every time the updating time period elapses.

14. The communication apparatus according to Claim 2, further comprising
a detecting unit operable to detect a loss of the data transmitted by the other communication apparatus,
wherein said first packet generating unit is operable to:

generate the acknowledgement packet which indicates the receivable data size as a response size; and
generate the acknowledgement packet which indicates a response size smaller than the response size of a previously generated acknowledgement packet, when said detecting unit detects the loss.

15. The communication apparatus according to Claim 14,
wherein said first packet generating unit is further operable to generate the acknowledgement packet which indicates a response size larger than the response size of a previously generated acknowledgement packet, when said detecting unit does not detect the loss during a predetermined time period.

16. The communication apparatus according to Claim 14,
wherein said first packet generating unit is operable to generate the acknowledgement packet which indicates, as the smaller response size, a difference between the response size of a previously generated acknowledgement packet and an amount of lost data.

**17.** The communication apparatus according to Claim 1,
wherein said second packet generating unit is operable to generate the data request packet as a negative acknowledgement response packet to be transmitted in a case where the data sequentially transmitted by the other communication apparatus is either not received by said receiving unit in a predetermined order, or is lost.

**18.** The communication apparatus according to Claim 17,
wherein said second packet generating unit is operable to generate and transmit a predetermined number of the data request packet, in a case where a data loss occurs, the data request packet indicating a content identical to a content of an acknowledgement packet corresponding to data received by said receiving unit immediately before the data loss has occurred.

**19.** The communication apparatus according to Claim 17, further comprising
a loss detecting unit operable to detect, in the data received by said receiving unit, loss data which has been lost, wherein said first packet generating unit is operable to transmit, to the other communication apparatus, the acknowledgement packet for instructing the other communication apparatus to retransmit the loss data detected by said loss detecting unit, as an acknowledgement to the data transmitted by the other communication apparatus, and said second packet generating unit is operable, in a case where the number of transmissions of the acknowledgement packet by said first packet generating unit is less than the number necessary for causing the other communication apparatus to retransmit the loss data, to transmit to the other communication apparatus the acknowledgement packet as the data request packet, irrespective of data transmission by the other communication apparatus, the number of the acknowledgement packet transmitted to the other communication apparatus being the number of duplicates, that is, the necessary number minus the number of the transmissions.

**20.** The communication apparatus according to Claim 19,
wherein said receiving unit includes a memory, and is operable to sequentially obtain the data transmitted by the other communication apparatus and store the obtained data in the memory.

**21.** The communication apparatus according to Claim 19,
wherein said second packet generating unit is operable to compute the number of duplicates when said first packet generating unit generates the acknowledgement packet.

**22.** The communication apparatus according to Claim 19,
wherein said second packet generating unit is operable to compute the number of duplicates at one of the following timings:

before a lapse of a predetermined time period since said first packet generating unit transmits the acknowledgement packet;
when a loading rate of said communication apparatus falls to a predetermined threshold or below before the lapse of the predetermined time period since the acknowledgement packet is transmitted; and
before said communication apparatus notifies the other communication apparatus that a receivable data amount of said communication apparatus has increased.

**23.** The communication apparatus according to Claim 19,
wherein said second packet generating unit is operable to compute the number of duplicates based on a receivable data amount of said communication apparatus.

**24.** The communication apparatus according to Claim 23,
wherein said second packet generating unit is operable, when said first packet generating unit transmits an initial acknowledgement packet, (i) to compute the number of intended transmissions by said first packet generating unit based on the receivable data amount, and (ii) to compute the number of duplicates by subtracting the number of the intended transmissions from the necessary number.

**25.** A communication method for receiving data transmitted from an other communication apparatus, said communication method comprising:

a receiving step of receiving the data;

a first packet generating step of generating an acknowledgement packet and transmitting the acknowledgement packet to the other communication apparatus, the acknowledgement packet indicating a response to the other communication apparatus, the response corresponding to the data received in said receiving step; and

a second packet generating step of generating a data request packet and transmitting the data request packet to the other communication apparatus irrespective of a result of the data reception in said receiving step, the data request packet requesting the other communication apparatus to transmit data.

26. A program for receiving data transmitted from an other communication apparatus, said program causing a computer to execute:

a receiving step of receiving the data;

a first packet generating step of generating an acknowledgement packet and transmitting the acknowledgement packet to the other communication apparatus, the acknowledgement packet indicating a response to the other communication apparatus, the response corresponding to the data received in the receiving step; and

a second packet generating step of generating a data request packet and transmitting the data request packet to the other communication apparatus irrespective of a result of the data reception in the receiving step, the data request packet requesting the other communication apparatus to transmit data.

27. An integrated circuit which receives data transmitted from an other communication apparatus, said integrated circuit comprising:

a receiving unit operable to receive the data;

a first packet generating unit operable to generate an acknowledgement packet and transmit the acknowledgement packet to the other communication apparatus, the acknowledgement packet indicating a response to the other communication apparatus, the response corresponding to the data received by said receiving unit; and

a second packet generating unit operable to generate a data request packet and transmit the data request packet to the other communication apparatus irrespective of a result of the data reception by said receiving unit, the data request packet requesting the other communication apparatus to transmit data.

FIG. 1

# FIG. 2

Receiving side apparatus        Transmitting side apparatus

P281(Seq =10)

P282(Seq =11)

P271(Ack =11,Win=8)

P283(Seq =12)

P284(Seq =13)

P272(Ack =13,Win=8)   ×   P285(Seq =14)

P286(Seq =15)

P273(Ack =13,Win=8)

P287(Seq =16)

P274(Ack =13,Win=8)

P275(Ack =13,Win=8)

P288(Seq =13)

EP 1 933 509 A1

# FIG. 3

Receiving side apparatus 1

Processing unit 3

2

Communication unit 5

6

Storing unit 4

Network 7

Transmitting side apparatus 8

EP 1 933 509 A1

FIG. 4

Receiving side
apparatus

Transmitting side
apparatus

P31 (Ack =10,Win=32)

P41 (Seq=10to42)

×

...

# FIG. 5

Receiving side
apparatus

Transmitting side
apparatus

P301(Seq =10,11)

P291(Ack=12,Win=4)

P302(Seq =12)
P303(Seq =13)

P292(Ack=12,Win=4)

P304(Seq =14,15)

P294(Ack=12,Win=4)
P295(Ack=12,Win=4)

P305(Seq =12)

P296(Ack=16,Win=4)

P306(Seq =16,17)

EP 1 933 509 A1

FIG. 6

# FIG. 7

Receiving side apparatus        Transmitting side apparatus

P61 (Seq=9)

P51 (Ack=9.1,Win=2)

P52 (Ack=9.2,Win=3)

P62 (Seq =10)

P53 (Ack=9.3,Win=4)

P63 (Seq =11)

P54 (Ack=9.4,Win=5)

P64 (Seq =12)

P65 (Seq =13)

EP 1 933 509 A1

FIG. 8

Communication apparatus
(Receiving side apparatus)

Processing unit — 33

31

32

Communication
unit — 35

36

Storing unit — 34

Network — 37

Communication
apparatus
(Transmitting side
apparatus) — 38

FIG. 9

# FIG. 10

Receiving side apparatus | Transmitting side apparatus

P71 (Ack =10,Win=4)

P72 (Ack =10,Win=8)

P73 (Ack =10,Win=12)　P81 (Seq =10,11,12,13)

P74 (Ack =10,Win=16)　P82 (Seq =14,15,16,17)

P83 (Seq =18,19,20,21)

P84 (Seq =22,23,24,25)

FIG. 11

# FIG. 12

Receiving side
apparatus

Transmitting side
apparatus

P91 (Ack =10,Win=4)

P92 (Ack =10,Win=8)

P93 (Ack =10,Win=12)          P101 (Seq =10,11,12,13)

P94 (Ack =10,Win=16)          P102 (Seq =14,15,16,17)

P95 (Ack =14,Win=16)          P103 (Seq =18,19,20,21)

P96 (Ack =18,Win=16)          P104 (Seq =22,23,24,25)

                              P105 (Seq =26,27,28,29)

                              P106 (Seq =30,31,32,33)

EP 1 933 509 A1

FIG. 13

Start

S400
Initiate window updating notifying function
Generate and transmit ACK packet (window
updating notifying packet) indicating (ACK
number = N, window size = updating amount)

S402
Data packet
(n) received from transmitting
side apparatus?

N

S404
T millisecond
elapsed?

N

Y

S406
Generate and transmit window updating
notifying packet indicating (ACK number = N,
window size = previous size + updating amount)

Y

S408
Suspend window updating notifying function
(updating amount = 0, window updating
timer suspended)

S410
Generate and transmit ACK packet indicating
(ACK number = N + n, window size =
previous size)

S412
Data packet
(n) received from transmitting
side apparatus?

Y

N

End

EP 1 933 509 A1

FIG. 14

EP 1 933 509 A1

FIG. 15

FIG. 16

Receiving side apparatus

Transmitting side apparatus

P131(Ack=11,Win=6)

P151(Seq=10)
P152(Seq=11)
P153(Seq=12)
P154(Seq=13)
P155(Seq=14)

P133(Ack=11,Win=6)
P134(Ack=11,Win=6)
P135(Ack=11,Win=6)
P136(Ack=11,Win=6)
P137(Ack=11,Win=6)

P156(Seq=15)
P157(Seq=16)

P158(Seq=11)

P138(Ack=17,Win=1)
P139(Ack=17,Win=2)
P140(Ack=17,Win=3)
P141(Ack=17,Win=4)
P142(Ack=17,Win=5)
P143(Ack=17,Win=6)

P159(Seq=17)
P160(Seq=18)
P161(Seq=19)
P162(Seq=20)

EP 1 933 509 A1

FIG. 17

EP 1 933 509 A1

## FIG. 18

Receiving side apparatus | Transmitting side apparatus

P171(Ack=10,Win=4)

P172(Ack=10,Win=8)

P173(Ack=10,Win=12) — P181(Seq=10,11,12,13)

P174(Ack=10,Win=16) — P182(Seq=14,15,16,17)

P175(Ack=14,Win=16) — P183(Seq=18,19,20,21)

P176(Ack=18,Win=16) — P184(Seq=22,23,24,25)

P177(Ack=22,Win=16) — P185(Seq=26,27,28,29)

P178(Ack=26,Win=16) — P186(Seq=30,31,32,33)

EP 1 933 509 A1

FIG. 19

Receiving side
apparatus

Transmitting side
apparatus

P191(Ack =10,Win=4)

P192(Ack =10,Win=8)

P193(Ack =10,Win=12)

P201(Seq =10,11,12,13)

P194(Ack =10,Win=16)

P202(Seq =14,15,16,17)

P195(Ack =14,Win=16)

P203(Seq =18,19,20,21)

P204(Seq =22,23,24,25)

P196(Ack =18,Win=16)

P205(Seq =26,27,28,29)

P197(Ack =22,Win=16)

P198(Ack =26,Win=16)

P206(Seq =30,31,32,33)

P199(Ack =30,Win=16)

P200(Ack =34,Win=16)

FIG. 20

Receiving side
apparatus

Transmitting side
apparatus

P211(Ack=14,Win=16)

P212(Ack=18,Win=16)
Change in
reception rate

P213(Ack=26,Win=12)

P214(Ack=34,Win=8)

P215(Ack=38,Win=8)

P221(Seq=14,15,16,17)

P222(Seq=18,19,20,21)

P223(Seq=22,23,24,25)

P224(Seq=26,27,28,29)

P225(Seq=30,31,32,33)

P226(Seq=34,35,36,37)

P227(Seq=38,39,40,41)

P228(Seq=42,43,44,45)

EP 1 933 509 A1

## FIG. 21

Receiving side apparatus         Transmitting side apparatus

P241(Seq =14,15,16,17)

P231(Ack=14,Win=16)

P242(Seq =18,19,20,21)

P232(Ack=18,Win=16)

P243(Seq =22,23,24,25)

Change in reception rate

P244(Seq =26,27,28,29)

P233(Ack=22,Win=14)

P245(Seq =30,31,32,33)

P234(Ack=26,Win=12)

P246(Seq =34,35)

P235(Ack=30,Win=10)

P247(Seq =36,37)

P236(Ack=34,Win=8)

P248(Seq =38,39)

P237(Ack=36,Win=8)

P249(Seq =40,41)

P238(Ack=38,Win=8)

P239(Ack=39,Win=8)

EP 1 933 509 A1

FIG. 22

EP 1 933 509 A1

**FIG. 23**

Receiving side apparatus     Transmitting side apparatus

P261(Seq=1)

P251(Ack=2,Win=4)

P262(Seq=2,3)

P252(Ack=4,Win=4)

P263(Seq=4,5,6,7)

P253(Ack=8,Win=4)

P254(Ack=8,Win=8)

P263(Seq=8,9,10,11)

P264(Seq=12,13,14,15)

EP 1 933 509 A1

FIG. 24

Transmitting side apparatus

Receiving side apparatus

P341(Seq=1)

P342(Seq=2,3)

P343(Seq=4,5,6,7)

P344(Seq=8,9,10,11)

P345(Seq=12,13,14,15)

P331(Ack=2,Win=4)

P332(Ack=4,Win=4)

P333(Ack=5,Win=7)

P334(Ack=6,Win=10)

FIG. 25

# FIG. 26

Receiving side apparatus      Transmitting side apparatus

P351(Ack=1,Win=8)

P361(Seq =1,2,3,4,5,6,7)
P362(Seq =8)

P352(Ack=8,Win=8)

P363(Seq =9,10,11,12,13,14,15)

P353(Ack=8,Win=8)

P364(Seq =8)

P354(Ack=16,Win=7)

P365(Seq =16,17,18,19,20,21,22)

EP 1 933 509 A1

## FIG. 27

Receiving side apparatus

Transmitting side apparatus

P371(Ack=1,Win=6)

P381(Seq =1,2,3,4,5,6)

P372(Ack=7,Win=6)

Predetermined time period H elapses

...

P373(Ack=Z,Win=8)

P382(Seq =Z,Z+1,...,Z+6,Z+7)

EP 1 933 509 A1

Application processing unit — 163

Receiving buffer — 167

Window size computing unit — 168

Duplicate ACK generating unit — 166

Packet missing detecting unit — 169

164

ACK generating unit — 165

TCP packet processing unit

TCP processing unit — 162

IP processing unit — 161

33f

FIG. 28

FIG. 29

Receiving side apparatus          Transmitting side apparatus

P391(Ack =1,Win=8)

P401(Seq=1,2,3,4,5)

P402(Seq=6)
P403(Seq=7,8)

P392(Ack=6,Win=8)

P404(Seq=6)

P353(Ack=9,Win=8)

P405(Seq=9,10,...,16)

EP 1 933 509 A1

FIG. 30

EP 1 933 509 A1

FIG. 31

EP 1 933 509 A1

# FIG. 32

Status of Window

Transmitting side apparatus

Receiving side apparatus

Application program

P11 — Num=1、Win=4

W11

| 1 | 2 | 3 | 4 | |

Seq=1、LEN=1 — P21

Seq=2、LEN=1 — P22 — P12 — Num=2、Win=3

Seq=3、LEN=1 — P23 — ✕

W12

| | 2 | 3 | 4 | |

Seq=4、LEN=1 — P24 — P13 — Num=2、Win=3 (DupAck#1)

P14 — Num=2、Win=3 (DupAck#2)

P15 — Num=2、Win=3 (DupAck#3)

W13

| | 2 | 3 | 4 | 5 |

Seq=2、LEN=1 — P25 — P16 — Num=2、Win=4 (WindowUpdate)

Seq=5、LEN=1 — P26

⟶ Data

⟶ Ack (other than DupAck)

⟶ DupAck

EP 1 933 509 A1

# FIG. 33

Seq=1、LEN=1 — P21

Num=2、Win=3 — P12
Seq=2、LEN=1 — P22

Seq=3、LEN=1 — P23

Num=2、Win=3 — P13
(DupAck#1)
Seq=4、LEN=1 — P24

Num=2、Win=3 — P14
(DupAck#2)

**Num=2、Win=3** — P15
**(DupAck#3)**
Num=2、Win=4 — P16
(WinUpdate)

Communication unit

MAC    IF    IP    TCP    API    Application

P211
P121
E100
P212
P231
P131
P241
P141
P151
P161
P213

◄— — —Data flowing over network    ◄———Data flow    ◄----- Control flow    ✕ Packet loss

EP 1 933 509 A1

## FIG. 34

```
                          ┌──────────┐
                          │  Start   │
                          └────┬─────┘
                               │
                               ▼                    S100
                        ╱─────────────╲
                       ╱   1 < =        ╲      Y      ╱─────────────╲  S102
                      ╱ Number of DupAck ╲──────────▶╱               ╲  Y
                      ╲ transmission < N ╱           ╲ Loss detected? ╱────┐
                       ╲                ╱             ╲               ╱     │
                        ╲──────────────╱               ╲────────────╱      │
                               │ N                           │ N          │
                               ◀─────────────────────────────┘           │
                               │                                          │
                               ▼        S104                              ▼        S106
              ┌───────────────────────────────┐      ┌──────────────────────────────────┐
              │ Number of DupAck duplicates = 0│      │ Number of DupAck duplicates =     │
              └───────────────┬───────────────┘      │ N-Number of DupAck transmission   │
                              │                       └─────────────────┬────────────────┘
                              ◀─────────────────────────────────────────┘
                              │
                              ▼
                        ┌──────────┐
                        │   End    │
                        └──────────┘
```

EP 1 933 509 A1

FIG. 35

EP 1 933 509 A1

FIG. 36

Application program — 1100

Packet processing unit

API unit

TCP processing unit — 1200

WinUpdate generating unit — 1260
DupAck generating unit — 1270
TCP transmitting unit — 1220
DupAck managing unit — 1230
Ack generating unit — 1280
Window controlling unit — 1250
Receiving buffer — 1240
TCP loss detecting unit — 1215
TCP receiving unit — 1210

IP processing unit — 1300
Loss notifying unit — 5000
Data loss detecting unit — E150
150
1310

IF processing unit — 1400

MAC processing unit — 1500
Packet duplicating unit — 7000
MAC transmitting unit — 1520
MAC receiving unit — 1510

P100
P200

# FIG. 37

P21

Seq=1、LEN=1

P12

Num=2、Win=3
Seq=2、LEN=1

P22

P23

Seq=3、LEN=1

P13

Num=2、Win=3
(DupAck#1)
Seq=4、LEN=1

P24

P14

Num=2、Win=3
(DupAck#2)

P15

**Num=2、Win=3
(DupAck#3)**

Num=2、Win=4
(WinUpdate)

P16

Communication unit

MAC    IF    IP    TCP    API    Application

P211
P121
P221    E150
P231
P131
P212
P241
P141
P151
P213
P161

◄ — — — Data flowing over network    ◄———— Data flow    ◄----- Control flow    ✕ Packet loss

EP 1 933 509 A1

## FIG. 38

Application program

Packet processing unit

1100

**API unit**

TCP processing unit

1200

1250 — Window controlling unit

1240 — Receiving buffer

1230 — DupAck managing unit

1260 — WinUpdate generating unit

DupAck generating unit

1215 — TCP loss detecting unit

1210 — TCP receiving unit

1270

7000 — Packet duplicating unit

Ack generating unit

TCP transmitting unit

1280

1220

1300 — **IP processing unit**

1400 — **IF processing unit**

1500 — MAC processing unit

1510 — MAC receiving unit

Loss notifying unit

5000

1520 — MAC transmitting unit

P200

E150

P100

EP 1 933 509 A1

## FIG. 39

Status of Window

Transmitting side apparatus

Receiving side apparatus

Application program

W11

| 1 | 2 | 3 | 4 | |

W12

| | 2 | 3 | 4 | |

Seq=1、LEN=1
Seq=2、LEN=1
Seq=3、LEN=1
Seq=4、LEN=1

Seq=2、LEN=1

P11
P21
P22    P12
P23
P24    P13
P14
P15
P25

Num=1、Win=3
Num=2、Win=3
×
Num=2、Win=3
(DupAck#1)
(DupAck#2)
Num=2、Win=3
(DupAck#3)

———▶ Data

— — —▶ Ack (other than DupAck)

---------▶ DupAck

EP 1 933 509 A1

FIG. 40

P21 — Seq=1、LEN=1

P11 — Num=2、Win=3

Seq=2、LEN=1

P22

P23 — Seq=3、LEN=1

P13 — Num=2、Win=3
(DupAck#1)
**(DupAck#2)**

P14
P24 — Seq=4、LEN=1

P15 — Num=2、Win=3
(DupAck#3)

Communication unit

MAC    IF    IP    TCP    API    Application

P211

P111

E100

P212

P231

P131

P241

P141

P213

◄— — — Data flowing over network    ◄——— Data flow    ◄------ Control flow    ✕ Packet loss

EP 1 933 509 A1

# FIG. 41

```
                    ┌──────────┐
                    │  Start   │
                    └────┬─────┘
                         │
                         ▼
              S200                         S202
         ╱─────────────╲      Y      ╱─────────────╲   Y
        ╱ (Win/MSS) − 2 ╲◄──────────╱ Loss detected?╲────┐
        ╲    < N        ╱           ╲               ╱     │
         ╲─────────────╱             ╲─────────────╱      │
               │ N                         │ N           │
               │◄──────────────────────────┘             │
               ▼                                          ▼
      S204                                      S206
 ┌──────────────────────────────┐   ┌──────────────────────────────┐
 │ Number of DupAck duplicates  │   │ Number of DupAck duplicates = │
 │           = 1                │   │ N−{(Win/MSS) − 2}            │
 └──────────────┬───────────────┘   └──────────────┬───────────────┘
                │◄─────────────────────────────────┘
                ▼
         ┌──────────┐
         │   End    │
         └──────────┘
```

EP 1 933 509 A1

## INTERNATIONAL SEARCH REPORT

| International application No. |
| --- |
| PCT/JP2006/319661 |

### A. CLASSIFICATION OF SUBJECT MATTER
*H04L12/56*(2006.01)i, *H04L1/16*(2006.01)i, *H04L29/08*(2006.01)i

According to International Patent Classification (IPC) or to both national classification and IPC

### B. FIELDS SEARCHED

Minimum documentation searched (classification system followed by classification symbols)
H04L12/56, H04L1/16, H04L29/08

Documentation searched other than minimum documentation to the extent that such documents are included in the fields searched
Jitsuyo Shinan Koho 1922-1996 Jitsuyo Shinan Toroku Koho 1996-2006
Kokai Jitsuyo Shinan Koho 1971-2006 Toroku Jitsuyo Shinan Koho 1994-2006

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2004-32757 A (Matsushita Electric | 1-3,14,15, |
| | Industrial Co., Ltd.), | 17,18,25-27 |
| A | 29 January, 2004 (29.01.04), | 4-13,16, |
| | Full text; all drawings | 19-24 |
| | & US 2004/0003105 A1 & EP 1376944 A1 | |
| | & CN 1469601 A & KR 4002604 A | |
| | & JP 3617649 B2 & EP 1376944 B1 | |
| | & DE 60211322 E | |
| | | |
| Y | JP 11-27308 A (Kokusai Denshin Denwa Co., | 1-3,14,15, |
| | Ltd. (KDD)), | 17,18,25-27 |
| A | 29 January, 1999 (29.01.99), | 4-13,16, |
| | Par. Nos. [0025], [0032] to [0034] | 19-24 |
| | & US 6178450 B1 & JP 3343054 B2 | |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 18 October, 2006 (18.10.06) | 24 October, 2006 (24.10.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/319661 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 9-191321 A  (NEC Corp.),<br>22 July, 1997 (22.07.97),<br>Claim 1<br>& JP 2964937 B2 | 1-27 |
| A | WO 2002/082746 A1  (TELEFONAKTIEBOLAGET LM<br>ERICSSON (Publ)),<br>17 October, 2002 (17.10.02),<br>Page 3, line 5 to page 4, line 9; page 5,<br>line 25 to page 6, line 2; page 8,<br>lines 13 to 25<br>& US 2002/0145976 A1     & EP 1251661 A1<br>& EP 1251661 A8         & JP 2004-523992 A<br>& CN 1511396 A | 1-27 |

Form PCT/ISA/210 (continuation of second sheet) (April 2005)

**EP 1 933 509 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3617649 B